# EUROPEAN PATENT APPLICATION

(11) **EP 4 588 978 A1**
(43) Date of publication of application: **23.07.2025**
(21) Application number: 23877370.9
(22) Date of filing: 13.10.2023
(51) Int. Cl.: C08L 101/02, C07C 39/15, C07C 43/205, C07C 50/08, C08K 5/04, C08L 65/00

(54) **PILLARARENE COMPLEX**

(30) Priority: 14.10.2022 JP 2022165803
(71) Applicant: DAIKIN INDUSTRIES, LTD., Osaka-shi, Osaka 530-0001 (JP); Kyoto University, Kyoto-shi, Kyoto 606-8501 (JP)
(72) Inventor: TANAKA, Yoshito, Osaka-Shi, Osaka 530-0001 (JP); YAMAGUCHI, Shuhei, Osaka-Shi, Osaka 530-0001 (JP); KOMORI, Masaji, Osaka-Shi, Osaka 530-0001 (JP); YAMAUCHI, Akiyoshi, Osaka-Shi, Osaka 530-0001 (JP); KISHIKAWA, Yosuke, Osaka-Shi, Osaka 530-0001 (JP); OGOSHI, Tomoki, Kyoto-shi, Kyoto 606-8501 (JP); KURAKAKE, Yuta, Kyoto-shi, Kyoto 606-8501 (JP); SOBUE, Tatsuki, Kyoto-shi, Kyoto 606-8501 (JP); ONISHI, Katsuto, Kyoto-shi, Kyoto 606-8501 (JP); KATO, Kenichi, Kyoto-shi, Kyoto 606-8501 (JP); OHTANI, Shunsuke, Kyoto-shi, Kyoto 606-8501 (JP)
(74) Representative: Hoffmann Eitle
(86) International application number: PCT/JP2023/037272
(87) International publication number: WO 2024/080369

(57) **Abstract**

an object of the present disclosure is to provide a composite having excellent heat resistance and/or hydrophobicity and allowing easy introduction of a functional group thereinto.

A composite comprising: a polymer; and one or more cyclic compounds that comprise the polymer, wherein
the cyclic compound comprises a compound represented by the following formula (I): 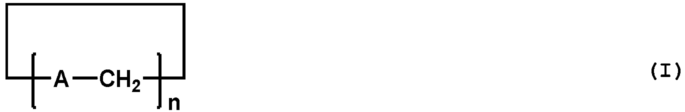 wherein
A independently represents a divalent C₄₋₅₀ organic group comprising one or more selected from -OR and -CO-,
R independently represents an organic group optionally comprising one or more fluorine atoms, or a hydrogen atom, and
n represents an integer of 4 to 20, and
one of the polymer and the cyclic compound comprises one or more selected from -CO-, a nitrogen atom, and a halogen atom, and the other has a group comprising a hydrogen atom capable of interacting with -CO-, the nitrogen atom, or the halogen atom.

## Description

### Technical Field

The present disclosure relates to a pillararene composite.

### Background Art

As composites obtained by combining a cyclic compound and a polymer, rotaxanes or pseudorotaxanes are known. A rotaxane is a structure having a cyclic compound, a polymer that penetrates through the ring of the cyclic compound, and a blocked portion disposed at an end of the polymer. A pseudorotaxane is a structure having a cyclic compound and a polymer that penetrates through the ring of the cyclic compound but having no blocked portion at a polymer end.

As such composites, Patent Literature 1 describes a clathrate compound including a fluoropolyether molecule as a guest compound in cyclodextrin.

Patent Literature 2 describes a polyrotaxane including polyethylene glycol, a pillararene that includes the polyethylene glycol in a skewered shape, and adamantane groups disposed at both ends of the polyethylene glycol.

Non Patent Literature 1 describes a rotaxane including a pillararene and a polyethylene or polypropylene included in the pillararene.

### Citation List

### Patent Literature

Patent Literature 1: International Publication No. WO 2007/058247
Patent Literature 2: JP 2021-138635 A

### Non Patent Literature

Non Patent Literature 1 Tomoki Ogoshi et al., "Extension of polyethylene chains by formation of polypseudorotaxane structures with perpentylated piller[5]arenes", Polymer Journal (2014) 46, 77 to 81

### Summary of Invention

### Technical Problem

Conventionally known composites are not capable of sufficiently satisfying heat resistance or hydrophobicity, and functional groups that can be introduced into cyclic compounds are limited.

The present disclosure has been made in consideration of such a circumstance, and an object of the present disclosure is to provide a composite having excellent heat resistance and/or hydrophobicity and allowing easy introduction of a functional group thereinto.

### Solution to Problem

The present disclosure comprises the following aspects.
[1] A composite comprising: a polymer; and one or more cyclic compounds that comprise the polymer, wherein
   the cyclic compound comprises a compound represented by the following formula (I): 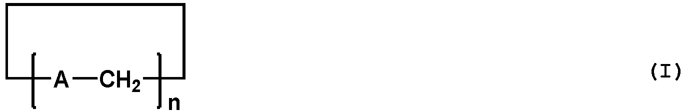 wherein
   A independently represents a divalent C₄₋₅₀ organic group comprising one or more selected from -OR and -CO-,
   R independently represents an organic group optionally comprising one or more fluorine atoms, or a hydrogen atom, and
   n represents an integer of 4 to 20, and
   one of the polymer and the cyclic compound comprises one or more selected from -CO-, a nitrogen atom, and a halogen atom, and the other has a group comprising a hydrogen atom capable of interacting with -CO-, the nitrogen atom, or the halogen atom.
[2] The composite according to [1], wherein the group comprising a hydrogen atom capable of interacting with -CO-, the nitrogen atom, or the halogen atom comprises one or more selected from a proton-donating group, an unsaturated group, and a group comprising a hydrogen atom having a charge density of 0.25 or higher.
[3] The composite according to [1] or [2], wherein the cyclic compound comprises a compound represented by any of the following formulae (1) to (3): 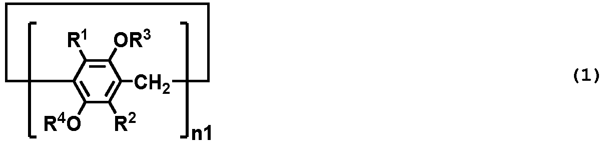 wherein
   R¹ independently represents a hydrogen atom or an organic group,
   R² independently represents a hydrogen atom or an organic group,
   R³ independently represents a hydrogen atom or an organic group,
   R⁴ independently represents a hydrogen atom or an organic group,
   provided that at least one of R³ and R⁴ is a hydrogen atom, and
   n1 is an integer of 4 to 20, 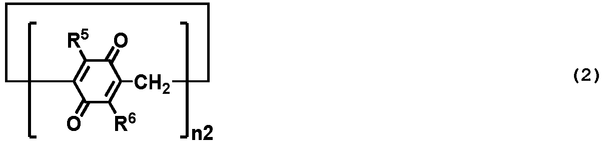 wherein
      R⁵ independently represents a hydrogen atom or an organic group,
      R⁶ independently represents a hydrogen atom or an organic group, and
      n2 is an integer of 4 to 20, 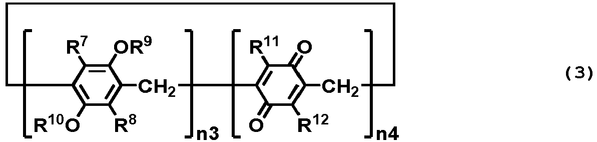 wherein
         R⁷ independently represents a hydrogen atom or an organic group,
         R⁸ independently represents a hydrogen atom or an organic group,
         R⁹ independently represents a hydrogen atom or an organic group,
         R¹⁰ independently represents a hydrogen atom or an organic group,
         R¹¹ independently represents a hydrogen atom or an organic group,
         R¹² independently represents a hydrogen atom or an organic group,
         n3 is an integer of 1 to 19,
         n4 is an integer of 1 to 19,
         a sum of n3 and n4 is 4 to 20, and
         an occurrence order of a unit enclosed in parentheses with n3 or n4 is arbitrary in the formula (3).
[4] The composite according to [3], wherein one or more selected from R¹ to R⁴ in the formula (1) is a fluorine-containing organic group.
[5] The composite according to [3], wherein one or more selected from R³ and R⁴ in the formula (1) is a hydrogen atom.
[6] The composite according to any one of [1] to [5], wherein the cyclic compound is a compound represented by any of the following formulae (1-A), (2-A), and (3-A): 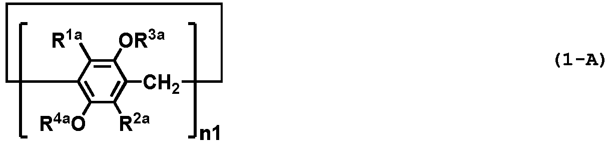 wherein
   R^{1a} independently represents a C₁₋₃₀ alkyl group optionally having one or more substituents or a hydrogen atom,
   R^{2a} independently represents a C₁₋₃₀ alkyl group optionally having one or more substituents or a hydrogen atom,
   R^{3a} independently represents a C₁₋₃₀ alkyl group optionally having one or more substituents or a hydrogen atom,
   R^{4a} independently represents a C₁₋₃₀ alkyl group optionally having one or more substituents or a hydrogen atom,
   provided that at least one of R^{3a} and R^{4a} represents a hydrogen atom, and
   n1 is an integer of 4 to 20, 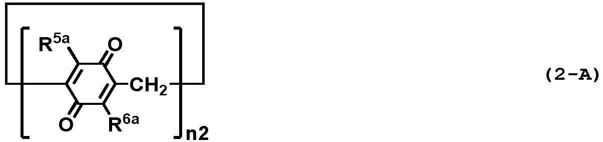 wherein
      R^{5a} independently represents a C₁₋₃₀ alkyl group optionally having one or more substituents or a hydrogen atom,
      R^{6a} independently represents a C₁₋₃₀ alkyl group optionally having one or more substituents or a hydrogen atom, and
      n2 is an integer of 4 to 20, 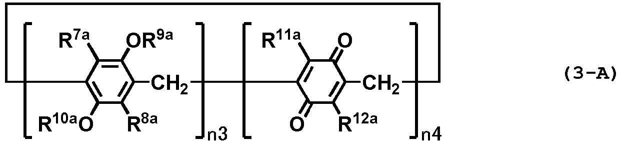 wherein
         R^{7a} independently represents a C₁₋₃₀ alkyl group optionally having one or more substituents or a hydrogen atom,
         R^{8a} independently represents a C₁₋₃₀ alkyl group optionally having one or more substituents or a hydrogen atom,
         R^{9a} independently represents a C₁₋₃₀ alkyl group optionally having one or more substituents or a hydrogen atom,
         R^{10a} independently represents a C₁₋₃₀ alkyl group optionally having one or more substituents or a hydrogen atom,
         R^{11a} independently represents a C₁₋₃₀ alkyl group optionally having one or more substituents or a hydrogen atom,
         R^{12a} independently represents a C₁₋₃₀ alkyl group optionally having one or more substituents or a hydrogen atom,
         n3 is an integer of 1 to 19,
         n4 is an integer of 1 to 19,
         a sum of n3 and n4 is 4 to 20, and
         an occurrence order of a unit enclosed in parentheses with n3 or n4 is arbitrary in the formula (3-A).
[7] The composite according to any one of [2] to [6], wherein the proton-donating group comprises a hydrogen atom having a charge density of 0.22 or higher.
[8] The composite according to any one of [2] to [7], wherein a charge density of a hydrogen atom bound to a carbon atom constituting the unsaturated group is 0.22 or higher.
[9] The composite according to any one of [2] to [8], wherein the proton-donating group is a group comprising a hydrogen atom bound to one atom selected from an oxygen atom, a nitrogen atom, and a sulfur atom.
[10] The composite according to any one of [1] to [9], wherein the polymer is a linear polymer optionally having a substituent.
[11] The composite according to any one of [1] to [10], wherein the polymer is a polymer comprising one or more selected from -CO-, a nitrogen atom, and a halogen atom, and the cyclic compound comprises a proton-donating group.
[12] The composite according to any one of [1] to [11], wherein the polymer is a polymer comprising one or more selected from -CO-, a nitrogen atom, and a halogen atom, and the cyclic compound is a compound represented by any of the following formula (1-B) and the following formula (3-B): 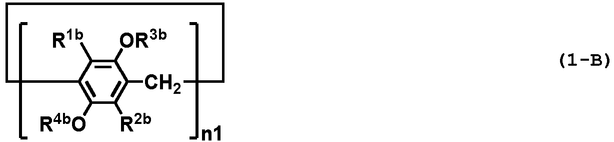 wherein
   R^{1b} independently represents a C₁₋₃₀ alkyl group optionally having one or more substituents or a hydrogen atom,
   R^{2b} independently represents a C₁₋₃₀ alkyl group optionally having one or more substituents or a hydrogen atom,
   R^{3b} independently represents a C₁₋₃₀ alkyl group optionally having one or more substituents or a hydrogen atom,
   R^{4b} independently represents a C₁₋₃₀ alkyl group optionally having one or more substituents or a hydrogen atom,
   provided that at least one of R^{3b} and R^{4b} is a hydrogen atom, and
   n1 is an integer of 4 to 20, 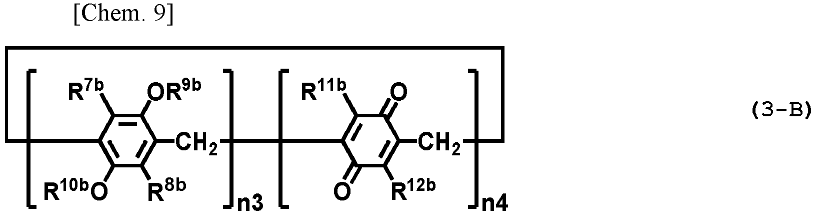 wherein
      R^{7b} independently represents a hydrogen atom or an organic group,
      R^{8b} independently represents a hydrogen atom or an organic group,
      R^{9b} independently represents a hydrogen atom or an organic group,
      R^{10b} independently represents a hydrogen atom or an organic group,
      R^{11b} independently represents a hydrogen atom or an organic group,
      R^{12b} independently represents a hydrogen atom or an organic group,
      provided that at least one of R^{9b} and R^{10b} is a hydrogen atom,
      n3 is an integer of 1 to 19,
      n4 is an integer of 1 to 19,
      a sum of n3 and n4 is 4 to 20, and
      an occurrence order of a unit enclosed in parentheses with n3 or n4 is arbitrary in the formula (3-B).
[13] The composite according to any one of [1] to [12], wherein the polymer comprises an ester group in a main chain backbone.
[14] The composite according to any one of [3] to [13], wherein the polymer comprises a proton-donating group, and the cyclic compound comprises the compound represented by any of the formula (2) or (3).
[15] The composite according to any one of [1] to [14], wherein the polymer comprises a polymer having an unsaturated bond.
[16] The composite according to any one of [1] to [15], wherein the polymer comprises a diene-based polymer.
[17] The composite according to any one of [1] to [16], wherein a proportion of the cyclic compound is 0.01 mass% or more and 99 mass% or less in a total of 100 parts by mass of the polymer and the cyclic compound.
[18] The composite according to any one of [1] to [17], wherein when the composite is mixed with a good solvent of the polymer, w₁/w₀ is 4 mass% or more, where w₀ indicates a mass of the composite before mixing, and w₁ indicates a mass of the composite after mixing.
[19] The composite according to any one of [1] to [18], wherein a pyrolysis temperature is 170°C or higher.
[20] The composite according to any one of [1] to [19], wherein tₓ - t_{y} is 50°C or more, where tₓ indicates a pyrolysis temperature of the composite, and t_{y} indicates a lower one of a pyrolysis temperature of the polymer and a pyrolysis temperature of the cyclic compound.
[21] A method for producing the composite according to any one of [1] to [20], the method comprising:
   contacting the polymer and the cyclic compound represented by the formula (I) with each other in an absence of a solvent to obtain the composite, wherein
   one of the polymer and the cyclic compound comprises one or more selected from -CO-, a nitrogen atom, and a halogen atom, and the other has a group comprising a hydrogen atom capable of interacting with -CO-, the nitrogen atom, or the halogen atom.
[22] The production method according to [21], wherein the contacting is performed at a temperature higher than at least one of a glass transition temperature and a melting point of the polymer.
[23] A composition comprising the composite according to any one of [1] to [20].
[24] The composition according to [23], which is in a powder form.
[25] The composition according to [23], which is in a liquid form.

### Advantageous Effects of Invention

The composite of the present disclosure has excellent heat resistance and/or hydrophobicity and allows easy introduction of a functional group thereinto.

### Brief Description of Drawings

[FIG. 1] FIG. 1 is an NMR chart of the composite obtained in Example 1.
[FIG. 2] FIG. 2 is an IR chart of the composite obtained in Example 1.
[FIG. 3] FIG. 3 is an NMR chart of the composite obtained in Example 4.
[FIG. 4] FIG. 4 is a TGA curve of the composite obtained in Example 5.
[FIG. 5] FIG. 5 is an NMR chart of the composite obtained in Example 8.
[FIG. 6] FIG. 6 is an IR chart of the composite obtained in Example 8.
[FIG. 7] FIG. 7 is an NMR chart of the purified product obtained in Comparative Example 1.
[FIG. 8] FIG. 8 is an NMR chart of the purified product obtained in Comparative Example 2.
[FIG. 9] FIG. 9 is an NMR chart of the composite obtained in Example 10.
[FIG. 10] FIG. 10 is a FT-IR chart of the composite and the purified product obtained in Example 28.

### Description of Embodiments

### <Composite>

A composite of the present disclosure comprises a polymer and one or more cyclic compounds that comprise the polymer, and the cyclic compound comprises a compound represented by the following formula (I): 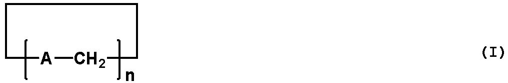 wherein
A independently represents a divalent C₄₋₅₀ organic group comprising one or more selected from -OR and -CO-,
R independently represents an organic group that may comprise one or more fluorine atoms or a hydrogen atom, and
n represents an integer of 4 to 20.

One of the polymer and the cyclic compound comprises one or more selected from -CO-, a nitrogen atom, and a halogen atom, and the other has a group comprising a hydrogen atom capable of interacting with -CO-, a nitrogen atom, or a halogen atom.

In the group comprising a hydrogen atom capable of interacting with -CO-, a nitrogen atom, or a halogen atom, the interaction between -CO-, the nitrogen atom, or the halogen atom and the hydrogen atom can be a hydrogen bond interaction.

Examples of the halogen atom include a fluorine atom, a chlorine atom, a bromine atom, and an iodine atom, and one or more selected from a fluorine atom and a chlorine atom are preferable.

The composite of the present disclosure comprises a polymer and the cyclic compound and thus has favorable heat resistance and/or hydrophobicity and allows easy introduction of a functional group thereinto. Therefore, the composite of the present disclosure can be easily mixed with a variety of resins or the like. Furthermore, in the composite of the present disclosure, since one of the polymer and the cyclic compound comprises one or more selected from -CO-, a nitrogen atom, or a halogen atom that is capable of acting as a proton receptor, and the other has a group comprising a hydrogen atom capable of interacting with -CO-, the nitrogen atom, or the halogen atom, a hydrogen bond interaction may occur between the proton receptor and the group comprising a hydrogen atom capable of interacting with -CO-, the nitrogen atom, or the halogen atom, and the cyclic compound and the polymer in the composite can be in a state of being appropriately fixed while being movable. Therefore, the composite of the present disclosure is expected to be capable of exhibiting characteristics, such as a shock-absorbing property while also maintaining mechanical strength in the case of, for example, having been mixed with a resin.

In the present disclosure, one of the one or more selected from -CO-, a nitrogen atom, and a halogen atom and the group comprising a hydrogen atom capable of interacting with -CO-, the nitrogen atom, or the halogen atom is contained in the cyclic compound, and the other is contained in the polymer, and the polymer is included in the cyclic compound. Therefore, it is considered that -CO-, the nitrogen atom, and the halogen atom and the group comprising a hydrogen atom capable of interacting with - CO-, the nitrogen atom, or the halogen atom are present in close proximity to each other and an interaction occurs in a limited space in the ring. Therefore, it is considered that in the present disclosure, not only groups that are ordinarily known as proton-donating groups but also groups having a weaker proton-donating property are capable of exhibiting a hydrogen bond interaction. In addition, the group comprising a hydrogen atom capable of interacting with -CO-, the nitrogen atom, or the halogen atom and the proton receptor may not form a hydrogen bond at all times.

In the present disclosure, inclusion means that at least a part of the polymer is present in the ring of the cyclic compound. In one aspect, the polymer may penetrate through the ring of the cyclic compound. In addition, the number of the cyclic compounds that comprise one polymer can be 1 or more, and the number is preferably 1 in one aspect and preferably 2 or more in another aspect. The upper limit thereof is 5 or less or 3 or less on average and preferably 1 or less per repeating unit of the polymer. For example, in a case where the number of the repeating units of the polymer is indicated by j, the number of the cyclic compounds in one composite is preferably 5 × j or less, more preferably 3 × j or less, and still more preferably j or less.

The form of the nitrogen atom that can be contained in one of the polymer and the cyclic compound is not limited as long as the nitrogen atom is capable of acting as a proton receptor and can be, for example, >N- (that is, a nitrogen bond having three single bonds); -N= (that is, a nitrogen atom having one single bond and one double bond); or N≡ (that is, a nitrogen atom having one triple bond). The nitrogen atom to which a hydrogen atom bonds is capable of acting as a proton donor and is thus not included in the nitrogen atom capable of acting as the proton receptor.

One or more selected from -CO-, a nitrogen atom, and a halogen atom that can be contained in one of the polymer and the cyclic compound can be one or more selected from -CO- and a hydrogen atom in one preferable aspect and can be a nitrogen atom in another preferable aspect.

The group comprising a hydrogen atom capable of interacting with -CO-, the nitrogen atom, or the halogen atom can be one or more selected from a proton-donating group, an unsaturated group, and a group comprising a hydrogen atom having a charge density of 0.25 or higher.

In the present disclosure, the proton-donating group needs to be a group capable of becoming a proton donor in a hydrogen bond (hydrogen donor) and typically comprises a hydrogen atom. The proton-donating group preferably comprises a hydrogen atom having a charge density of 0.22 or higher from the viewpoint of being capable of acting as a proton donor. The charge density of the hydrogen atom can be more preferably 0.25 or higher and still more preferably 0.40 or higher and may be, for example, 1 or lower. In the present disclosure, the charge density can be understood as a value that indicates the intensity of a bond that is formed with a charge of a certain atom or a different atom. The charge density of the hydrogen atom in the proton-donating group can be understood as the charge density of a hydrogen atom capable of contributing to a hydrogen bond in the proton-donating group. It is considered that as the charge density of the hydrogen atom in the proton-donating group becomes higher, the proton-donating property becomes stronger (formation of a hydrogen bond is easier), and as the charge density becomes lower, the proton-donating property becomes weaker (formation of a hydrogen bond is more difficult).

In such an aspect, in the cyclic compound, the hydrogen atom having a charge density of 0.22 or higher in the proton-donating group is preferably contained in a substituent (a head end of the ring of the cyclic compound) of A in the formula (I). In addition, in the polymer, the hydrogen atom having a charge density of 0.22 or higher in the proton-donating group is preferably contained in a main chain or substituent (an atom around the main chain of the polymer) of the polymer.

In a preferable aspect, in the composite of the present disclosure, it is preferable that one selected from the polymer and the cyclic compound comprises a proton-donating group and the other comprises an atom having a charge density of lower than 0. In such a case, it is considered that the proton-donating group that is contained in one of the polymer and the cyclic compound is likely to make a hydrogen bond interaction with the atom having a charge density of lower than 0 that is contained in the other and the composite is likely to be more stably formed. The proton-donating group preferably comprises a hydrogen atom having a charge density of 0.22 or higher, and the charge density of the hydron atom can be preferably 0.25 or higher and more preferably 0.40 or higher and may be, for example, 1 or lower.

In such an aspect, the charge density of the atom having a charge density of lower than 0 can be preferably -0.1 or lower and more preferably -0.20 or lower and may be, for example, - 1 or lower.

In addition, in such an aspect, the difference between the maximum value of the charge densities of the hydrogen atoms that are contained in one of the polymer and the cyclic compound that comprise the proton-donating group and the minimum value of the charge densities in the other one may be preferably 0.25 or more and more preferably 0.30 or more and can be, for example, 1 or less.

In such an aspect, in the cyclic compound, the atom having a charge density of lower than 0 or the proton-donating group is preferably contained in the substituent (the head end of the ring of the cyclic compound) of A in the formula (I). In the polymer, the atom having a charge density of lower than 0 or the proton-donating group is preferably contained in the main chain or substituent (an atom around the main chain of the polymer) of the polymer.

In the present disclosure, the charge density can be calculated by electron density analysis (Gaussian) by a natural bond orbital (NBO) method. For example, first, an optimized structure may be specified by assuming the structural formula of a molecule that is a calculation target using Gaussian 16 Rev. A.03 (Gaussian), B3LYP as a functional, and 6-31G(d) as a basis set and performing structural optimization calculation. Next, electron density analysis is performed by the natural bond orbital (NBO) method using the optimized structure, whereby the charge density can be calculated.

Regarding the polymer, structures of three continuous repeating structural units are assumed, and the result of the central unit may be adopted. In addition, upon calculation of the atomic densities of atoms that are contained in the polymer and the cyclic compound, in a case where there are two or more geometrically equivalent atoms of the same kind, the charge density of an atom having the maximum absolute value of the charge density among the two or more atoms of the same kind may be adopted.

The proton-donating group can be typically a group comprising a hydrogen atom bound to a highly electron-absorbing atom. Examples of such a highly electron-absorbing atom include an oxygen atom; a nitrogen atom; a sulfur atom: and a carbon atom bound to -CO-. In one aspect, the proton-donating group is preferably a group comprising a hydrogen atom bound to one atom selected from an oxygen atom, a nitrogen atom, and a sulfur atom and can be more preferably one or more selected from -OH, -NH-, and -SH.

In the present disclosure, examples of the unsaturated group include groups having a carbon-carbon double bond (-CR=Cr-, -CR=CR₂, R represents a hydrogen atom or a C₁₋₄ alkyl group.) and groups having a carbon-carbon triple bond (-C≡Cr, R represents a hydrogen atom or a C₁₋₄ alkyl group.) and preferably include the groups having a carbon-carbon double bond and the like. Examples of the polymer having such an unsaturated group include polymers having an unsaturated group in the polymer backbone, and particularly include diene-based polymers, such as polybutadiene polymer.

The charge density of the hydrogen atom bound to the carbon atom constituting the unsaturated group can be preferably 0.22 or higher, more preferably 0.25 or higher, and still more preferably 0.40 or higher and may be, for example, 1 or lower.

A group comprising a hydrogen atom having a charge density of 0.25 or higher in the present disclosure is considered to be capable of making a hydrogen bond interaction with the one or more selected from -CO-, a nitrogen atom, and a halogen atom that are capable of acting as a proton receptor though not as much as a proton-donating group. Therefore, the charge density of the hydrogen atom having a charge density of 0.25 or higher is more preferably 0.27 or higher and still more preferably 0.30 or higher and may be, for example, 1 or lower.

In the formula (I), A independently represents a divalent C₄₋₅₀ organic group and comprise one or more selected from -OR and -CO-.

The C₄₋₅₀ organic group can be preferably a C₄₋₂₀ organic group and more preferably a C₄₋₁₀ organic group.

In the present disclosure, a monovalent or divalent "organic group" means a monovalent or divalent group comprising carbon. The monovalent or divalent organic group is not limited and can be a hydrocarbon group or a derivative thereof. The derivative of a hydrocarbon group means a group having one or more of N, O, S, Si, an amide, sulfonyl, a siloxane, carbonyl, carbonyloxy, and the like in an end or molecular chain of the hydrocarbon group. In the case of being simply mentioned, "organic group" means a monovalent organic group.

In addition, in the present disclosure, "hydrocarbon group" means a group comprising carbon and hydrogen that is obtained by eliminating one hydrogen atom from a hydrocarbon. Such a hydrocarbon group is not limited, and examples thereof include C₁₋₂₀ hydrocarbon groups, for example, C₁₋₂₀ aliphatic hydrocarbon groups, C₆₋₂₀ aromatic hydrocarbon groups, and the like. The "aliphatic hydrocarbon group" may be any of a linear, branched, or cyclic group and may be any of a saturated or unsaturated group. In addition, the hydrocarbon group may include one or more ring structures. In addition, the hydrocarbon group may have one or more substituents.

In the present disclosure, the substituent in the "hydrocarbon group" is not limited, and examples thereof include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, C₆₋₁₀ aryl groups, and 5 to 10-membered heteroaryl groups that may be replaced with one or more halogen atoms.

"Divalent C₄₋₅₀ organic group" in the divalent organic group comprising one or more selected from -OR and -CO- that is represented by A can be preferably a divalent C₆₋₂₀ aromatic hydrocarbon group or a divalent C₃₋₂₀ alicyclic hydrocarbon group.

The divalent C₆₋₂₀ aromatic hydrocarbon group can be preferably a divalent C₆₋₁₀ aromatic hydrocarbon group, more preferably a divalent C₆₋₈ aromatic hydrocarbon group, and particularly preferably a phenylene group.

The divalent C₃₋₂₀ alicyclic hydrocarbon group may be any of a saturated alicyclic hydrocarbon group and an unsaturated alicyclic hydrocarbon group. The divalent C₃₋₂₀ alicyclic hydrocarbon group can be preferably a divalent C₆₋₁₀ unsaturated alicyclic hydrocarbon group, more preferably a divalent C₆₋₈ unsaturated alicyclic hydrocarbon group, and particularly preferably a cyclohexadienyl group.

The divalent C₄₋₅₀ organic groups comprising one or more selected from -OR and -CO- that is represented by A each independently can be preferably one selected from a divalent C₆₋₂₀ aromatic hydrocarbon group having -OR as a substituent, a C₃₋₂₀ alicyclic hydrocarbon group in which a hydrogen atom bound to the carbon atom constituting the ring is replaced with -OR, and a C₃₋₂₀ alicyclic hydrocarbon group in which -CH₂-constituting the ring is replaced with -CO- and can be more preferably one selected from a divalent C₆₋₁₀ aromatic hydrocarbon group having -OR as a substituent and a C₆₋₁₀ alicyclic hydrocarbon group in which -CH₂- constituting the ring is replaced with - CO-.

The total number of -OR and -CO- that are contained in A is one or more and four or less and preferably two.

R independently represents an organic group that may comprise one or more fluorine atoms or a hydrogen atom.

Examples of the organic group represented by R include an alkyl group, an alkyloxy group, an alkyl ether group, a tosyl group, a triflate group, a phenyl group, and the like, and these groups may have one or more substituents.

The organic group represented by R may comprise a fluorine atom, and the fluorine atom may be contained as a substituent of the organic group. The substituent that the organic group represented by R may have is not limited, and examples thereof include reactive functional groups such as a hydroxyl group, an amino group, a carboxy group, a thiol group, an isocyanate group, a nitrile group, an epoxy group, and an acetyl group; aliphatic hydrocarbon groups such as an alkyl group, a vinyl group, and an ethynyl group; halogen atoms. Examples of such halogen atoms include a fluorine atom, a chlorine atom, a bromine atom, and an iodine atom, and the halogen atom can be preferably a fluorine atom or a chlorine atom.

The alkyl group in R is preferably a C₁₋₃₀ alkyl group. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃₀ alkyl group. In another aspect, the C₁₋₃₀ alkyl group can be a C₁₇₋₃₀ alkyl group, preferably a C₁₈₋₃₀ alkyl group, and more preferably a C₂₆₋₃₀ alkyl group.

Examples of the substituent in the alkyl group in R include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, C₆₋₁₀ aryl groups, and 5 to 10-membered heteroaryl groups that may be replaced with one or more halogen atoms. Examples of the halogen atoms include a fluorine atom, a chlorine atom, a bromine atom, and an iodine atom, and the halogen atom is preferably a fluorine atom or a chlorine atom.

The alkyloxy group in R is typically a group represented by -O-R²¹ (in the formula, R²¹ is an alkyl group that may have one or more substituents).

The alkyl group in R²¹ may be replaced with the above-described substituent and may be preferably replaced with a fluorine atom. The alkyl group is preferably a C₁₋₃₀ alkyl group that may be replaced with a fluorine atom. The alkyl group may be linear or branched. In one aspect, the C₁₋₃₀ alkyl group can be a C₁₋₂₀ alkyl group, preferably a C₁₋₁₀ alkyl group, and more preferably a C₁₋₃ alkyl group.

R²¹ is preferably a group represented by -R²²-R²³ (in the formula, R²² is an unsubstituted C₁₋₃₀ alkylene group, preferably a C₁₋₂₀ alkylene group, and more preferably a C₁₋₁₀ alkylene group, and R²³ is a C₁₋₁₀ perfluoroalkyl group and preferably a C₁₋₆ perfluoroalkyl group).

The alkyl ether group in R is a compound having one or more ethereal oxygen atoms in a molecular chain of the alkyl group. Such an alkyl ether group is typically a group represented by -R²⁶-R²⁷-(O-R²⁸)ₘ-R²⁹. In the formula, R²⁶ is a single bond or an oxygen atom. R²⁷ is a single bond or a C₁₋₁₀ alkylene group. R²⁸ is a C₁₋₁₀ alkylene group. R²⁹ is a hydrogen atom or a C₁₋₁₀ alkyl group. m represents an integer of 1 to 20 and can be preferably 1 to 10, more preferably 1 to 5, and still more preferably 1 to 3.

In one aspect, the organic group can be an alkyl group, alkyloxy group, or alkyl ether group having an end replaced with a reactive functional group. Such a group may be replaced with another substituent.

The reactive functional group is not limited, and examples thereof include a hydroxyl group, an amino group, a carboxyl group, a thiol group, an isocyanate group, a vinyl group, an acetylene group, a nitrile group, an epoxy group, and the like.

In one aspect, R preferably represents a C₁₋₃₀ alkyl group that may have one or more substituents or a hydrogen atom.

n is 4 to 20, preferably 4 to 10, more preferably 4 to 7, and still more preferably 5 or 6. In one aspect, n is 5. In addition, in another aspect, n is 6.

In one aspect, the cyclic compound preferably comprises one or more selected from -CO-, a nitrogen atom, and a halogen atom; more preferably comprises one or more selected from -CO- and a halogen atom.

Examples of the cyclic compound comprising one or more selected from -CO-, a nitrogen atom, and a halogen atom include cyclic compounds for which A in the formula (I) is a divalent C₄₋₅₀ organic group comprising -CO-; cyclic compounds for which A in the formula (I) is a divalent C₄₋₅₀ organic group comprising -OR- and R comprises an isocyanate group, a nitrile group, and a fluorine atom as a substituent; and the like.

In another aspect, the cyclic compound preferably comprises a proton-donating group.

Examples of the cyclic compound comprising a proton-donating group include compounds for which A in the formula (I) is a divalent C₄₋₅₀ organic group comprising - OR- and the R is a hydrogen atom.

The cyclic compound preferably comprises a compound represented by any of the following formulae (1) to (3): 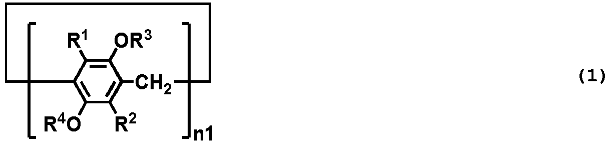 wherein
R¹ independently represents a hydrogen atom or an organic group,
R² independently represents a hydrogen atom or an organic group,
R³ independently represents a hydrogen atom or an organic group,
R⁴ independently represents a hydrogen atom or an organic group,
provided that at least one of R³ and R⁴ is a hydrogen atom,
n1 is an integer of 4 to 20,
in a preferable aspect, one or more selected from R¹ to R⁴ is preferably a fluorine-containing organic group and more preferably an organic group comprising a C₂₋₆ fluoroalkyl group, and
in another preferable aspect, one or more selected from R³ and R⁴ is a hydrogen atom, and R³ and R⁴ can be more preferably hydrogen atoms, 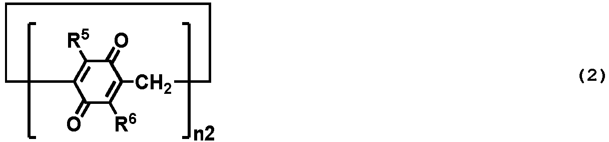 wherein
   R⁵ independently represents a hydrogen atom or an organic group,
   R⁶ independently represents a hydrogen atom or an organic group, and
   n2 is an integer of 4 to 20, and 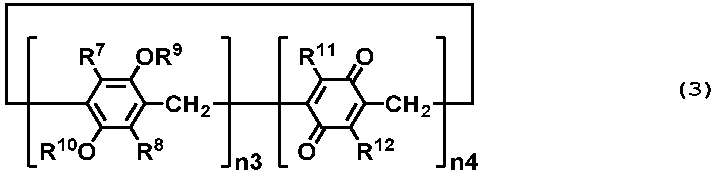 wherein
      R⁷ independently represents a hydrogen atom or an organic group,
      R⁸ independently represents a hydrogen atom or an organic group,
      R⁹ independently represents a hydrogen atom or an organic group,
      R¹⁰ independently represents a hydrogen atom or an organic group,
      R¹¹ independently represents a hydrogen atom or an organic group,
      R¹² independently represents a hydrogen atom or an organic group,
         n3 is an integer of 1 to 19,
      n4 is an integer of 1 to 19,
      the sum of n3 and n4 is 4 to 20, and
      the occurrence order of a unit in parentheses with n3 or n4 is arbitrary in the formula (3).

When the cyclic compound is a compound represented by any of the formulae (1) to (3), heat resistance and/or hydrophobicity are more favorable, introduction of a functional group is easier, and the composite can be more efficiently produced.

In one aspect, the cyclic compound preferably comprises a compound represented by the following formula (1): 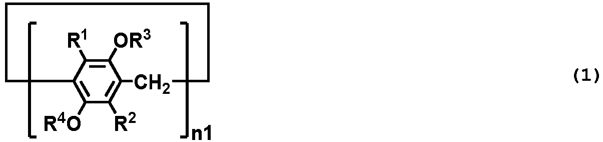 wherein
R¹ independently represents a hydrogen atom or an organic group,
R² independently represents a hydrogen atom or an organic group,
R³ independently represents a hydrogen atom or an organic group,
R⁴ independently represents a hydrogen atom or an organic group,
provided that at least one of R³ and R⁴ is a hydrogen atom, and
n1 is an integer of 4 to 20.

In the formula (1), R¹ independently represents a hydrogen atom or an organic group, R² independently represents a hydrogen atom or an organic group, R³ independently represents a hydrogen atom or an organic group, and R⁴ independently represents a hydrogen atom or an organic group.

Examples of the organic group represented by R¹, R², R³, or R⁴ include an alkyl group, an alkyloxy group, an alkyl ether group, a tosyl group, a triflate group, a phenyl group, a fluorine-containing organic group, and the like, and these groups may have one or more substituents.

The substituent that the organic group represented by R¹, R², R³, or R⁴ may have is not limited, and examples thereof include reactive functional groups such as a hydroxyl group, an amino group, a carboxy group, a thiol group, an isocyanate group, a nitrile group, an epoxy group, and an acetyl group; aliphatic hydrocarbon groups such as an alkyl group, a vinyl group, and an ethynyl group.

The alkyl group in R¹, R², R³, or R⁴ is preferably a C₁₋₃₀ alkyl group. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃₀ alkyl group. In another aspect, the C₁₋₃₀ alkyl group can be a C₁₇₋₃₀ alkyl group, preferably a C₁₈₋₃₀ alkyl group, and more preferably a C₂₆₋₃₀ alkyl group.

Examples of the substituent in the alkyl group in R¹, R², R³, or R⁴ include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, C₆₋₁₀ aryl groups, and 5 to 10-membered heteroaryl groups that may be replaced with one or more halogen atoms.

The alkyloxy group in R¹, R², R³, or R⁴ is typically a group represented by -OR²¹ (in the formula, R²¹ is an alkyl group that may have one or more substituents).

The alkyl group in R²¹ may be replaced with the above-described substituent and may be preferably replaced with a fluorine atom. Such an alkyl group is preferably a C₁₋₃₀ alkyl group that may be replaced with a fluorine atom. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃ alkyl group.

The alkyl ether group in R¹, R², R³, or R⁴ is a compound having one or more ethereal oxygen atoms in a molecular chain of the alkyl group. Such an alkyl ether group is typically a group represented by -R²⁶-R²⁷-(O-R²⁸)ₘ-R²⁹. In the formula, R²⁶ is a single bond or an oxygen atom. R²⁷ is a single bond or a C₁₋₁₀ alkylene group. R²⁸ is a C₁₋₁₀ alkylene group. R²⁹ is a hydrogen atom or a C₁₋₁₀ alkyl group. m represents an integer of 1 to 20 and can be preferably 1 to 10, more preferably 1 to 5, and still more preferably 1 to 3.

The fluorine-containing organic group in R¹, R², R³, or R⁴ can be preferably an organic group having 2 or more carbon atoms and having a fluoroalkyl group and more preferably a fluoroalkyl group or a fluoro(poly)ether group. The fluoroalkyl group is preferably a C₁₋₁₀ fluoroalkyl group and more preferably a C₂₋₆ fluoroalkyl group. Such a fluoroalkyl group may be linear or branched but is preferably linear. Such a fluoroalkyl group is preferably a perfluoroalkyl group. The fluoro(poly)ether group represents a fluoroether group and/or a fluoropolyether group.

In one aspect, the fluorine-containing organic group is a group represented by the following formula:

-(Oₚ₁-R²⁰_{q1})-Rf^{a}

wherein
R²⁰ independently represents a C₁₋₁₀ alkylene group.
Rf^{a} represents a C₁₋₁₀ fluoroalkyl group.
p1 is an integer of 0 to 2.
q1 is an integer of 0 to 3.
In (Oₚ₁-R²⁰_{q1}), the occurrence order of O and R^{11a} is not limited.

The C₁₋₁₀ alkylene group in R²⁰ is preferably a C₁₋₆ alkylene group and more preferably a C₂₋₆ alkylene group. Such an alkylene group may be linear or branched but is preferably linear.

The C₁₋₁₀ fluoroalkyl group in Rf^{a} is preferably a C₁₋₆ fluoroalkyl group. Such a fluoroalkyl group may be linear or branched but is preferably linear. Such a fluoroalkyl group is preferably a perfluoroalkyl group.

p1 is an integer of 0 to 2 and preferably 1 or 2. In one aspect, p1 is 1. In another aspect, p1 is 2.

q1 is an integer of 0 to 3, preferably an integer of 1 to 3, and more preferably 1 or 2. In one aspect, q1 is 1. In another aspect, q1 is 2.

In a preferable aspect, the fluoro(poly)ether group is a group represented by

-O-R²⁰-(O-R²⁰)ᵣ₁-Rf^{a}

wherein
R²⁰ independently represents a C₁₋₁₀ alkylene group.
Rf^{a} represents a C₁₋₁₀ fluoroalkyl group.
r1 is 0 or 1.

In a more preferable aspect, the fluoro(poly)ether group is a group represented by

-O-R²⁰-(O-R²⁰)ᵣ₁-Rf^{a}

wherein
R²⁰ independently represents a C₁₋₁₀ alkylene group.
Rf^{a} represents a C₁₋₁₀ perfluoroalkyl group.
r1 is 0 or 1.

n1 is an integer of 4 to 20, preferably an integer of 4 to 6, and more preferably 5 or 6.

In a particularly preferable aspect,
R¹³ and R¹⁶ are -O-R²⁰-(O-R²⁰)ᵣ₁-Rf^{a}, and R¹⁴ and R¹⁵ are hydrogen atoms, or
R¹⁴ and R¹⁵ are -O-R²⁰-(O-R²⁰)ᵣ₁-Rf^{a}, and R¹³ and R¹⁶ are hydrogen atoms,
R²⁰ is independently a C₁₋₁₀ alkylene group and preferably a C₁₋₆ alkylene group,
Rf^{a} is a C₁₋₁₀ perfluoroalkyl group and preferably a C₁₋₆ perfluoroalkyl group,
r1 is 0 or 1, and
n1 is an integer of 4 to 6 and preferably 5 or 6.

In one aspect, the organic group can be an alkyl group, alkyloxy group, or alkyl ether group having an end replaced with a reactive functional group. Such a group may be replaced with another substituent.

The reactive functional group is not limited, and examples thereof include a hydroxyl group, an amino group, a carboxyl group, a thiol group, an isocyanate group, a vinyl group, an acetylene group, a nitrile group, an epoxy group, and the like.

In one aspect, it is preferable that R¹ represents a C₁₋₃₀ alkyl group that may have one or more substituents or a hydrogen atom, R² represents a C₁₋₃₀ alkyl group that may have one or more substituents or a hydrogen atom, R³ represents a C₁₋₃₀ alkyl group that may have one or more substituents or a hydrogen atom, and R⁴ represents a C₁₋₃₀ alkyl group that may have one or more substituents or a hydrogen atom.

In a preferable aspect, one or more selected from R¹ to R⁴ is preferably a fluorine-containing organic group and more preferably an organic group comprising a C₂₋₆ fluoroalkyl group.

In another preferable aspect, one or more selected from R³ and R⁴ is a hydrogen atom, and R³ and R⁴ can be more preferably hydrogen atoms. In a case where at least one of R³ and R⁴ is a hydrogen atom, the compound represented by the formula (1) has - OH as a proton-donating group. Therefore, the compound can be combined with the polymer comprising one or more selected from -CO-, a nitrogen atom, and a halogen atom.

n1 is preferably 4 to 20, more preferably 4 to 10, still more preferably 4 to 7, and far still more preferably 5 or 6. In one aspect, n1 is 5. In addition, in another aspect, n1 is 6.

In one preferable aspect, the formula (1) can be represented by the following formula (1-A): 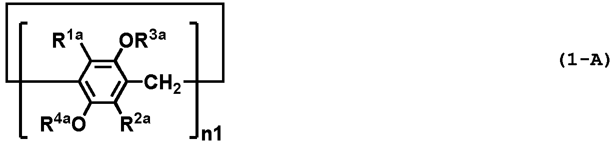 wherein
R^{1a} independently represents a C₁₋₃₀ alkyl group that may have one or more substituents or a hydrogen atom,
R^{2a} independently represents a C₁₋₃₀ alkyl group that may have one or more substituents or a hydrogen atom,
R^{3a} independently represents a C₁₋₃₀ alkyl group that may have one or more substituents or a hydrogen atom,
R^{4a} independently represents a C₁₋₃₀ alkyl group that may have one or more substituents or a hydrogen atom,
provided that at least one of R^{3a} and R^{4a} represents a hydrogen atom, and
n1 is an integer of 4 to 20.

In the formula (1-A), R^{1a} independently represents a C₁₋₃₀ alkyl group that may have one or more substituents or a hydrogen atom, R^{2a} independently represents a C₁₋₃₀ alkyl group that may have one or more substituents or a hydrogen atom, R^{3a} independently represents a C₁₋₃₀ alkyl group that may have one or more substituents or a hydrogen atom, and R^{4a} independently represents a C₁₋₃₀ alkyl group that may have one or more substituents or a hydrogen atom.

The alkyl group represented by R^{1a}, R^{2a}, R^{3a}, or R^{4a} is preferably a C₁₋₃₀ alkyl group. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃₀ alkyl group. In another aspect, the C₁₋₃₀ alkyl group can be a C₁₇₋₃₀ alkyl group, preferably a C₁₈₋₃₀ alkyl group, and more preferably a C₂₆₋₃₀ alkyl group.

Examples of the substituent in the alkyl group represented by R^{1a}, R^{2a}, R^{3a}, or R^{4a} include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, C₆₋₁₀ aryl groups, and 5 to 10-membered heteroaryl groups that may be replaced with one or more halogen atoms.

At least one of R^{3a} and R^{4a} is a hydrogen atom, and R^{3a} and R^{4a} can be preferably hydrogen atoms. In a case where at least one of R^{3a} and R^{4a} is a hydrogen atom, the compound represented by the formula (1) has -OH as a proton-donating group. Therefore, the compound can be combined with the polymer comprising one or more selected from -CO-, a nitrogen atom, and a halogen atom.

In one aspect, it is preferable that R^{1a} and R^{2a} are hydrogen atoms and R^{3a} and R^{4a} are hydrogen atoms or methyl groups.

In another aspect, the formula (1) can be represented by the following formula (1-A'): 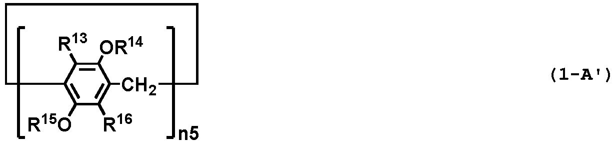 wherein
R¹³ independently represents a hydrogen atom or an organic group,
R¹⁴ independently represents a hydrogen atom or an organic group,
R¹⁵ independently represents a hydrogen atom or an organic group,
R¹⁶ independently represents a hydrogen atom or an organic group,
n5 is an integer of 4 to 20,
provided that at least one of R¹³, R¹⁴, R¹⁵, and R¹⁶ is a fluorine-containing group, and
at least one of R¹⁴ and R¹⁵ is a hydrogen atom.

In the formula (1-A'), R¹³ independently represents a hydrogen atom or an organic group, R¹⁴ independently represents a hydrogen atom or an organic group, R¹⁵ independently represents a hydrogen atom or an organic group, R¹⁶ independently represents a hydrogen atom or an organic group, and at least one of R¹³, R¹⁴, R¹⁵, and R¹⁶ is a fluorine-containing organic group.

Examples of the organic group represented by R¹³, R¹⁴, R¹⁵, or R¹⁶ include an alkyl group, an alkyloxy group, an alkyl ether group, a tosyl group, a triflate group, a phenyl group, and the like that may be replaced with a substituent.

The substituent is not limited, and examples thereof include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, 5 to 10-membered unsaturated heterocyclyl groups, C₆₋₁₀ aryl groups, and 5 to 10-membered heteroaryl groups, and reactive functional groups that may be replaced with one or more halogen atoms.

The reactive functional group is not limited, and examples thereof include a hydroxyl group, an amino group, a carboxyl group, a thiol group, an isocyanate group, a vinyl group, an acetylene group, a nitrile group, an epoxy group, and the like.

The alkyl group in R¹³, R¹⁴, R¹⁵, or R¹⁶ is preferably a C₁₋₃₀ alkyl group. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃₀ alkyl group. In another aspect, the C₁₋₃₀ alkyl group can be a C₁₇₋₃₀ alkyl group, preferably a C₁₈₋₃₀ alkyl group, and more preferably a C₂₆₋₃₀ alkyl group.

Examples of the substituent in the alkyl group in R¹³, R¹⁴, R¹⁵, or R¹⁶ include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, C₆₋₁₀ aryl groups, and 5 to 10-membered heteroaryl groups that may be replaced with one or more halogen atoms.

The alkyloxy group in R¹³, R¹⁴, R¹⁵, or R¹⁶ is typically a group represented by - O-R²¹ (in the formula, R²¹ is an alkyl group that may have one or more substituents).

The alkyl group in R²¹ may be replaced with the above-described substituent and may be preferably replaced with a fluorine atom. Such an alkyl group is preferably a C₁₋₃₀ alkyl group that may be replaced with a fluorine atom. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃ alkyl group.

R²¹ is preferably a group represented by -R²²-R²³ (in the formula, R²² is an unsubstituted C₁₋₃₀ alkylene group, preferably a C₁₋₂₀ alkylene group, and more preferably a C₁₋₁₀ alkylene group, and R²³ is a C₁₋₁₀ perfluoroalkyl group and preferably a C₁₋₆ perfluoroalkyl group).

The alkyl ether group is a compound having one or more ethereal oxygen atoms in a molecular chain of the alkyl group. Such an alkyl ether group is typically a group represented by -R²⁶¹-R^{27f}-(O-R^{28f})ₘ₁-R^{29f}. In the formula, R^{26f} is a single bond or an oxygen atom. R^{27f} is a single bond or a C₁₋₁₀ alkylene group. R^{28f} is a C₁₋₁₀ alkylene group. R^{29f} is a C₁₋₁₀ alkyl group that may be replaced with a fluorine atom or a hydrogen atom. m1 represents an integer of 1 to 20 and can be preferably 1 to 10, more preferably 1 to 5, and still more preferably 1 to 3.

In one aspect, the organic group can be an alkyl group, alkyloxy group, or alkyl ether group having an end replaced with a reactive functional group. Such a group may be replaced with another substituent.

In one aspect, R¹³ and R¹⁶ are each independently an organic group and at least one of R¹³ and R¹⁶ is a fluorine-containing organic group or R¹⁴ and R¹⁵ are each independently an organic group and at least one of R¹⁴ and R¹⁵ is a fluorine-containing organic group.

At least one of R¹⁴ and R¹⁵ is a hydrogen atom, and R¹⁴ and R¹⁵ can be preferably hydrogen atoms. In a case where at least one of R¹⁴ and R¹⁵ is a hydrogen atom, the compound represented by the formula (1-A') has -OH as a proton-donating group. Therefore, the compound can be combined with the polymer comprising one or more selected from -CO-, a nitrogen atom, and a halogen atom.

In one aspect, at least two of R¹³, R¹⁴, R¹⁵, and R¹⁶ are fluorine-containing organic groups, two of R¹³, R¹⁴, R¹⁵, and R¹⁶ are preferably fluorine-containing organic groups, and R¹³ and R¹⁶ can be more preferably fluorine-containing organic groups.

In one aspect, R¹⁴ and R¹⁵ are hydrogen atoms or R¹³ and R16 are hydrogen atoms.

In a preferable aspect, R¹³ and R¹⁶ are each independently a fluorine-containing organic group, and R¹⁴ and R¹⁵ are hydrogen atoms.

The fluorine-containing organic group can be preferably an organic group having 2 or more carbon atoms and having a fluoroalkyl group and more preferably a fluoroalkyl group or a fluoro(poly)ether group. The fluoroalkyl group is preferably a C₁₋₁₀ fluoroalkyl group and more preferably a C₂₋₆ fluoroalkyl group. Such a fluoroalkyl group may be linear or branched but is preferably linear. Such a fluoroalkyl group is preferably a perfluoroalkyl group. The fluoro(poly)ether group represents a fluoroether group and/or a fluoropolyether group.

In one aspect, the fluorine-containing organic group is a group represented by the following formula:

-(Oₚ₁-R²⁰_{q1})-Rf^{a}

[in the formula:
R²⁰ independently represents a C₁₋₁₀ alkylene group.
Rf^{a} represents a C₁₋₁₀ fluoroalkyl group.
p1 is an integer of 0 to 2.
q1 is an integer of 0 to 3.
In (Oₚ₁-R²⁰_{q1}), the occurrence order of O and R^{11a} is not limited].

The C₁₋₁₀ alkylene group in R²⁰ is preferably a C₁₋₆ alkylene group and more preferably a C₂₋₆ alkylene group. Such an alkylene group may be linear or branched but is preferably linear.

The C₁₋₁₀ fluoroalkyl group in Rf^{a} is preferably a C₁₋₆ fluoroalkyl group. Such a fluoroalkyl group may be linear or branched but is preferably linear. Such a fluoroalkyl group is preferably a perfluoroalkyl group.

p1 is an integer of 0 to 2 and preferably 1 or 2. In one aspect, p1 is 1. In another aspect, p1 is 2.

q1 is an integer of 0 to 3, preferably an integer of 1 to 3, and more preferably 1 or 2. In one aspect, q1 is 1. In another aspect, q1 is 2.

In a preferable aspect, the fluoro(poly)ether group is a group represented by

-O-R²⁰-(O-R²⁰)ᵣ₁-Rf^{a}

[in the formula:
R²⁰ independently represents a C₁₋₁₀ alkylene group.
Rf^{a} represents a C₁₋₁₀ fluoroalkyl group.
r1 is 0 or 1.].

In a more preferable aspect, the fluoro(poly)ether group is a group represented by

-O-R²⁰-(O-R²⁰)ᵣ₁-Rf^{a}

[in the formula:
R²⁰ independently represents a C₁₋₁₀ alkylene group.
Rf^{a} represents a C₁₋₁₀ perfluoroalkyl group.
r1 is 0 or 1.].

n1 is an integer of 4 to 20, preferably an integer of 4 to 6, and more preferably 5 or 6.

In a particularly preferable aspect,
R¹³ and R¹⁶ are -O-R²⁰-(O-R²⁰)ᵣ₁-Rf^{a}, and R¹⁴ and R¹⁵ are hydrogen atoms, or
R¹⁴ and R¹⁵ are -O-R²⁰-(O-R²⁰)ᵣ₁-Rf^{a}, and R¹³ and R¹⁶ are hydrogen atoms,
R²⁰ is independently a C₁₋₁₀ alkylene group and preferably a C₁₋₆ alkylene group,
Rf^{a} is a C₁₋₁₀ perfluoroalkyl group and preferably a C₁₋₆ perfluoroalkyl group,
r1 is 0 or 1, and
n1 is an integer of 4 to 6 and preferably 5 or 6.

The compound represented by the formula (1-A') can be obtained by converting a substituent in pillar[n]arene into a fluorine-containing organic group. Typically, the compound represented by the formula (1-A') can be obtained by introducing a hydroxyl group into a predetermined position in pillar[n]arene and reacting the hydroxyl group and a tosylate, halide, or the like of an organic group having 2 or more carbon atoms and having a fluoroalkyl group.

Furthermore, in another preferable aspect, the formula (1) can be represented by the following formula (1-B): 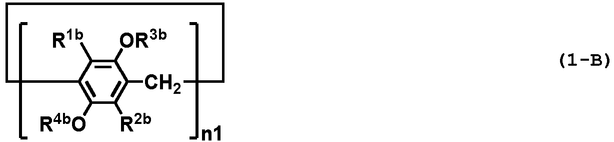 wherein
R^{1b} independently represents a C₁₋₃₀ alkyl group that may have one or more substituents or a hydrogen atom,
R^{2b} independently represents a C₁₋₃₀ alkyl group that may have one or more substituents or a hydrogen atom,
R^{3b} independently represents a C₁₋₃₀ alkyl group that may have one or more substituents or a hydrogen atom,
R^{4b} independently represents a C₁₋₃₀ alkyl group that may have one or more substituents or a hydrogen atom,
provided that at least one of R^{3b} and R^{4b} is a hydrogen atom, and
n1 is an integer of 4 to 20.

In the formula (1-B), R^{1b} independently represents a C₁₋₃₀ alkyl group that may have one or more substituents or a hydrogen atom, R^{2b} independently represents a C₁₋₃₀ alkyl group that may have one or more substituents or a hydrogen atom, R^{3b} independently represents a C₁₋₃₀ alkyl group that may have one or more substituents or a hydrogen atom, and R^{4b} independently represents a C₁₋₃₀ alkyl group that may have one or more substituents or a hydrogen atom.

The alkyl group represented by R^{1b}, R^{2b}, R^{3b}, or R^{4b} is preferably a C₁₋₃₀ alkyl group. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃₀ alkyl group. In another aspect, the C₁₋₃₀ alkyl group can be a C₁₇₋₃₀ alkyl group, preferably a C₁₈₋₃₀ alkyl group, and more preferably a C₂₆₋₃₀ alkyl group.

Examples of the substituent in the alkyl group represented by R^{1b}, R^{2b}, R^{3b}, or R^{4b} include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, C₆₋₁₀ aryl groups, and 5 to 10-membered heteroaryl groups that may be replaced with one or more halogen atoms.

At least one of R^{1b}, R^{2b}, R^{3b}, and R^{4b} is a hydrogen atom, and one or two selected from R^{1b}, R^{2b}, R^{3b}, and R^{4b} are preferably hydrogen atoms.

In one aspect, it is preferable that R^{1b} and R^{2b} are hydrogen atoms and R^{3b} and R^{4b} are hydrogen atoms or methyl groups. In a case where at least one of R^{3b} and R^{4b} is a hydrogen atom, the compound represented by the formula (1-B) has -OH as a proton-donating group. Therefore, the compound can be combined with the polymer comprising one or more selected from -CO-, a nitrogen atom, and a halogen atom.

In another aspect, the cyclic compound preferably comprises a compound represented by the following formula (2): 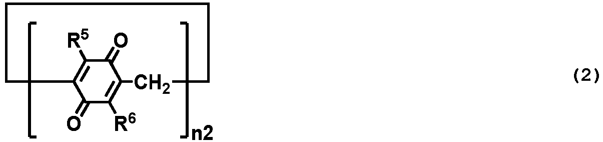 wherein
R⁵ independently represents a hydrogen atom or an organic group,
R⁶ independently represents a hydrogen atom or an organic group, and
n2 is an integer of 4 to 20.

The compound represented by the formula (2) comprises -CO- capable of acting as a proton receptor and thus can be combined with the polymer having the group comprising a hydrogen atom capable of interacting with -CO-, the nitrogen atom, and the halogen atom.

In the formula (2), R⁵ independently represents a hydrogen atom or an organic group, and R⁶ independently represents a hydrogen atom or an organic group.

Examples of the organic group represented by R⁵ or R⁶ include an alkyl group, an alkyloxy group, an alkyl ether group, a tosyl group, a triflate group, a phenyl group, and the like, and these groups may have one or more substituents.

The substituent that the organic group represented by R⁵ or R⁶ may have is not limited, and examples thereof include reactive functional groups such as a hydroxyl group, an amino group, a carboxy group, a thiol group, an isocyanate group, a nitrile group, an epoxy group, and an acetyl group; aliphatic hydrocarbon groups such as an alkyl group, a vinyl group, and an ethynyl group.

The alkyl group in R⁵ or R⁶ is preferably a C₁₋₃₀ alkyl group. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃₀ alkyl group. In another aspect, the C₁₋₃₀ alkyl group can be a C₁₇₋₃₀ alkyl group, preferably a C₁₈₋₃₀ alkyl group, and more preferably a C₂₆₋₃₀ alkyl group.

Examples of the substituent in the alkyl group in R⁵ or R⁶ include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, C₆₋₁₀ aryl groups, and 5 to 10-membered heteroaryl groups that may be replaced with one or more halogen atoms.

The alkyloxy group in R⁵ or R⁶ is typically a group represented by -O-R²¹ (in the formula, R²¹ is an alkyl group that may have one or more substituents).

The alkyl group in R²¹ may be replaced with the above-described substituent and may be preferably replaced with a fluorine atom. Such an alkyl group is preferably a C₁₋₃₀ alkyl group that may be replaced with a fluorine atom. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃ alkyl group.

The alkyl ether group in R⁵ or R⁶ is a compound having one or more ethereal oxygen atoms in a molecular chain of the alkyl group. Such an alkyl ether group is typically a group represented by -R²⁶-R²⁷-(O-R²⁸)ₘ-R²⁹. In the formula, R²⁶ is a single bond or an oxygen atom. R²⁷ is a single bond or a C₁₋₁₀ alkylene group. R²⁸ is a C₁₋₁₀ alkylene group. R²⁹ is a hydrogen atom or a C₁₋₁₀ alkyl group. m represents an integer of 1 to 20 and can be preferably 1 to 10, more preferably 1 to 5, and still more preferably 1 to 3.

In one aspect, the organic group can be an alkyl group, alkyloxy group, or alkyl ether group having an end replaced with a reactive functional group. Such a group may be replaced with another substituent.

The reactive functional group is not limited, and examples thereof include a hydroxyl group, an amino group, a carboxyl group, a thiol group, an isocyanate group, a vinyl group, an acetylene group, a nitrile group, an epoxy group, and the like.

In one aspect, it is preferable that R⁵ represents a C₁₋₃₀ alkyl group that may have one or more substituents or a hydrogen atom and R⁶ represents a C₁₋₃₀ alkyl group that may have one or more substituents or a hydrogen atom.

n2 is preferably 4 to 20, more preferably 4 to 10, still more preferably 4 to 7, and far still more preferably 5 or 6. In one aspect, n2 is 5. In addition, in another aspect, n2 is 6.

In one preferable aspect, the formula (2) can be represented by the following formula (2-A): 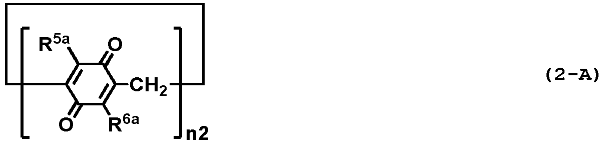 wherein
R^{5a} independently represents a C₁₋₃₀ alkyl group that may have one or more substituents or a hydrogen atom,
R^{6a} independently represents a C₁₋₃₀ alkyl group that may have one or more substituents or a hydrogen atom, and
n2 is an integer of 4 to 20.

The compound represented by the formula (2-A) comprises -CO- capable of acting as a proton receptor and thus can be combined with the polymer having the group comprising a hydrogen atom capable of interacting with -CO-, the nitrogen atom, and the halogen atom.

In the formula (2-A), R^{5a} independently represents a C₁₋₃₀ alkyl group that may have one or more substituents or a hydrogen atom, and R^{6a} independently represents a C₁₋₃₀ alkyl group that may have one or more substituents or a hydrogen atom.

The alkyl group in R^{5a} or R^{6a} is preferably a C₁₋₃₀ alkyl group. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃₀ alkyl group. In another aspect, the C₁₋₃₀ alkyl group can be a C₁₇₋₃₀ alkyl group, preferably a C₁₈₋₃₀ alkyl group, and more preferably a C₂₆₋₃₀ alkyl group.

Examples of the substituent in the alkyl group represented by R^{5a} or R^{6a} include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, C₆₋₁₀ aryl groups, and 5 to 10-membered heteroaryl groups that may be replaced with one or more halogen atoms.

In one aspect, R^{5a} and R^{6a} are preferably hydrogen atoms.

Furthermore, in another aspect, the cyclic compound preferably comprises a compound represented by the following formula (3): 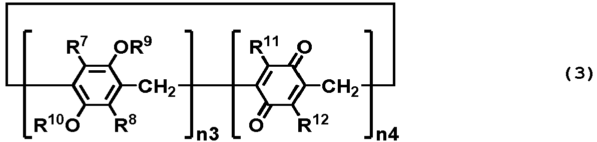 wherein
R⁷ independently represents a hydrogen atom or an organic group,
R⁸ independently represents a hydrogen atom or an organic group,
R⁹ independently represents a hydrogen atom or an organic group,
R¹⁰ independently represents a hydrogen atom or an organic group,
R¹¹ independently represents a hydrogen atom or an organic group,
R¹² independently represents a hydrogen atom or an organic group,
n3 is an integer of 1 to 19,
n4 is an integer of 1 to 19,
the sum of n3 and n4 is 4 to 20, and
the occurrence order of a unit in parentheses with n3 or n4 is arbitrary in the formula (3).

The compound represented by the formula (3) comprises -CO- capable of acting as a proton receptor and thus can be combined with the polymer having the group comprising a hydrogen atom capable of interacting with -CO-, the nitrogen atom, and the halogen atom.

In the formula (3), R⁷ independently represents a hydrogen atom or an organic group, R⁸ independently represents a hydrogen atom or an organic group, R⁹ independently represents a hydrogen atom or an organic group, R¹⁰ independently represents a hydrogen atom or an organic group, R¹¹ independently represents a hydrogen atom or an organic group, and R¹² independently represents a hydrogen atom or an organic group.

Examples of the organic group represented by R⁷, R⁸, R⁹, R¹⁰, R¹¹ or R¹² include an alkyl group, an alkyloxy group, an alkyl ether group, a tosyl group, a triflate group, a phenyl group, and the like, and these groups may have one or more substituents.

The substituent that the organic group represented by R⁷, R⁸, R⁹, R¹⁰, R¹¹ or R¹² may have is not limited, and examples thereof include reactive functional groups such as a hydroxyl group, an amino group, a carboxy group, a thiol group, an isocyanate group, a nitrile group, an epoxy group, and an acetyl group; aliphatic hydrocarbon groups such as an alkyl group, a vinyl group, and an ethynyl group.

The alkyl group in R⁷, R⁸, R⁹, R¹⁰, R¹¹ or R¹² is preferably a C₁₋₃₀ alkyl group. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃₀ alkyl group. In another aspect, the C₁₋₃₀ alkyl group can be a C₁₇₋₃₀ alkyl group, preferably a C₁₈₋₃₀ alkyl group, and more preferably a C₂₆₋₃₀ alkyl group.

Examples of the substituent in the alkyl group in R⁷, R⁸, R⁹, R¹⁰, R¹¹ or R¹² include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, C₆₋₁₀ aryl groups, and 5 to 10-membered heteroaryl groups that may be replaced with one or more halogen atoms.

The alkyloxy group in R⁷, R⁸, R⁹, R¹⁰, R¹¹ or R¹² is typically a group represented by -O-R²¹ (in the formula, R²¹ is an alkyl group that may have one or more substituents).

The alkyl group in R²¹ may be replaced with the above-described substituent and may be preferably replaced with a fluorine atom. Such an alkyl group is preferably a C₁₋₃₀ alkyl group that may be replaced with a fluorine atom. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃ alkyl group.

The alkyl ether group in R⁷, R⁸, R⁹, R¹⁰, R¹¹ or R¹² is a compound having one or more ethereal oxygen atoms in a molecular chain of the alkyl group. Such an alkyl ether group is typically a group represented by -R²⁶-R²⁷-(O-R²⁸)ₘ-R²⁹. In the formula, R²⁶ is a single bond or an oxygen atom. R²⁷ is a single bond or a C₁₋₁₀ alkylene group. R²⁸ is a C₁₋₁₀ alkylene group. R²⁹ is a hydrogen atom or a C₁₋₁₀ alkyl group. m represents an integer of 1 to 20 and can be preferably 1 to 10, more preferably 1 to 5, and still more preferably 1 to 3.

In one aspect, the organic group represented by R⁷, R⁸, R⁹, R¹⁰, R¹¹ or R¹² can be an alkyl group, alkyloxy group, or alkyl ether group having an end replaced with a reactive functional group. Such a group may be replaced with another substituent.

The reactive functional group is not limited, and examples thereof include a hydroxyl group, an amino group, a carboxyl group, a thiol group, an isocyanate group, a vinyl group, an acetylene group, a nitrile group, an epoxy group, and the like.

In one aspect, it is preferable that R⁷ represents a C₁₋₃₀ alkyl group that may have one or more substituents or a hydrogen atom, R⁸ represents a C₁₋₃₀ alkyl group that may have one or more substituents or a hydrogen atom, R⁹ represents a C₁₋₃₀ alkyl group that may have one or more substituents or a hydrogen atom, R¹⁰ represents a C₁₋₃₀ alkyl group that may have one or more substituents or a hydrogen atom, R¹¹ represents a C₁₋₃₀ alkyl group that may have one or more substituents or a hydrogen atom, and R¹² represents a C₁₋₃₀ alkyl group that may have one or more substituents or a hydrogen atom.

n3 is preferably 1 to 19, more preferably 1 to 9, still more preferably 1 to 6, and far still more preferably 1 to 5. n4 is preferably 1 to 19, more preferably 1 to 9, still more preferably 1 to 6, and far still more preferably 1 to 5. n3 + n4 is preferably 4 to 20, more preferably 4 to 10, still more preferably 4 to 7, and far still more preferably 5 or 6.

In one preferable aspect, the formula (3) can be represented by the following formula (3-A): 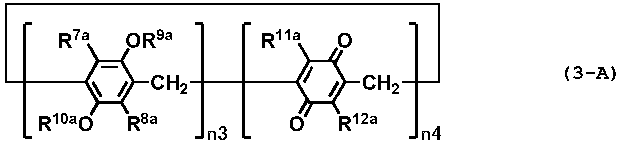 wherein
R^{7a} independently represents a C₁₋₃₀ alkyl group that may have one or more substituents or a hydrogen atom,
R^{8a} independently represents a C₁₋₃₀ alkyl group that may have one or more substituents or a hydrogen atom,
R^{9a} independently represents a C₁₋₃₀ alkyl group that may have one or more substituents or a hydrogen atom,
R^{10a} independently represents a C₁₋₃₀ alkyl group that may have one or more substituents or a hydrogen atom,
R^{11a} independently represents a C₁₋₃₀ alkyl group that may have one or more substituents or a hydrogen atom,
R^{12a} independently represents a C₁₋₃₀ alkyl group that may have one or more substituents or a hydrogen atom,
n3 is an integer of 1 to 19,
n4 is an integer of 1 to 19,
the sum of n3 and n4 is 4 to 20, and
provided that the occurrence order of a unit in parentheses with n3 or n4 is arbitrary in the formula (3-A)].

The compound represented by the formula (3-A) comprises -CO- capable of acting as a proton receptor and thus can be combined with the polymer having the group comprising a hydrogen atom capable of interacting with -CO-, the nitrogen atom, and the halogen atom.

In the formula (3-A), R^{7a} independently represents a C₁₋₃₀ alkyl group that may have one or more substituents or a hydrogen atom, R^{8a} independently represents a C₁₋₃₀ alkyl group that may have one or more substituents or a hydrogen atom, R^{9a} independently represents a C₁₋₃₀ alkyl group that may have one or more substituents or a hydrogen atom, R^{10a} independently represents a C₁₋₃₀ alkyl group that may have one or more substituents or a hydrogen atom, R^{11a} independently represents a C₁₋₃₀ alkyl group that may have one or more substituents or a hydrogen atom, and R^{12a} independently represents a C₁₋₃₀ alkyl group that may have one or more substituents or a hydrogen atom.

The alkyl group represented by R^{7a}, R^{8a}, R^{9a}, R^{10a}, R^{11a}, or R^{12a} is preferably a C₁₋₃₀ alkyl group. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃₀ alkyl group. In another aspect, the C₁₋₃₀ alkyl group can be a C₁₇₋₃₀ alkyl group, preferably a C₁₈₋₃₀ alkyl group, and more preferably a C₂₆₋₃₀ alkyl group.

Examples of the substituent in the alkyl group represented by R^{7a}, R^{8a}, R^{9a}, R^{10a}, R^{11a}, or R^{12a} include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, C₆₋₁₀ aryl groups, and 5 to 10-membered heteroaryl groups that may be replaced with one or more halogen atoms.

In one aspect, R^{7a}, R^{8a}, R^{11a}, and R^{12a} are preferably hydrogen atoms, and R^{9a} and R^{10a} may be preferably methyl groups.

In another preferable aspect, the formula (3) can be represented by the following formula (3-B): 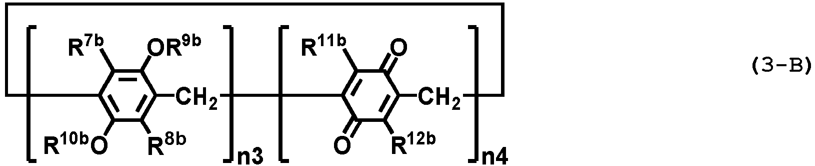 wherein
R^{7b} independently represents a hydrogen atom or an organic group,
R^{8b} independently represents a hydrogen atom or an organic group,
R^{9b} independently represents a hydrogen atom or an organic group,
R^{10b} independently represents a hydrogen atom or an organic group,
R^{11b} independently represents a hydrogen atom or an organic group,
R^{12b} independently represents a hydrogen atom or an organic group,
provided that at least one of R^{9b} and R^{10b} is a hydrogen atom,
n3 is an integer of 1 to 19,
n4 is an integer of 1 to 19,
the sum of n3 and n4 is 4 to 20, and
the occurrence order of a unit in parentheses with n3 or n4 is arbitrary in the formula (3-B).

The compound represented by the formula (3-B) comprises -CO- capable of acting as a proton receptor and thus can be combined with the polymer having the group comprising a hydrogen atom capable of interacting with -CO-, the nitrogen atom, or the halogen atom.

In the formula (3-B), R^{7b} independently represents a hydrogen atom or an organic group, R^{8b} independently represents a hydrogen atom or an organic group, R^{9b} independently represents a hydrogen atom or an organic group, R^{10b} independently represents a hydrogen atom or an organic group, R^{11b} independently represents a hydrogen atom or an organic group, and R^{12b} independently represents a hydrogen atom or an organic group.

Examples of the organic group represented by R^{7b}, R^{8b}, R^{9b}, R^{10b}, R^{11b} or R^{12b} include an alkyl group, an alkyloxy group, an alkyl ether group, a tosyl group, a triflate group, a phenyl group, and the like, and these groups may have one or more substituents.

The substituent that the organic group represented by R^{7b}, R^{8b}, R^{9b}, R^{10b}, R^{11b} or R^{12b} may have is not limited, and examples thereof include reactive functional groups such as a hydroxyl group, an amino group, a carboxy group, a thiol group, an isocyanate group, a nitrile group, an epoxy group, and an acetyl group; aliphatic hydrocarbon groups such as an alkyl group, a vinyl group, and an ethynyl group.

The alkyl group in R^{7b}, R^{8b}, R^{9b}, R^{10b}, R^{11b} or R^{12b} is preferably a C₁₋₃₀ alkyl group. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃₀ alkyl group. In another aspect, the C₁₋₃₀ alkyl group can be a C₁₇₋₃₀ alkyl group, preferably a C₁₈₋₃₀ alkyl group, and more preferably a C₂₆₋₃₀ alkyl group.

Examples of the substituent in the alkyl group in R^{7b}, R^{8b}, R^{9b}, R^{10b}, R^{11b} or R^{12b} include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, C₆₋₁₀ aryl groups, and 5 to 10-membered heteroaryl groups that may be replaced with one or more halogen atoms.

The alkyloxy group in R^{7b}, R^{8b}, R^{9b}, R^{10b}, R^{11b} or R^{12b} is typically a group represented by -O-R²¹ (in the formula, R²¹ is an alkyl group that may have one or more substituents).

The alkyl group in R²¹ may be replaced with the above-described substituent and may be preferably replaced with a fluorine atom. Such an alkyl group is preferably a C₁₋₃₀ alkyl group that may be replaced with a fluorine atom. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃ alkyl group.

The alkyl ether group in R^{7b}, R^{8b}, R^{9b}, R^{10b}, R^{11b} or R^{12b} is a compound having one or more ethereal oxygen atoms in a molecular chain of the alkyl group. Such an alkyl ether group is typically a group represented by -R²⁶-R²⁷-(O-R²⁸)ₘ-R²⁹. In the formula, R²⁶ is a single bond or an oxygen atom. R²⁷ is a single bond or a C₁₋₁₀ alkylene group. R²⁸ is a C₁₋₁₀ alkylene group. R²⁹ is a hydrogen atom or a C₁₋₁₀ alkyl group. m represents an integer of 1 to 20 and can be preferably 1 to 10, more preferably 1 to 5, and still more preferably 1 to 3.

In one aspect, the organic group represented by R^{7b}, R^{8b}, R^{9b}, R^{10b}, R^{11b} or R^{12b} can be an alkyl group, alkyloxy group, or alkyl ether group having an end replaced with a reactive functional group. Such a group may be replaced with another substituent.

The reactive functional group is not limited, and examples thereof include a hydroxyl group, an amino group, a carboxyl group, a thiol group, an isocyanate group, a vinyl group, an acetylene group, a nitrile group, an epoxy group, and the like.

In one aspect, it is preferable that R^{7b} represents a C₁₋₃₀ alkyl group that may have one or more substituents or a hydrogen atom, R^{8b} represents a C₁₋₃₀ alkyl group that may have one or more substituents or a hydrogen atom, R^{9b} represents a C₁₋₃₀ alkyl group that may have one or more substituents or a hydrogen atom, R^{10b} represents a C₁₋₃₀ alkyl group that may have one or more substituents or a hydrogen atom, R^{11b} represents a C₁₋₃₀ alkyl group that may have one or more substituents or a hydrogen atom, and R^{12b} represents a C₁₋₃₀ alkyl group that may have one or more substituents or a hydrogen atom.

At least one of R^{9b} and R^{10b} is a hydrogen atom, and R^{9b} and R^{10b} may preferably be hydrogen atoms. When at least one of R^{9b} and R^{10b} is a hydrogen atom, the compound represented by the formula (3-B) has -OH as the proton-donating group. Thus, the compound represented by the formula (3-B) may be combined with a polymer comprising one or more selected from the group consisting of -CO-, a nitrogen atom, and a halogen atom.

The above cyclic compound is preferably a compound represented by one or more selected from the group consisting of the formulae (1), (2), and (3), and may more preferably be a compound represented by one or more selected from the group consisting of the formulae (1-A), (2-A), and (3-A).

When two or more cyclic compounds are contained in the above composite, these two or more cyclic compounds may be the same or different from one another.

The proportion of the above cyclic compound may preferably be 0.01 mass% or more and 99 mass% or less, more preferably 0.1 mass% or more and 95 mass% or less, and sill more preferably 1 mass% or more and 90 mass% or less in a total of 100 parts by mass of the polymer and the cyclic compound described below. When the proportion of the cyclic compound falls within the range, the heat resistance and/or the hydrophobicity of the composite are/is favorable.

In the composite of the present disclosure, the above polymer is included in the above cyclic compound, one of the polymer and the above cyclic compound comprises one or more selected from the group consisting of -CO-, a nitrogen atom, and a halogen atom, and the other has a group comprising a hydrogen atom capable of interacting with -CO-, the nitrogen atom, or the halogen atom.

In one aspect, the above polymer preferably comprises one or more selected from the group consisting of -CO-, a nitrogen atom, and a halogen atom. The positions of -CO- and the nitrogen atom in the above polymer are not limited, and may be present at an end of the polymer or as a part of the polymer molecule. Examples of the polymer comprising -CO- include polymers comprising an amide group in a main chain backbone, such as polyamide; polymers comprising an ester group in a main chain backbone, such as polycarbonate, polyester, and polyarylate; and polymers comprising a carbonyl group in a main chain backbone, such as polyether ketone and polyether ether ketone (provided that, polymers comprising an amide group or an ester group in a main chain backbone are not included). Examples of the polymer comprising a nitrogen atom include polyamide. Examples of the polymer comprising a halogen atom include a fluorine-containing polymer and a chlorine-containing polymer.

In another aspect, the above polymer preferably has a group comprising a hydrogen atom capable of interacting with -CO-, the nitrogen atom, or the halogen atom. Examples of the polymer comprising a proton-donating group include an OH group-containing polymer, and preferred examples thereof include a polymer comprising a vinyl alcohol unit. Preferred examples of the polymer having an unsaturated bond include a diene-based polymer.

In still another aspect, the above polymer preferably comprises an OH group. Examples of the OH group-containing polymer include a polymer comprising a vinyl alcohol unit.

The above polymer may preferably be a linear polymer. When the above polymer is linear, the polymer easily penetrates through the inside of the ring of the cyclic compound, which may result in easy formation of a composite.

In the present disclosure, for example, the above polymer may have one or more substituents. Examples of the substituent that may be contained in the above polymer include one or more selected from the group consisting of -COOR^{f13}, -OR^{f13}, -NR^{f13}₂, - NR^{f13}-CO-R^{f13}, -CO-NR^{f13}₂, -NO₂, -CN, -COR¹⁴, -SO₂R^{f14}, -O-COR^{f14}, a C₁₋₅ alkyl group optionally substituted with one or more halogen atoms, and a halogen atom.

In the substituent that may be contained in the above polymer, the sum of C, N, O, and S is 1 or more, and may preferably be 5 or less, more preferably 3 or less, and sill more preferably 2 or less.

R^{f13} independently represents a C₁₋₄ alkyl group optionally substituted with one or more halogen atoms or a hydrogen atom.

The "C₁₋₄ alkyl group" in the C₁₋₄ alkyl group optionally substituted with one or more halogen atoms represented by R^{f13} may be linear or branched, and is preferably a linear or branched C₁₋₃ alkyl group, and more preferably a linear C₁₋₃ alkyl group.

Examples of the halogen atom that may substitute the above C₁₋₄ alkyl group represented by R^{f13} include a fluorine atom, a chlorine atom, a bromine atom, and an iodine atom, and a fluorine atom or a chlorine atom is preferable.

In one aspect, the above C₁₋₄ alkyl group optionally substituted with one or more halogen atoms represented by R^{f13} is preferably a C₁₋₄ alkyl group substituted with one or more halogen atoms, sill more preferably a C₁₋₄ alkyl group substituted with one or more fluorine atoms, and even more preferably a C₁₋₄ perfluoroalkyl group.

For example, the above C₁₋₄ perfluoroalkyl group in R^{f13} may be linear or branched, and is preferably a linear or branched C₁₋₃ perfluoroalkyl group, more preferably a linear C₁₋₃ perfluoroalkyl group, and specifically, CF₃-, CF₃CF₂-, or CF₃CF₂CF₂-.

R^{f14} independently represents a C₁₋₄ alkyl group optionally substituted with one or more fluorine atoms, a hydrogen atom, or a halogen atom.

The "C₁₋₄ alkyl group" in the C₁₋₄ alkyl group optionally substituted with one or more halogen atoms represented by R^{f14} may be linear or branched, and is preferably a linear or branched C₁₋₃ alkyl group, and more preferably a linear C₁₋₃ alkyl group.

Examples of the above halogen atom that may substitute the C₁₋₄ alkyl group represented by R^{f14} include a fluorine atom, a chlorine atom, a bromine atom, and an iodine atom, and a fluorine atom or a chlorine atom is preferable.

In one aspect, the above C₁₋₄ alkyl group optionally substituted with one or more halogen atoms represented by R^{f14} is preferably a C₁₋₄ alkyl group substituted with one or more halogen atoms, sill more preferably a C₁₋₄ alkyl group substituted with one or more fluorine atoms, and even more preferably a C₁₋₄ perfluoroalkyl group.

For example, the above C₁₋₄ perfluoroalkyl group in R^{f14} may be linear or branched, and is preferably a linear or branched C₁₋₃ perfluoroalkyl group, more preferably a linear C₁₋₃ perfluoroalkyl group, and specifically, -CF₃, -CF₂CF₃, or - CF₂CF₂CF₃.

The "C₁₋₅ alkyl group" in the above C₁₋₅ alkyl group optionally substituted with one or more halogen atoms as the substituent may be linear or branched, and is preferably a linear or branched C₁₋₃ alkyl group, and more preferably a linear C₁₋₃ alkyl group.

Examples of the halogen atom that may substitute the above C₁₋₅ alkyl group as the substituent include a fluorine atom, a chlorine atom, a bromine atom, and an iodine atom, and a fluorine atom or a chlorine atom is preferable. In one aspect, the above C₁₋₅ alkyl group optionally substituted with one or more halogen atoms is preferably a C₁₋₅ alkyl group substituted with one or more halogen atoms, sill more preferably a C₁₋₅ alkyl group substituted with one or more fluorine atoms, and even more preferably C₁₋₄ perfluoroalkyl group.

For example, the above C₁₋₄ perfluoroalkyl group may be linear or branched, and is preferably a linear or branched C₁₋₃ perfluoroalkyl group, more preferably a linear C₁₋₃ perfluoroalkyl group, and specifically, CF₃-, CF₃CF₂-, or CF₃CF₂CF₂-.

Examples of the above halogen atom as the substituent include a fluorine atom, a chlorine atom, an iodine atom, and a bromine atom, and a fluorine atom or a chlorine atom is preferable.

Preferred examples of the above polymer comprising one or more selected from the group consisting of -CO- and a nitrogen atom include polymers having one or more repeating structural units selected from the group consisting of the following formulae (B1) to (B6):

-[NH-CO-R^{b2}-CO-NH-R^{b2}]- (B1)

-[NH-CO-R^{b2}]- (B2)

-[O-CO-O-R^{b2}]- (B3)

-[O-CO-R^{b2}]- (B4)

-[O-CO-R^{b2}-CO-O-R^{b2}]- (B5)

-[O-R^{b2}-O-R^{b2}-CO-R^{b2}]- (B6)

wherein
R^{b2} independently represents a divalent group comprising a C₆₋₂₀ aromatic hydrocarbon group optionally having one or more substituents, or a C₁₋₁₆ alkylene group optionally having one or more substituents, and
R^{b3} independently represents a C₁₋₁₆ alkyl group optionally having one or more substituents or a hydrogen atom.

When the above polymer comprises a polymer having any of the above repeating structural units, the heat resistance of the composite to be obtained is favorable.

The polymer comprising a repeating structural unit represented by the formula (B4) or the formula (B5) corresponds to polyester and is susceptible to hydrolysis due to the chemical structure thereof. For example, an improvement in hydrolysis resistance is a challenge for polylactic acid that is expected to be a biodegradable polymer. In the composite of the present disclosure, the cyclic compound is capable of interacting with the polymer comprising a repeating structural unit represented by the formula (B4) or (B5), so that not only heat resistance, but also hydrolysis resistance is expected to be improved.

For example, the "C₆₋₂₀ aromatic hydrocarbon group" in the divalent group comprising a C₆₋₂₀ aromatic hydrocarbon group optionally having one or more substituents represented by R^{b2} may be monocyclic or polycyclic, and in the case of polycyclic, two or more rings may form a condensed ring or may not form a condensed ring. In the divalent group comprising a C₆₋₂₀ aromatic hydrocarbon group optionally having one or more substituents, the number of aromatic hydrocarbon groups is 1 or more, and may preferably be 1 or more and 4 or less, more preferably 1 or more and 3 or less, and sill more preferably 1 or 2. Such an aromatic hydrocarbon group may preferably be a C₆₋₁₀ aromatic hydrocarbon group, sill more preferably a phenylene group, a tolylene group, a xylylene group, or a naphthylene group, and even more preferably a phenylene group, a tolylene group, or a xylylene group.

In such a divalent group comprising a C₆₋₂₀ aromatic hydrocarbon group optionally having one or more substituents, for example, two or more aromatic hydrocarbon groups may be bound via a single bond or a divalent organic group. Examples of such an organic group include a linear or branched C₁₋₄ alkyl group.

The divalent group comprising a C₆₋₂₀ aromatic hydrocarbon group optionally having one or more substituents represented by R^{b2} is preferably represented by the following formula:

*-Ar¹-(X¹-Ar¹)ₙ₁₀-*

wherein
Ar¹ independently represents a divalent C₆₋₁₀ aromatic hydrocarbon group optionally having one or more substituents,
X¹ represents a single bond, -O-, -CO-, -SO₂-, or a C₁₋₄ alkylene group,
n10 represents an integer of 0 or more and 3 or less,
* represents a bond, and
the total number of carbon atoms in the formula is 6 or more and 20 or less.

Ar¹ represents a divalent C₆₋₁₀ aromatic hydrocarbon group optionally having one or more substituents.

For example, the "divalent C₆₋₂₀ aromatic hydrocarbon group" in the above divalent C₆₋₂₀ aromatic hydrocarbon group optionally having one or more substituents may be monocyclic or polycyclic, and in the case of polycyclic, two or more rings may form a condensed ring or may not form a condensed ring. The "divalent C₆₋₂₀ aromatic hydrocarbon group" in the divalent C₆₋₂₀ aromatic hydrocarbon group optionally having one or more substituents is preferably a divalent C₆₋₁₅ aromatic hydrocarbon group, more preferably a divalent C₆₋₁₀ aromatic hydrocarbon group, sill more preferably a phenylene group, a tolylene group, a xylylene group, or a naphthylene group, and even more preferably a phenylene group, a tolylene group, or a xylylene group.

Examples of the substituent that may be contained in the divalent C₆₋₁₀ aromatic hydrocarbon group represented by Ar¹ include one or more selected from the group consisting of -COOR^{f13} -OR^{f13}, -NR^{f13}₂, -NR^{f13}-CO-R^{f13}, -CO-NR^{f13}₂ -NO₂, -CN, - COR¹⁴, -SO₃R^{f14}, -O-COR^{f14}, and a halogen atom. R^{f13} and R^{f14} have the same meanings as above.

The substituent that may be contained in the above divalent C₆₋₁₀ aromatic hydrocarbon group may preferably be one or more selected from the group consisting of -COOH, -OH, -NH₂, -CONR^{f13}, -NO₂, -CN, -COH, -COCl, -SO₃H, -O-COR^{f14}, and a halogen atom, more preferably a halogen atom, and still more preferably a fluorine atom or a chlorine atom.

X¹ represents a single bond, -O-, -CO-, -SO₂-, or a C₁₋₄ alkylene group. For example, such a C₁₋₄ alkylene group may be linear or branched, preferably a linear or branched C₁₋₃ alkylene group, and specifically -CH₂- or -C(CH₃)₂-.

The substituent that may be contained in the divalent group comprising a C₆₋₂₀ aromatic hydrocarbon group represented by R^{b2} include one or more selected from the group consisting of -COOR^{f13}, -OR^{f13}, -NR^{f13}₂, -NR^{f13}-CO-R^{f13}, -CO-NR^{f13}₂, -NO₂, - CN, -COR¹⁴, -SO₃R^{f14}, -O-COR^{f14}, and a halogen atom. R^{f13} and R^{f14} have the same meanings as above.

The substituent that may be contained in the divalent group comprising the above divalent C₆₋₁₀ aromatic hydrocarbon group may preferably be one or more selected from the group consisting of -COOH, -OH, -NH₂, -CONR^{f13}, -NO₂, -CN, - COH, -COCl, -SO₃H, -O-COR^{f14}, and a halogen atom, more preferably a halogen atom, and sill more preferably a fluorine atom or a chlorine atom.

The divalent group comprising a C₆₋₂₀ aromatic hydrocarbon group optionally having one or more substituents represented by R^{b2} is preferably phenylene group, tolylene group, xylylene group, hydroxyphenylene group, hydroxyxylylene group, naphthylene group, biphenylene group, 3,3'-dimethylbiphenylene group, 3,3',5,5'-tetramethylbiphenylene group, 2,2-diphenylpropane-4,4'-diyl group, 1,1-diphenylmethane-4,4'-diyl group, benzophenone-4,4'-diyl group, diphenylsulfone-4,4'-diyl group, or oxybisphenyl-4,4'-diyl group, more preferably phenylene group, xylylene group, hydroxyphenylene group, hydroxyxylylene group, naphthylene group, 2,2-diphenylpropane-4,4'-diyl group, 1,1-diphenylmethane-4,4'-diyl group, benzophenone-4,4'-diyl group, diphenylsulfone-4,4'-diyl group, or oxybisphenyl-4,4'-diyl group.

For example, the "C₁₋₁₆ alkylene group" in the C₁₋₁₆ alkylene group optionally having one or more substituents represented by R^{b2} may be linear or branched, preferably a linear or branched C₁₋₁₀ alkylene group, more preferably a linear or branched C₁₋₆ alkylene group, and specifically, -CH₂-, -CH₂CH₂-, -CH₂CH₂CH₂-, - CH(CH₃)CH₂-, -C(CH₃)₂-, -CH₂CH₂CH₂CH₂-, -CH(CH₃)CH₂CH₂-, - CH₂CH(CH₃)CH₂-, -C(CH₃)₂CH₂-, -CH₂CH₂CH₂CH₂CH₂-, -CH(CH₃)CH₂CH₂CH₂-, - CH₂CH(CH₃)CH₂CH₂-, -C(CH₃)₂CH₂CH₂-, -CH₂C(CH₃)₂CH₂-, - CH₂CH₂CH₂CH₂CH₂CH₂-, CH(CH₃)CH₂CH₂CH₂CH₂-, -CH₂CH(CH₃)CH₂CH₂CH₂-, - CH₂CH₂CH(CH₃)CH₂CH₂-, -C(CH₃)₂CH₂CH₂CH₂-, or -CH₂C(CH₃)₂CH₂CH₂-.

Examples of the substituent that may be contained in the C₁₋₁₆ alkylene group represented by R^{b2} include one or more selected from the group consisting of -COOR^{f13}, -OR^{f13}, -NR^{f13}₂, -NR^{f13}-CO-R^{f13}, -CO-NR^{f13}₂, -NO₂, -CN, -COR¹⁴, -SO₃R^{f14}, -O-COR^{f14}, and a halogen atom. R^{f13} and R^{f14} have the same meanings as above.

The substituent that may be contained in the above C₁₋₁₆ alkylene group represented by R^{b2} may preferably be one or more selected from the group consisting of -COOH, -OH, -NH₂, -CONR^{f13}, -NO₂, -CN, -COH, -COCl, -SO₃H, -O-COR^{f14}, and a halogen atom, more preferably a halogen atom, and sill more preferably a fluorine atom or a chlorine atom.

The number average molecular weight of the above polymer comprising one or more selected from the group consisting of -CO- and a nitrogen atom may be, for example, 500 to 1,000,000, preferably 1,000 to 500,000, more preferably 2,000 to 300,000, still more preferably 2,000 to 250,000, and for example, 3,000 to 250,000.

**In** the present disclosure, the number average molecular weight can be measured by gel permeation chromatography in terms of polystyrene as the standard sample.

Examples of the above polymer comprising a halogen atom (hereinafter, also referred to as a "halogen-containing polymer") include polymers comprising one or more selected from the group consisting of a fluorine atom, a chlorine atom, a bromine atom, and an iodine atom, and typically, a polymer comprising one or more selected from the group consisting of a fluorine atom and a chlorine atom is preferable. **In** one aspect, a polymer comprising a fluorine atom or a chlorine atom is preferable, and in another aspect, a polymer comprising a fluorine atom and a chlorine atom is preferable. Examples of the above polymer comprising a halogen atom include polymers having a repeating structural unit comprising a fluorine atom as the substituent in the above formulae (B1) to (B6); fluorine-containing olefin-based polymers; fluoropolyethers; and fluorine-containing acrylic polymers; and chlorine-containing polymers such as chlorine-containing olefin polymers, chlorine-containing acrylic polymers, and polymers having a repeating structural unit comprising a chlorine atom as the substituent in the above formulae (B1) to (B6). The above halogen-containing polymer may preferably comprise one or more selected from the group consisting of polymers having a repeating structural unit comprising a fluorine atom as the substituent in any of the above formulae (B1) to (B6); fluorine-containing olefin-based polymers; fluoropolyethers; and chlorine-containing polymers.

In one aspect, the above fluorine-containing polymer preferably comprises a polymer having a repeating structural unit comprising a fluorine atom as the substituent in any of the above formulae (B1) to (B6).

The fluorine-containing olefin-based polymer may be a polymer of a fluorine-containing olefin compound, and has one or more repeating units formed from the fluorine-containing olefin compound.

The above fluorine-containing olefin compound is preferably represented by the following formula:

CR^{f20}R^{f21}=CR^{f22}R^{f23}

wherein
R^{f20} represents one selected from the group consisting of a hydrogen atom, a fluorine atom, a chlorine atom, a C₁₋₅ fluoroalkyl group, and a C₁₋₅ perfluoroalkoxy group,
R^{f21} represents one selected from the group consisting of a hydrogen atom, a fluorine atom, a chlorine atom, a C₁₋₅ fluoroalkyl group, and a C₁₋₅ perfluoroalkoxy group,
R^{f22} represents one selected from the group consisting of a hydrogen atom, a fluorine atom, a chlorine atom, a C₁₋₅ fluoroalkyl group, and a C₁₋₅ perfluoroalkoxy group,
R^{f23} represents one selected from the group consisting of a hydrogen atom, a fluorine atom, a chlorine atom, a C₁₋₅ fluoroalkyl group, and a C₁₋₅ perfluoroalkoxy group, and
one or more of R^{f20} to R^{f23} are fluorine atoms.

In the above formula, R^{f20} represents one selected from the group consisting of a hydrogen atom, a fluorine atom, a chlorine atom, a C₁₋₅ fluoroalkyl group, and a C₁₋₅ perfluoroalkoxy group, R^{f21} represents one selected from the group consisting of a hydrogen atom, a fluorine atom, a chlorine atom, a C₁₋₅ fluoroalkyl group, and a C₁₋₅ perfluoroalkoxy group, R^{f22} represents one selected from the group consisting of a hydrogen atom, a fluorine atom, a chlorine atom, a C₁₋₅ fluoroalkyl group, and a C₁₋₅ perfluoroalkoxy group, and R^{f23} represents one selected from the group consisting of a hydrogen atom, a fluorine atom, a chlorine atom, a C₁₋₅ fluoroalkyl group, and a C₁₋₅ perfluoroalkoxy group.

For example, the C₁₋₅ fluoroalkyl group represented by R^{f20}, R^{f21}, R^{f22}, or R^{f23} may be linear or branched, preferably a linear or branched C₁₋₅ fluoroalkyl group, in particular, a C₁₋₃ fluoroalkyl group, and more preferably a linear C₁₋₃ fluoroalkyl group. In one aspect, the C₁₋₅ fluoroalkyl group represented by R^{f20}, R^{f21}, R^{f22}, or R^{f23} is preferably a C₁₋₅ perfluoroalkyl group. For example, the above C₁₋₅ perfluoroalkyl group may be linear or branched, preferably a linear or branched C₁₋₅ perfluoroalkyl group, in particular, a C₁₋₃ perfluoroalkyl group, and more preferably a linear C₁₋₃ perfluoroalkyl group. Specific examples of the C₁₋₅ fluoroalkyl group represented by R^{f20}, R^{f21}, R^{f22}, or R^{f23} include -CF₃, -CF₂CF₃, or -CF₂CF₂CF₃.

For example, the C₁₋₅ perfluoroalkoxy group represented by R^{f20}, R^{f21}, R^{f22}, or R^{f23} may be linear or branched, and is preferably a linear or branched C₁₋₅ perfluoroalkoxy group, in particular, C₁₋₃ perfluoroalkoxy group, more preferably a linear perfluoroalkoxy group, and specifically, -O-CF₃, -O-CF₂CF₃, or -O-CF₂CF₂CF₃.

In one aspect, R^{f20} may preferably be a fluorine atom or a hydrogen atom, R^{f21} may preferably be a fluorine atom or a hydrogen atom, R^{f22} may preferably be a fluorine atom or a hydrogen atom, and R^{f23} may preferably be a fluorine atom or a hydrogen atom. In another aspect, R^{f20} may preferably be a fluorine atom or a hydrogen atom, R^{f21} may preferably be a fluorine atom or a hydrogen atom, R^{f22} may preferably be a fluorine atom or a hydrogen atom, and R^{f23} may preferably be a C₁₋₅ perfluoroalkyl group or a C₁₋₅ perfluoroalkoxy group.

The above fluorine-containing olefin compound preferably comprises one or more selected from the group consisting of tetrafluoroethylene, trifluoroethylene, vinylidene fluoride, chlorotrifluoroethylene, 1,2-difluoroethylene, hexafluoropropylene, 2,3,3,3-tetrafluoropropene, vinyl fluoride, perfluoromethyl vinyl ether, perfluoroethyl vinyl ether, and perfluoropropyl vinyl ether.

In one aspect, the above fluorine-containing olefin compound may preferably be vinylidene fluoride.

Examples of the above fluorine-containing olefin-based polymer include one or more selected from the group consisting of a chlorotrifluoroethylene/tetrafluoroethylene/perfluoro(alkyl vinyl ether) copolymer, an ethylene/tetrafluoroethylene copolymer, an ethylene/chlorotrifluoroethylene copolymer, polyvinylidene fluoride, a vinylidene fluoride/tetrafluoroethylene copolymer, a vinylidene fluoride/tetrafluoroethylene/chlorotrifluoroethylene copolymer, polychlorotrifluoroethylene, a vinylidene fluoride/tetrafluoroethylene/hexafluoropropylene copolymer, a vinylidene fluoride/tetrafluoroethylene/hexafluoropropylene copolymer, and poly 1,2-difluoroethylene. In one aspect, the above fluorine-containing olefin-based polymer comprises polyvinylidene fluoride.

The number average molecular weight of the above fluorine-containing olefin-based polymer may preferably be 1,000 or more and 1,000,000 or less, more preferably 2,000 or more and 500,000 or less, and sill more preferably 3,000 or more and 300,000 or less.

In the present disclosure, the number average molecular weight can be measured by gel permeation chromatography in terms of polystyrene as the standard sample.

The above fluoropolyether may be a polymer having an oxyfluoroalkylene unit. The above fluoropolyether is preferably represented by the following formula:

Y¹-R^{f1}-R^{F}-O-R^{f2}-Y²

wherein
R^{F} represents a divalent fluoropolyether group,
Y¹ represents one selected from the group consisting of a halogen atom, a hydrogen atom, -COOR^{f3}, -OR^{f3}, -NR^{f3}₂, -NR^{f3}-CO-R^{f3}, -CO-NR^{f3}₂, -NO₂, -CN, - COR^{f4}, -SO₂R^{f4}, and -O-COR^{f4},
Y² represents one selected from the group consisting of a halogen atom, a hydrogen atom, -COOR^{f3}, -OR^{f3}, -NR^{f3}₂, -NR^{f3}-CO-R^{f3}, -CO-NR^{f3}₂, -NO₂, -CN, - COR^{f4}, -SO₂R^{f4}, and -O-COR^{f4},
R^{f1} represents a divalent hydrocarbon group optionally having one or more substituents or a single bond,
R^{f2} represents a divalent hydrocarbon group optionally having one or more substituents or a single bond,
R^{f3} independently represents a C₁₋₁₆ alkyl group optionally having one or more substituents or a hydrogen atom,
R^{f4} independently represents a C₁₋₁₆ alkyl group optionally having one or more substituents, a hydrogen atom, or a halogen atom, and
q is 0 or 1.

R^{F} is preferably a group represented by the formula:

-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-

wherein
R^{Fa} is independently a hydrogen atom, a fluorine atom, or a chlorine atom,
a, b, c, d, e, and f are each independently an integer of 0 to 200, the sum of a, b, c, d, e, and f is 1 or more, and the occurrence order of the respective repeating units in parentheses with a, b, c, d, e, or f is arbitrary in the formula, provided that, when all R^{Fa} are hydrogen atoms or chlorine atoms, at least one of a, b, c, e, and f is 1 or more.

R^{Fa} is preferably a hydrogen atom or a fluorine atom, and more preferably a fluorine atom. Provided that, when all R^{Fa} are hydrogen atoms or chlorine atoms, at least one of a, b, c, e, and f is 1 or more.

For example, a, b, c, d, e, and f may preferably each independently be an integer of 0 to 100.

For example, the sum of a, b, c, d, e, and f is preferably 5 or more, more preferably 10 or more, and for example, may be 15 or more or 20 or more. The sum of a, b, c, d, e, and f is preferably 200 or less, more preferably 100 or less, sill more preferably 60 or less, and for example, may be 50 or less, or 30 or less.

These repeating units may be linear or branched, or for example, may comprise a ring structure. For example, -(OC₆F₁₂)- may be -(OCF₂CF₂CF₂CF₂CF₂CF₂)-, - (OCF(CF₃)CF₂CF₂CF₂CF₂)-, -(OCF₂CF(CF₃)CF₂CF₂CF₂)-, - (OCF₂CF₂CF(CF₃)CF₂CF₂)-, -(OCF₂CF₂CF₂CF(CF₃)CF₂)-, - (OCF₂CF₂CF₂CF₂CF(CF₃))-, or the like. For example, -(OC₅F₁₀)- may be - (OCF₂CF₂CF₂CF₂CF₂)-, -(OCF(CF₃)CF₂CF₂CF₂)-, -(OCF₂CF(CF₃)CF₂CF₂)-, - (OCF₂CF₂CF(CF₃)CF₂)-, -(OCF₂CF₂CF₂CF(CF₃))-, or the like. For example, - (OC₄F₈)- may be any one of -(OCF₂CF₂CF₂CF₂)-, -(OCF(CF₃)CF₂CF₂)-, - (OCF₂CF(CF₃)CF₂)-, -(OCF₂CF₂CF(CF₃))-, -(OC(CF₃)₂CF₂)-, -(OCF₂C(CF₃)₂)-, - (OCF(CF₃)CF(CF₃))-, -(OCF(C₂F₅)CF₂)-, and -(OCF₂CF(C₂F₅))-. For example, - (OC₃F₆)- (that is, in the above formula, R^{Fa} is a fluorine atom) may be any one of - (OCF₂CF₂CF₂)-, -(OCF(CF₃)CF₂)-, and -(OCF₂CF(CF₃))-. For example, -(OC₂F₄)-may be any one of -(OCF₂CF₂)-and -(OCF(CF₃))-.

The above ring structures may be a 3-membered ring, 4-membered rings, 5-membered rings, or 6-membered rings described below.

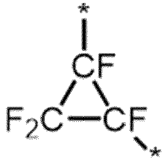

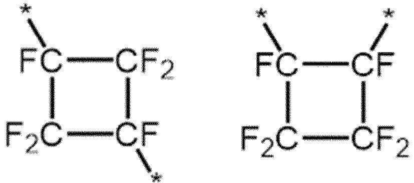

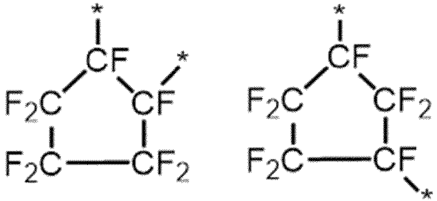

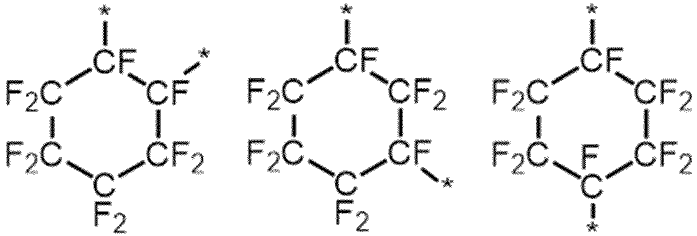

In the formula, * represents a binding position.

The above ring structure may preferably be a 4-membered ring, a 5-membered ring, or a 6-membered ring, and more preferably a 4-membered ring or a 6-membered ring.

The repeating unit having a ring structure may preferably be any one of the following units.

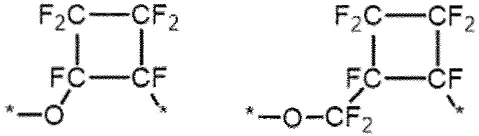

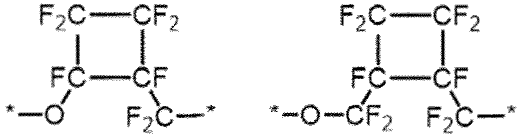

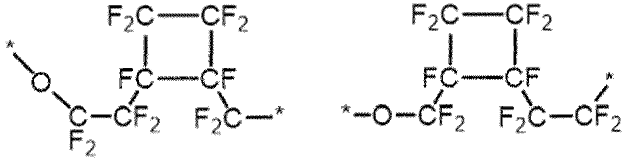

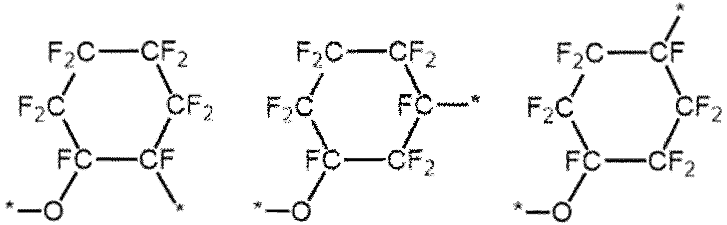

In the formula, * represents a binding position.

In one aspect, the above repeating unit is linear. By making the above repeating unit linear, the surface lubricity, abrasion durability, and the like of the surface-treating layer can be improved.

In one aspect, the above repeating unit is branched. By making the above repeating unit branched, the dynamic friction coefficient of the surface-treating layer can be increased.

In one aspect, R^{F} is independently a group represented by any of the following formulae (f1) to (f7), and preferably a group represented by the following formula (f7):

-(OC₃F₆)_{d}-(OC₂F₄)ₑ- (f1)

wherein d is an integer of 1 to 200, and e is 0 or 1;

-(OC₄F₈)_{c}-(OC₃F₆)_{d}-(OC₂F₄)ₑ-(OCF₂)_{f}- (f2)

wherein c and d are each independently an integer of 0 or more and 30 or less, e and f are each independently an integer of 1 or more and 200 or less,
the sum of c, d, e, and f is 2 or more, and
the occurrence order of the respective repeating units in parentheses with a subscript c, d, e, or f is arbitrary in the formula;

   -(R³⁶-R³⁷)_{g}- (3)

   wherein R³⁶ is OCF₂ or OC₂F₄,
   R³⁷ is a group selected from OC₂F₄, OC₃F₆, OC₄F₈, OC₅F₁₀, and OC₆F₁₂, or a combination of two or three groups independently selected from these groups, and
   g is an integer of 2 to 100;

      -(R³⁶-R³⁷)-R^{r}-(R^{37'}-R^{36'})_{g'}- (f4)

      wherein R³⁶ is OCF₂ or OC₂F₄,
      R³⁷ is a group selected from OC₂F₄, OC₃F₆, OC₄F₈, OC₅F₁₀, and OC₆F₁₂, or a combination of two or three groups independently selected from these groups,
      R^{36'} is OCF₂ or OC₂F₄,
      R^{37'} is a group selected from OC₂F₄, OC₃F₆, OC₄F₈, OC₅F₁₀, and OC₆F₁₂, or a combination of two or three groups independently selected from these groups,
      g is an integer of 2 to 100,
      g' is an integer of 2 to 100, and
      R^{r} is 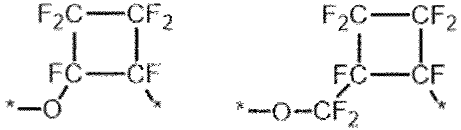 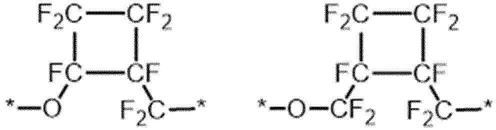 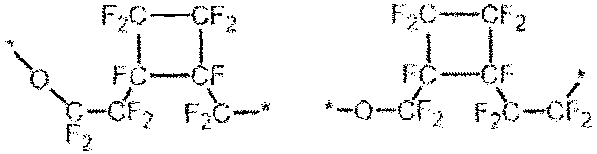 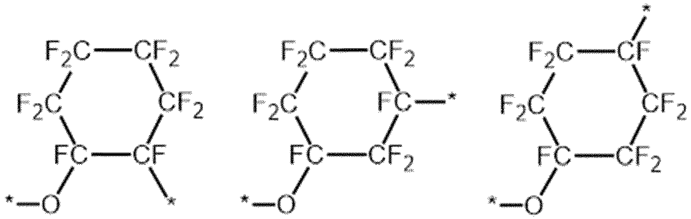 wherein * represents a binding position;

         -(OC₆F₁₂)ₐ-(OC₅F₁₀)_{b}-(OC₄F₈)_{c}-(OC₃F₆)_{d}-(OC₂F₄)ₑ-(OCF₂)_{f}- (f5)
      wherein e is an integer of 1 or more and 200 or less, a, b, c, d, and f are each independently an integer of 0 or more and 200 or less, and the occurrence order of the respective repeating units in parentheses with a, b, c, d, e, or f is arbitrary in the formula;

         -(OC₆F₁₂)ₐ-(OCsF_{1O})_{b}-(OC₄F₈)_{c}-(OC₃F₆)_{d}-(OC₂F₄)ₑ-(OCF₂)_{f}- (f6)
      wherein f is an integer of 1 or more and 200 or less, a, b, c, d, and e are each independently an integer of 0 or more and 200 or less, and the occurrence order of the respective repeating units in parentheses with a, b, c, d, e, or f is arbitrary in the formula;

         -(CF₂CF₂CH₂O)_{d}- (f7)
      wherein d is an integer of 1 to 200.

In the above formula (f1), d is preferably an integer of 5 to 200, more preferably 10 to 100, sill more preferably 15 to 50, and for example, 25 to 35. OC₃F₆ in the above formula (f1) is preferably (OCF₂CF₂CF₂), (OCF(CF₃)CF₂), or (OCF₂CF(CF₃)), and more preferably (OCF₂CF₂CF₂). (OC₂F₄) in the above formula (f1) is preferably (OCF₂CF₂) or (OCF(CF₃)), and more preferably (OCF₂CF₂). In one aspect, e is 0. In another aspect, e is 1.

In the above formula (f2), e and f are preferably each independently an integer of 5 to 200, and more preferably 10 to 200. The sum of c, d, e, and f is preferably 5 or more, more preferably 10 or more, and for example, may be 15 or more, or 20 or more. In one aspect, the above formula (f2) is preferably a group represented by - (OCF₂CF₂CF₂CF₂)_{c}-(OCF₂CF₂CF₂)_{d}-(OCF₂CF₂)ₑ-(OCF₂)_{f}-. In another aspect, for example, the formula (f2) may be a group represented by -(OC₂F₄)ₑ-(OCF₂)_{f}-.

In the above formula (f3), R³⁶ is preferably OC₂F₄. In the above (f3), R³⁷ is preferably a group selected from OC₂F₄, OC₃F₆, and OC₄F₈, or a combination of two or three groups independently selected from these groups, and more preferably a group selected from OC₃F₆ and OC₄F₈. The combination of two or three groups independently selected from OC₂F₄, OC₃F₆, and OC₄F₈ is not limited, and examples thereof include -OC₂F₄OC₃F₆-, -OC₂F₄OC₄F₈-, -OC₃F₆OC₂F₄-, -OC₃F₆OC₃F₆-, - OC₃F₆OC₄F₈-, -OC₄F₈OC₄F₈-, -OC₄F₈OC₃F₆-, -OC₄F₈OC₂F₄-, -OC₂F₄OC₂F₄OC₃F₆-, - OC₂F₄OC₂F₄OC₄F₈-, -OC₂F₄OC₃F₆OC₂F₄-, -OC₂F₄OC₃F₆OC₃F₆-, -OC₂F₄OC₄F₈OC₂F₄-, -OC₃F₆OC₂F₄OC₂F₄-, -OC₃F₆OC₂F₄OC₃F₆-, -OC₃F₆OC₃F₆OC₂F₄-, and - OC₄F₈OC₂F₄OC₂F₄-. In the above formula (f3), g is preferably an integer of 3 or more, and more preferably 5 or more. The above g is preferably an integer of 50 or less. In the above formula (f3), OC₂F₄, OC₃F₆, OC₄F₈, OC₅F₁₀, and OC₆F₁₂ may be either linear or branched, and preferably linear. In this aspect, the above formula (f3) is preferably -(OC₂F₄-OC₃F₆)_{g}- or -(OC₂F₄-OC₄F₈)_{g}-.

In the above formula (f4), R³⁶, R³⁷, and g have the same meanings as the description in the above formula (f3), and have the same aspects. R^{36'}, R^{37'}, and g^{'} respectively have the same meanings as R³⁶, R³⁷, and g in the above formula (f3), and have the same aspects. R^{r} is preferably 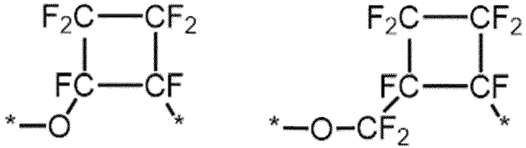 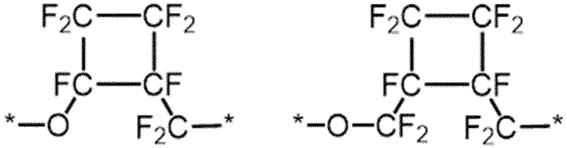 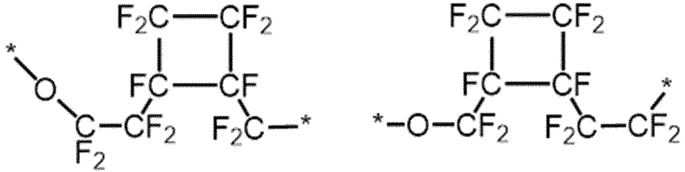
wherein * represents a binding position,
and more preferably 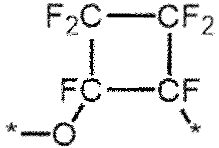
wherein * represents a binding position.

In the above formula (f5), e is preferably an integer of 1 or more and 100 or less, and more preferably 5 or more and 100 or less. The sum of a, b, c, d, e, and f is preferably 5 or more, more preferably 10 or more, and for example, 10 or more and 100 or less.

In the above formula (f6), f is preferably an integer of 1 or more and 100 or less, and more preferably 5 or more and 100 or less. The sum of a, b, c, d, e, and f is preferably 5 or more, more preferably 10 or more, and for example, 10 or more and 100 or less.

In the above formula (f7), d is preferably an integer of 1 or more and 100 or less, more preferably 5 or more and 100 or less, and sill more preferably 10 or more and 100 or less.

In one aspect, R^{F} is a group represented by the above formula (f1).

In one aspect, R^{F} is a group represented by the above formula (f2).

In one aspect, R^{F} is a group represented by the above formula (f3).

In one aspect, R^{F} is a group represented by the above formula (f4).

In one aspect, R^{F} is a group represented by the above formula (f5).

In one aspect, R^{F} is a group represented by the above formula (f6).

In one aspect, R^{F} is a group represented by the above formula (f7).

In R^{F}, a ratio of e to f (hereinafter, referred to as "e/f ratio") is 0.1 to 10, preferably 0.2 to 5, more preferably 0.2 to 2, sill more preferably 0.2 to 1.5, and still more preferably 0.2 to 0.85. By setting the e/f ratio to 10 or less, the lubricity, abrasion durability, and chemical resistance (e.g., the durability against artificial sweat) of the surface-treating layer obtained from the compound are more improved. The smaller the e/f ratio is, the more the lubricity and abrasion durability of the surface-treating layer are improved. Meanwhile, by setting the e/f ratio to 0.1 or more, the stability of the compound can be more enhanced. The larger the e/f ratio is, the more the stability of the compound is improved.

The number average molecular weight of the portion represented by R^{F} is not limited, and is, for example, 500 to 30,000, preferably 1,500 to 30,000, and more preferably 2,000 to 10,000. As used herein, the number average molecular weight of the portion represented by R^{F} is a value measured by ¹⁹F-NMR.

In another aspect, the number average molecular weight of the portion represented by R^{F} may be 500 to 30,000, preferably 1,000 to 20,000, more preferably 2,000 to 15,000, still more preferably 2,000 to 10,000, and for example, 3,000 to 6,000.

In still another aspect, the number average molecular weight of the portion represented by R^{F} may be 4,000 to 30,000, preferably 5,000 to 10,000, and more preferably 6,000 to 10,000.

R^{f1} independently represents a divalent hydrocarbon group optionally having one or more substituents or a single bond.

The "hydrocarbon group" in the above hydrocarbon group optionally having one or more substituents may preferably be a divalent C₁₋₂₀ hydrocarbon group, more preferably a divalent C₁₋₂₀ aliphatic hydrocarbon group, and sill more preferably a C₁₋₁₆ alkylene group.

The above hydrocarbon group optionally having one or more substituents is preferably a C₁₋₁₆ alkylene group optionally having one or more substituents. For example, the "C₁₋₁₆ alkylene group" in a C₁₋₁₆ alkylene group optionally substituted with one or more fluorine atoms may be linear or branched, and is preferably a linear or branched C₁₋₁₀ alkylene group, more preferably a linear or branched C₁₋₆ alkylene group, sill more preferably a linear or branched C₁₋₃ alkylene group, even more preferably a linear C₁₋₆ alkylene group, and in particular, a linear C₁₋₃ alkylene group.

Examples of the substituent that may be contained in the above hydrocarbon group include one or more selected from the group consisting of -COOR^{f13}, -OR^{f13}, - NR^{f13}₂, -NR^{f13}-CO-R^{f13}, -CO-NR^{f13}₂, -NO₂, -CN, -COR¹⁴, -SO₃R^{f14}, -O-COR^{f14}, and a halogen atom. R^{f13} and R^{f14} have the same meanings as above.

The substituent that may be contained in the above hydrocarbon group may preferably be one or more selected from the group consisting of -COOH, -OH, -NH₂, - CONR^{f13}, -NO₂, -CN, -COH, -COCl, -SO₃H, -O-COR^{f14}, and a halogen atom, more preferably a halogen atom, and sill more preferably a fluorine atom or a chlorine atom.

In one aspect, the above hydrocarbon group optionally having one or more substituents represented by R^{f1} is preferably a C₁₋₁₆ alkylene group optionally substituted with one or more fluorine atoms.

For example, "C₁₋₁₆ alkylene group" in the above C₁₋₁₆ alkylene group optionally substituted with one or more fluorine atoms may be linear or branched, and is preferably a linear or branched C₁₋₆ alkylene group, in particular, a C₁₋₃ alkylene group, more preferably a linear C₁₋₆ alkylene group, and in particular, a C₁₋₃ alkylene group.

R^{f1} is preferably a C₁₋₁₆ alkylene group substituted with one or more fluorine atoms, and more preferably a C₁₋₁₆ perfluoroalkylene group.

For example, the above C₁₋₁₆ perfluoroalkylene group may be linear or branched, and is preferably a linear or branched C₁₋₆ perfluoroalkylene group, in particular, a C₁₋₃ perfluoroalkylene group, more preferably a linear C₁₋₆ perfluoroalkylene group, in particular, a C₁₋₃ perfluoroalkylene group, and specifically, -CF₂-, -CF₂CF₂-, or - CF₂CF₂CF₂-.

In the above formula, R^{f2} is a divalent hydrocarbon group optionally having one or more substituents or a single bond.

The "hydrocarbon group" in the above hydrocarbon group optionally having one or more substituents may preferably be a C₁₋₂₀ hydrocarbon group, more preferably a C₁₋₂₀ aliphatic hydrocarbon group, and sill more preferably a C₁₋₁₆ alkyl group.

The above hydrocarbon group optionally having one or more substituents is preferably a C₁₋₁₆ alkyl group optionally having one or more substituents. For example, the "C₁₋₁₆ alkyl group" in a C₁₋₁₆ alkyl group optionally substituted with one or more fluorine atoms may be linear or branched, preferably a linear or branched C₁₋₁₀ alkyl group, more preferably a linear or branched C₁₋₆ alkyl group, sill more preferably a linear or branched C₁₋₃ alkyl group, even more preferably a linear C₁₋₆ alkyl group, and in particular, a linear C₁₋₃ alkyl group.

Examples of the substituent that may be contained in the above hydrocarbon group include one or more selected from the group consisting of -COOR^{f13}, -OR^{f13}, - NR^{f13}₂ -NR^{f13}-CO-R^{f13}, -CO-NR^{f13}₂, -NO₂, -CN, -COR¹⁴, -SO₂R^{f14}, -O-COR^{f14}, and a halogen atom. R^{f13} and R^{f14} have the same meanings as above.

The substituent that may be contained in the above hydrocarbon group may preferably be one or more selected from the group consisting of -COOH, -OH, -NH₂, - CONR^{f13}, -NO₂, -CN, -COH, -COCl, -SO₃H, -O-COR^{f14}, and a halogen atom, more preferably a halogen atom, and sill more preferably a fluorine atom or a chlorine atom.

In one aspect, the hydrocarbon group optionally having one or more substituents represented by R^{f2} is preferably a C₁₋₁₆ alkyl group optionally substituted with one or more fluorine atoms.

For example, the "C₁₋₁₆ alkyl group" in the above C₁₋₁₆ alkyl group optionally substituted with one or more fluorine atoms may be linear or branched, preferably a linear or branched C₁₋₆ alkyl group, in particular, a C₁₋₃ alkyl group, more preferably a linear C₁₋₆ alkyl group, and in particular, a C₁₋₃ alkyl group.

R^{f2} is preferably a C₁₋₁₆ alkyl group substituted with one or more fluorine atoms, and more preferably a C₁₋₁₆ perfluoroalkyl group.

For example, the above C₁₋₁₆ perfluoroalkyl group may be linear or branched, and is preferably a linear or branched C₁₋₆ perfluoroalkyl group, in particular, a C₁₋₃ perfluoroalkyl group, more preferably a linear C₁₋₆ perfluoroalkyl group, in particular, a C₁₋₃ perfluoroalkyl group, and specifically, -CF₃, -CF₂CF₃, or -CF₂CF₂CF₃.

In the above formula, Y¹ represents one selected from the group consisting of a halogen atom, a hydrogen atom, -COOR^{f3}, -OR^{f3}, -NR^{f3}₂, -NR^{f3}-CO-R^{f3}, -CO-NR^{f3}₂, - NO₂, -CN, -COR^{f4}, -SO₂R^{f4}, and -O-COR^{f4}.

In the above formula, Y² represents one selected from the group consisting of a halogen atom, a hydrogen atom, -COOR^{f3}, -OR^{f3}, -NR^{f3}₂, -NR^{f3}-CO-R^{f3}, -CO-NR^{f3}₂, - NO₂, -CN, -COR^{f4}, -SO₂R^{f4}, and -O-COR^{f4}.

R^{f3} independently represents a C₁₋₁₆ alkyl group optionally having one or more substituents or a hydrogen atom.

For example, the "C₁₋₁₆ alkylene group" in the above C₁₋₁₆ alkylene group optionally substituted with one or more fluorine atoms may be linear or branched, and is preferably a linear or branched C₁₋₆ alkylene group, in particular, a C₁₋₃ alkylene group, more preferably a linear C₁₋₆ alkylene group, and in particular, a C₁₋₃ alkylene group.

Examples of the substituent that may be contained in the above C₁₋₁₆ alkylene group represented by R^{f3} include one or more selected from the group consisting of - COOR^{f13}, -OR^{f13}, -NR^{f13}₂, -NR^{f13}-CO-R^{f13}, -CO-NR^{f13}₂, -NO₂, -CN, -COR¹⁴, -SO₃R^{f14}, - O-COR^{f14}, and a halogen atom. R^{f13} and R^{f14} have the same meanings as above.

The substituent that may be contained in the above C₁₋₁₆ alkylene group represented by R^{f3} may preferably be one or more selected from the group consisting of -COOH, -OH, -NH₂, -CONR^{f13}, -NO₂, -CN, -COH, -COCl, -SO₃H, -O-COR^{f14}, and a halogen atom, more preferably a halogen atom, and sill more preferably a fluorine atom or a chlorine atom.

In one aspect, the above C₁₋₁₆ alkylene group optionally having one or more substituents represented by R^{f3} may preferably be a C₁₋₁₆ alkylene group optionally substituted with one or more fluorine atoms.

The above C₁₋₁₆ alkylene group optionally substituted with one or more fluorine atoms represented by R^{f3} is preferably a C₁₋₁₆ alkylene group substituted with one or more fluorine atoms, and more preferably a C₁₋₁₆ perfluoroalkylene group.

For example, the above C₁₋₁₆ perfluoroalkylene group in R^{f3} may be linear or branched, and is preferably a linear or branched C₁₋₆ perfluoroalkylene group, in particular, a C₁₋₃ perfluoroalkylene group, more preferably a linear C₁₋₆ perfluoroalkylene group, in particular, a C₁₋₃ perfluoroalkylene group, and specifically, - CF₂-, -CF₂CF₂-, or -CF₂CF₂CF₂-.

R^{f4} independently represents a C₁₋₁₆ alkyl group optionally having one or more substituents, a hydrogen atom, or a halogen atom.

For example, the "C₁₋₁₆ alkyl group" in the above C₁₋₁₆ alkyl group optionally having one or more substituents may be linear or branched, and is preferably a linear or branched C₁₋₅ alkyl group, in particular, a C₁₋₃ alkyl group, more preferably a linear C₁₋₆ alkyl group, and in particular, a C₁₋₃ alkyl group.

Examples of the substituent that may be contained in the above C₁₋₁₆ alkyl group represented by R^{f4} include one or more selected from the group consisting of -COOR^{f13}, -OR^{f13}, -NR^{f13}₂, -NR^{f13}-CO-R^{f13}, -CO-NR^{f13}₂ -NO₂, -CN, -COR¹⁴, -SO₂R^{f14}, -O-COR^{f14}, and a halogen atom. R^{f13} and R^{f14} have the same meanings as above.

The substituent that may be contained in the above C₁₋₁₆ alkyl group represented by R^{f4} may preferably be one or more selected from the group consisting of -COOH, - OH, -NH₂, -CONR^{f13}, -NO₂, -CN, -COH, -COCl, -SO₃H, -O-COR^{f14}, and a halogen atom, more preferably a halogen atom, and sill more preferably a fluorine atom or a chlorine atom.

In one aspect, the above C₁₋₁₆ alkyl group optionally having one or more substituents represented by R^{f4} may preferably be a C₁₋₁₆ alkyl group optionally substituted with one or more fluorine atoms.

The above C₁₋₁₆ alkyl group optionally substituted with one or more fluorine atoms represented by R^{f4} is preferably a C₁₋₁₆ alkyl group substituted with one or more fluorine atoms, and more preferably a C₁₋₁₆ perfluoroalkyl group.

For example, the C₁₋₁₆ perfluoroalkyl group in R^{f4} may be linear or branched, preferably a linear or branched C₁₋₆ perfluoroalkyl group, in particular, a C₁₋₃ perfluoroalkyl group, more preferably a linear C₁₋₆ perfluoroalkyl group, in particular, a C₁₋₃ perfluoroalkyl group, and specifically -CF₃, -CF₂CF₃, or -CF₂CF₂CF₃.

Examples of the halogen atom represented by Y¹ or Y² include a fluorine atom, a chlorine atom, a bromine atom, and an iodine atom, and a fluorine atom or a chlorine atom is preferable.

Y¹ may preferably be one selected from the group consisting of -COOH, -OH, - NH₂, -CONR^{f3}, -NO₂, -CN, -COH, -COCl, -SO₃H, -O-COR^{f4}, and a halogen atom.

Y² may preferably be one selected from the group consisting of -COOH, -OH, - NH₂, -CONR^{f3}, -NO₂, -CN, -COH, -COCl, -SO₃H, -O-COR^{f4}, and a halogen atom.

In the above formula, q is 0 or 1. In one aspect, q is 0, and in another aspect, q is 1.

The number average molecular weight of the above fluoropolyether is not limited, and for example, 500 to 30,000, preferably 1,500 to 30,000, and more preferably 2,000 to 10,000. As used herein, the number average molecular weight of the fluoropolyether can be measured by ¹⁹F-NMR.

In another aspect, the number average molecular weight of the fluoropolyether may be 500 to 30,000, preferably 1,000 to 20,000, more preferably 2,000 to 15,000, still more preferably 2,000 to 10,000, and for example, 3,000 to 6,000.

In still another aspect, the number average molecular weight of the fluoropolyether may be 4,000 to 30,000, preferably 5,000 to 10,000, and more preferably 6,000 to 10,000.

Examples of the above chlorine-containing polymer include chlorine-containing olefin polymers; chlorine-containing acrylic polymers; and polymers having a repeating structural unit comprising a chlorine atom as the substituent in the above formulae (B1) to (B6), and preferred examples thereof include chlorine-containing olefin polymers.

Preferred examples of the above chlorine-containing polymer include a polymer having a repeating structural unit represented by the following formula (B7):

-[CR^{b3}₂-CR^{b3}₂]- (B7)

wherein
R^{b3} independently represents one selected from the group consisting of a hydrogen atom, a chlorine atom, and a C₁₋₅ chloroalkyl group, and
one or more R^{b3} are chlorine atoms.

In the above formula, R^{b3} independently represents one selected from the group consisting of a hydrogen atom, a chlorine atom, a C₁₋₅ chloroalkyl group, and a C₁₋₅ chloroalkoxy group.

For example, the C₁₋₅ chloroalkyl group represented by R^{b3} may be linear or branched, preferably a linear or branched C₁₋₅ chloroalkyl group, in particular, a C₁₋₃ chloroalkyl group, and more preferably a linear C₁₋₃ chloroalkyl group. Specific examples of the C₁₋₅ fluoroalkyl group represented by R^{b3} include -CH₂Cl, -CHCl₂, or CCl₃.

The repeating structural unit represented by the above formula (B6) may preferably be -[CH₂-CHCl]- or -[CH₂-CCl₂]-.

The number average molecular weight of the above chlorine-containing polymer may preferably be 1,000 or more and 1,000,000 or less, more preferably 2,000 or more and 500,000 or less, and sill more preferably 3,000 or more and 300,000 or less.

Preferred examples of the polymer comprising the above proton-donating group or an unsaturated group include polymers having one or more repeating structural units selected from the group consisting of the following formulae (B8), (B9), (B10), (B 1), and (B2):

-[CR^{b4}₂-CR^{b4}=CR^{b4}-CR^{b4}₂]- (B8)

-[CR^{b4}₂-CR^{b4}OH]- (B9)

-[CR^{b4}₂-CR^{b4}OH]ₙ-[CR^{b4}₂-CR^{b4}₂]ₘ- (B10)

-[NH-CO-R^{b2}-CO-NH-R^{b2}]- (B1)

-[NH-CO-R^{b2}]- (B2)

wherein
R^{b2} has the same meanings as above, and each independently represents a divalent group comprising a C₆₋₂₀ aromatic hydrocarbon group optionally having one or more substituents or a C₁₋₁₆ alkylene group optionally having one or more substituents, and
R^{b4} independently represents a C₁₋₁₆ alkyl group optionally having one or more substituents or a hydrogen atom,
provided that the occurrence order of the respective units in parentheses with m or n is arbitrary in the formula (B9).

For example, the "C₁₋₁₆ alkyl group" in the C₁₋₁₆ alkyl group optionally having one or more substituents represented by R^{b4} may be linear or branched, and may preferably be a linear or branched C₁₋₁₀ alkyl group, more preferably a linear or branched C₁₋₆ alkyl group, sill more preferably a linear or branched C₁₋₄ alkyl group, and specifically -CH₃, -CH₂CH₃, -CH₂CH₂CH₃, -CH(CH₃)CH₃, -C(CH₃)₃, - CH₂CH₂CH₂CH₃, -CH(CH₃)CH₂CH₃, -CH₂CH(CH₃)CH₃, or -C(CH₃)₂CH₃.

Examples of the substituent that may be contained in the C₁₋₁₆ alkyl group represented by R^{b4} include one or more selected from the group consisting of -COOR^{f13}, -OR^{f13}, -NR^{f13}₂, -NR^{f13}-CO-R^{f13}, -CO-NR^{f13}₂ -NO₂, -CN, -COR¹⁴, -SO₃R^{f14}, -O-COR^{f14}, and a halogen atom. R^{f13} and R^{f14} have the same meanings as above.

The substituent that may be contained in the above C₁₋₁₆ alkyl group represented by R^{b4} may preferably be one or more selected from the group consisting of -COOH, - OH, -NH₂, -CONR^{f13}, -NO₂, -CN, -COH, -COCl, -SO₃H, -O-COR^{f14}, and a halogen atom, more preferably a halogen atom, and sill more preferably a fluorine atom or a chlorine atom.

Examples of the polymer comprising the above group comprising a hydrogen atom having a charge density of 0.25 or higher include polymers comprising a repeating structural unit in which R^{b2} is preferably a C₆₋₁₆ alkylene group, and more preferably a C₆₋₁₀ alkylene group in the formula (B 1), the formula (B2), the formula (B4), or the formula (B5), and specific examples thereof include poly-ε-caprolactone and 6-nylon.

In poly-ε-caprolactone, the hydrogen bound to the carbon adjacent to the carbonyl group has a charge density of 0.27, and in 6-nylon, the hydrogen bound to the carbon adjacent to the carbonyl group of polyamide has a charge density of 0.268. Although actual calculation is required to determine what kind of hydrogen atom has a charge density of 0.25 or higher, it is found that the hydrogen bound to the carbon adjacent to the carbon of the carbonyl group tends to have a high charge density, as in examples above. Although it should not be construed as being limited to specific theory, this is presumed that, due to influence of carbonyl having a high property of absorbing electrons, the charge density of the hydrogen atom bound to the carbon adjacent to the carbonyl is made high. By designing polymers based on such a relationship and calculating the charge density, a structure expected to have interaction in the composite can be considered to be specified.

For example, a part of the double bond of the polymer represented by the above formula (B8) may be crosslinked. The cross-linking agent may be a peroxide cross-linking agent, and is only required to be an organic peroxide capable of easily generating a peroxy radical in the presence of heat or an oxidation reduction system. Specific examples thereof include 1,1-bis(t-butylperoxy)-3,5,5-trimethylcyclohexane, 2,5-dimethylhexane-2,5-dihydroperoxide, di-t-butyl peroxide (PERBUTYL D), t-butylcumyl peroxide (PERBUTYL C), dicumyl peroxide (PERCUMYL D, PERCUMYL D-40, and PERCUMYL D-40MB(T)), α,α-bis(t-butylperoxy)-p-diisopropylbenzene, 2,5-dimethyl-2,5-di(t-butylperoxy)hexane (PERHEXA 25B, PERHEXA 25B-40), 2,5-dimethyl-2,5-di(t-butylperoxy)-hexyn-3 (PERHEXYNE 25B, PERHEXYNE 25B-40), benzoyl peroxide, t-butylperoxy benzene, 2,5-dimethyl-2,5-di(benzoylperoxy)hexane (PERHEXA 25Z), t-butylperoxymaleic acid (t-butyl MA), t-butylperoxyisopropylcarbonate (PERBUTYL I-75), methyl ethyl ketone peroxide (PERMEK D (DR), PERMEK H (HR, HY), PERMEK N (NR, NY), PERMEK S (SR), PERMEK F (FR), PERMEK G (GR, GY)), cyclohexanone peroxide (PERHEXA H), acetylacetone peroxide (PERCURE AH, AL), 1,1-di(t-hexylperoxy)-3,3,5-trimethylcyclohexane (PERHEXA TMH), 1,1-di(t-hexylperoxy)cyclohexane (PERHEXA HC), 1,1-di(t-butylperoxy)-2-methylcyclohexane (PERHEXA MC), 1,1-di(t-butylperoxy)cyclohexane (PERHEXA C-80 (S), PERHEXA C-75 (EB), PERHEXA C (C), PERHEXA C-40, PERHEXA C-40MB (S)), 2,2-di(t-butylperoxy)butane (PERHEXA 22), butyl 4,4-di-(t-butylperoxy)pentanoate (PERHEXA V, PERHEXA V-40(F)), 2,2-di(4,4-di-(t-butylperoxy)cyclohexyl)propane (PERTETRA A), p-menthane hydroperoxide (PERMENTA H), diisopropylbenzene hydroperoxide (PERCUMYL P), 1,1,3,3-tetramethylbutyl hydroperoxide (PEROCTA H), cumene hydroperoxide (PERCUMYL H-80), t-butyl hydroperoxide (PERBUTYL H-69), di(2-t-butylperoxyisopropyl)benzene (PERBUTYL P, PERBUTYL P-40, PEROXYMON F-40, PERBUTYL P-40MB (K)), di-t-hexyl peroxide PERHEXYL D), diisobutyryl peroxide (PEROYL IB), di(3,5,5-trimethylhexanoyl) peroxide (PEROYL 355 (S)), dilauroyl peroxide (PEROYL L), disuccinic acid peroxide (PEROYL SA), a mixture of di-(3-methylbenzoyl) peroxide, benzoyl(3-methylbenzoyl) peroxide, and dibenzoyl peroxide (NYPER BMT-K40, NYPER BMT-M), dibenzoyl peroxide (NYPER BW, NYPER BO, NYPER FF, NYPER BS, NYPER E, NYPER NS), di(4-methylbenzoyl) peroxide (NYPER PMB), di-n-propyl peroxydicarbonate (PEROYL NPP-50M), diisopropyl peroxydicarbonate (PEROYL IPP-50, PEROYL IPP-27), di(4-t-butylcyclohexyl) peroxydicarbonate (PEROYL TCP), di(2-ethylhexyl) peroxydicarbonate (PEROYL OPP), di-sec-butyl peroxydicarbonate (PEROYL SBP), cumyl peroxyneodecanoate (PERCUMYL ND, PERCUMYL ND-50E), 1,1,3,3-tetramethylbutyl peroxyneodecanoate (PEROCTA ND, PEROCTA ND-50E), t-hexyl peroxyneodecanoate (PERHEXYL ND, PERHEXYL ND-50E), t-butyl peroxyneodecanoate (PERBUTYL ND, PERBUTYL ND-50E), t-butyl peroxyneoheptanoate (PERBUTYL NHP), t-hexyl peroxypivalate (PERHEXYL PV, PERHEXYL PV-50E), t-butyl peroxypivalate (PERBUTYL PV, PERBUTYL PV-40E), 1,1,3,3-tetramethylbutyl peroxy-2-ethylhexanoate (PEROCTA O), 2,5-dimethyl-2,5-di(2-ethylhexanoylperoxy)hexane (PERHEXA 25O), t-hexyl peroxy-2-ethylhexanoate (PERHEXYL O, PERCURE HO (N)), t-butyl peroxy-2-ethylhexanoate (PERBUTYL O, PERCURE O), t-hexyl peroxyisopropylmonocarbonate (PERHEXYL I), t-butyl peroxy-3,5,5-trimethylhexanoate (PERBUTYL 355), t-butyl peroxylaurate (PERBUTYL L), t-butyl peroxy-2-ethylhexylmonocarbonate (PERBUTYL E), t-hexyl peroxybenzoate (PERHEXYL Z), t-butyl peroxyacetate (PERBUTYL A), a mixture of t-butyl peroxy-3-methylbenzoate and t-butyl peroxybenzoate (PERBUTYL ZT), t-butylperoxy benzoate (PERBUTYL Z), t-butylperoxy allylmonocarbonate (Peromer AC), 3,3',4,4'-tetra(t-butylperoxycarbonyl)benzophenone (BTTB-25), and 2,3-dimethyl-2,3-diphenylbutane (Nofmer BC-90). Among these, dialkyl type peroxides are preferable. Further, 2,5-dimethyl-2,5-di(t-butylperoxy)hexane is particularly preferable. In general, the type and amount used of the organic peroxide are selected in consideration of the amount of active -O-O-, the decomposition temperature, and the like.

The number average molecular weight of the above polymer having a group comprising a hydrogen atom capable of interacting with -CO-, the nitrogen atom, or the halogen atom may be, for example, 500 to 1,000,000, preferably 1,000 to 500,000, more preferably 2,000 to 300,000, still more preferably 2,000 to 250,000, and for example, 3,000 to 250,000.

For example, the above polymer may be crystalline or amorphous. In one aspect, in a differential scanning thermal analysis of the polymer, the polymer may be determined as a crystalline polymer when a crystallization temperature is observed, and the polymer may be determined as an amorphous polymer when a crystallization temperature is not observed. In one aspect, the above polymer is crystalline. In another aspect, the above polymer is amorphous.

The above polymer preferably has at least one of a glass transition temperature and a melting point at 50°C or higher. In other words, it is preferable that the glass transition temperature of the above polymer be 50°C or higher or the melting point of the above polymer be 50°C or higher. Specifically, when the above polymer is a crystalline polymer, the polymer has both the glass transition temperature and the melting point, so that at least one of the glass transition temperature and the melting point is only required to be 50°C or higher, and when the above polymer is an amorphous polymer, the polymer has only the glass transition temperature, so that the glass transition temperature is only required to be 50°C or higher. When the above polymer has at least one of the glass transition temperature and the melting point at 50°C or higher, the heat resistance of the composite to be obtained is favorable. For example, the above polymer may have at least one of the glass transition temperature and the melting point at 100°C or higher and 400°C or lower, and may further have at least one of the glass transition temperature and the melting point at 150°C or higher and 300°C or lower.

For example, the above polymer may have a blocked moiety at an end or may not have a blocked moiety. The blocked moiety may be a C₆₋₃₀ aromatic hydrocarbon group optionally having one or more substituents or a C₆₋₃₀ cycloaliphatic hydrocarbon group optionally having one or more substituents. Examples of the above blocked moiety include a dinitrophenyl group; cyclodextrin; an adamantyl group; a trityl group; fluorescein; pyrene; an alkyl group, an alkoxy group, a hydroxy group, a halogen atom, a phenyl group having one or more selected from the group consisting of a cyano group, a sulfonyl group, a carboxy group, an amino group, and a phenyl group as a substituent; and steroid, one or more selected from the group consisting of a dinitrophenyl group, cyclodextrin, an adamantyl group, a trityl group, fluorescein, and pyrene are preferable, and one or more selected from the group consisting of an adamantyl group and a trityl group are more preferable. The number of blocked moieties contained in the above polymer may be one or more and two or less.

The number average molecular weight of the above polymer may be, for example, 500 to 1,000,000, preferably 1,000 to 700,000, more preferably 2,000 to 500,000, still more preferably 2,000 to 300,000, and for example, 3,000 to 300,000.

In one aspect, it is preferable that the above polymer comprises a polymer comprising one or more selected from the group consisting of -CO-, a nitrogen atom, and a halogen atom, and the above cyclic compound comprises a polymer having a group comprising a hydrogen atom capable of interacting with -CO-, the nitrogen atom, or the halogen atom. In such an aspect, it is preferable that the above polymer comprises a polymer comprising one or more selected from the group consisting of - CO-, a nitrogen atom, and a halogen atom, and the above cyclic compound comprises a compound represented by any one of the above formula (1-B) and formula (3-B); and it is more preferable that the above polymer comprises a polymer comprising one or more selected from the group consisting of -CO-, a nitrogen atom, and a halogen atom, and the above cyclic compound comprises a compound represented by the above formula (1-B). In such an aspect, one or more of R^{3b} and R^{4b} are preferably hydrogen atoms in the formula (1-B).

In another aspect, it is preferable that the above polymer comprises a polymer having a group comprising a hydrogen atom capable of interacting with -CO-, the nitrogen atom, or the halogen atom, and the above cyclic compound comprises one or more selected from the group consisting of -CO-, a nitrogen atom, and a halogen atom. In such an aspect, it is preferable that the above polymer comprises a polymer having a group comprising a hydrogen atom capable of interacting with -CO-, the nitrogen atom, or the halogen atom, and the above cyclic compound comprises a compound represented by either the above formula (2) or (3); it is more preferable that the above polymer comprises a polymer having an unsaturated bond or a hydroxyl group-containing polymer or an NH group-containing polymer, and the above cyclic compound comprises a compound represented by either the above formula (2) or (3); it is still more preferable that the above polymer comprises a diene-based polymer, and the above cyclic compound comprises a compound represented by either the above formula (2) or (3), and it is even more preferable that the above polymer comprises a polymer having a repeating structural unit represented by the formula (B5), and the above cyclic compound comprises a compound represented by the above formula (2).

The pyrolysis temperature of the above composite is preferably 170°C or higher, more preferably 200°C or higher, and may be, for example, 400°C or lower. The composite of the present disclosure has favorable heat resistance and can suitably be used in applications required for high heat resistance.

In the present disclosure, the pyrolysis temperature is defined as the temperature at the time when, in thermogravimetric measurement of about 10 mg of a sample under a nitrogen atmosphere at a nitrogen flow rate of 200 mL/min, the mass of a measurement object is decreased by 5 mass% as compared with the mass of the measurement object before initiation of the measurement.

Although it should not be construed as being limited to specific theory, the pyrolysis temperature is largely improved in the composite of the present disclosure by forming a composite with a significantly small amount of cyclic compound with respect to the polymer due to the occurrence of an interaction between the polymer and the cyclic compound. For example, when the amount of the cyclic compound is 10 parts by mass or less per 100 parts by mass of the polymer, the difference in the pyrolysis temperature of the composite to be obtained and the pyrolysis temperature of the polymer may preferably be 30°C or more, and more preferably 50°C or more.

Where tₓ indicates the pyrolysis temperature of the above composite and t_{y} indicates a lower one of the pyrolysis temperature of the cyclic compound before formation of the above composite and the pyrolysis temperature of the fluorine-containing polymer before formation of the above composite, tₓ - t_{y} is preferably 50°C or more, may be 50°C or more and 300°C or less, and further, 55°C or more and 250°C or less.

Since the above polymer is interacted with the above cyclic compound by hydrogen bonding, the above composite is hardly decomposed, for example, even when being mixed with a solvent. Where w₀ indicates the mass of the composite before mixing and w₁ indicates the mass of the composite after mixing in the case of mixing the above composite with a good solvent of the polymer, w₁/w₀ may preferably be 4 mass% or more, more preferably 10 mass% or more, sill more preferably 20 mass% or more, and for example, 80 mass% or less. The above mass of the composite before mixing may be the total mass of the polymer and cyclic compound to be used in the production of the composite.

The above good solvent of the polymer is not limited, as long as the solvent dissolves 10 mass% or more of the polymer. Examples thereof include chloroform and trichloroethylene in the case of polylactic acid (PLA), and ethyl acetate and chloroform in the case of PBR. When the above cyclic compound and the above composite are mixed with each other, the good solvent of the above cyclic compound may preferably be 500 parts by mass or more and 10,000 parts by mass or less, more preferably 300 parts by mass or more and 5,000 parts by mass or less, sill more preferably 150 parts by mass or more and 1,000 parts by mass or less per 1 part by mass of the above cyclic compound.

### <Method for producing composite>

The above composite may be produced by a production method comprising contacting the above polymer and the above cyclic compound represented by the formula (I) in an absence of a solvent to obtain the composite.

According to the production method of the present disclosure, the polymer and the cyclic compound are contacted in an absence of a solvent, and thus, inclusion of the polymer by the cyclic compound easily progresses regardless of the degree of progress of the formation of a composite. When contacting is performed in a solvent, inclusion of the polymer by the cyclic compound may change the solubility in the solvent and the formation of a composite may not progress. Since no solvent is used in the production method of the present disclosure, a desired composite is easily obtained without being influenced by the change in solubility accompanied by the progress of the formation of a composite.

The contacting method is not limited, and examples thereof include methods using a ball mill, a planetary centrifugal mixer, a homogenizer, ultrasonic dispersion, or the like.

The contacting is preferably performed at a temperature higher than at least one of the glass transition temperature and the melting point of the polymer. This makes it easy for the polymer to be freely deformed, so that the composite can be more efficiently produced.

The contacting is preferably performed at a temperature preferably 5°C or more, and more preferably 10°C or more higher than at least one of the glass transition temperature and the melting point of the polymer. The difference between the temperature at which the contacting is performed and at least one of the glass transition temperature and the melting point of the polymer may be, for example, 50°C or less, and further 30°C or less.

In the production method of the present disclosure, the polymer and the cyclic compound are contacted with each other in an absence of a solvent, but the production method is not limited thereto, and contacting may be performed in the presence of a solvent. Examples of such a solvent include water, ethanol, dimethylformamide, toluene, methanol, chlorobenzene, diethylformamide, dimethyl sulfoxide, water, hydrogen peroxide, methylamine, a sodium hydroxide solution, N-methylpyrrolidone ether, acetonitrile, benzyl chloride, triethylamine, or ethylene glycol, or a mixture thereof.

### <Composition>

A composition comprising the above composite is also included in the technical scope of the present disclosure.

For example, such a composition may further comprise one or more selected from the group consisting of a resin, a solvent, and a further additive in addition to the above composite.

In such a composition, the content of the above composite may preferably be 0.1 mass% or more and less than 100 mass%, and more preferably 1 mass% or more and 99 mass% or less per 100 mass% of the solid content of the composition.

Examples of the above resin include an acrylic resin, a polyurethane resin, a polyolefin resin, a polyester resin, a polyamide resin, a styrene resin, a vinyl ether resin, a polyvinyl alcohol resin, a polycarbonate resin, and a polysulfone resin.

Examples of the above solvent include water, ethanol, dimethylformamide, toluene, methanol, chlorobenzene, diethylformamide, dimethyl sulfoxide, water, hydrogen peroxide, methylamine, a sodium hydroxide solution, N-methylpyrrolidone ether, acetonitrile, benzyl chloride, triethylamine, or ethylene glycol, or a mixture thereof.

Examples of the above additive include an emulsifier, an antifoaming agent, a surfactant, a leveling agent, a thickening agent, a viscoelasticity adjusting agent, an antifoaming agent, a wetting agent, a dispersant, an antiseptic agent, a plasticizer, a penetrating agent, a fragrance, a fungicide, a miticide, an antifungal agent, an ultraviolet absorber, an antioxidant, an antistatic agent, a flame retarder, a dye, and a pigment.

For example, the above composition may be in a powder form or in a liquid form. In one aspect, the above composition is in a powder form, and in another aspect, the above composition is in a liquid form.

### Examples

Hereinafter, the present disclosure will be more specifically described with reference to Examples below, but the present disclosure is not limited thereto.

### (Synthesis Example 1)

In a 2 L single neck round bottomed flask, 25.0 g of a compound represented by the formula (1-2) and 350 mL of MeCN were put, and a solution obtained by dissolving 122.9 g of oxone (2KHSO₅·KHSO₄·K₂SO₄) in 350 mL of water was added thereto.

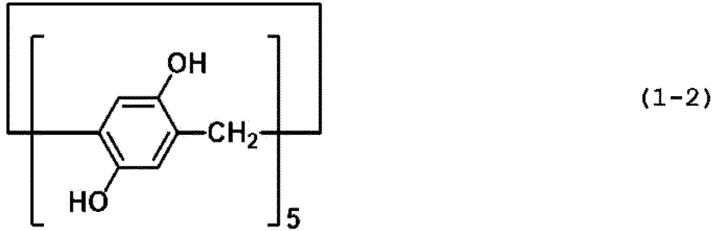

Then, 7.5 mL of iodobenzene was added, and the mixture was vigorously stirred at room temperature for 48 hours. Thereafter, the reaction liquid was poured into water, and the mixture was filtered by suction. The obtained yellow precipitate was washed with large amounts of water and methanol and dried.

First, 18.264 g of the washed and dried precipitate was dissolved in 350 mL of boiled 1,1,2,2-tetrachloroethane, and the insoluble matter was removed by suction filtration. The obtained red transparent filtrate was allowed to stand still at room temperature for 6 hours, and then allowed to stand still at 6 to 10°C for 8 hours. The precipitated fine crystal was filtered by suction, washed with a small amount of 1,1,2,2-tetrachloroethane three times, further washed with a small amount of methanol three times, and dried to obtain a compound represented by the formula (3-2).

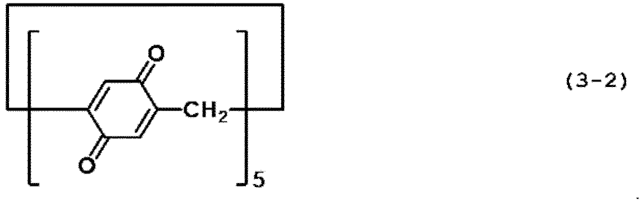

Obtaining of the compound represented by the formula (3-2) was demonstrated by ¹H NMR, ¹³C NMR, a time-of-flight mass spectrometer (ESI-TOF-MS), melting point measurement, and IR measurement.
¹H NMR (500.13 MHz, TFA-d, ppm): δ = 6.93(s, 10H, CH), 3.61 (s, 10H, CH₂).
¹³C NMR (125.72 MHz, TFA-d, ppm): δ = 190.5 (s, C=O), 146.8(s, C-CH₂), 138.1 (CH), 28.0 (CH₂).
HRMS (ESI-TOF-MS):
m/z [M+Na]+ calculated for C₃₅H₂₁O₁₀: 601.1129; found: 601.1132
m/z [M + Na]+ calcd for C₃₅H₂₀O₁₀Na: 623.0949; found: 623.0930
Melting point: The compound showed no melting point and was degraded at over 250°C.
IR (Nujol mull, cm⁻¹): 1,654, 1,610, 1,461, 1,377, 1,286, 1,250, 1,125, 921, 722

The structures of cyclic compounds used in Examples are shown.

| | |
|---|---|
| P5Q | 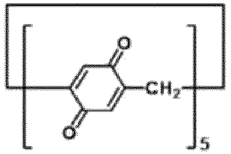 |
| C2P5A | 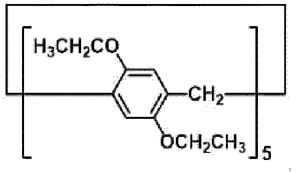 |
| P5OH | 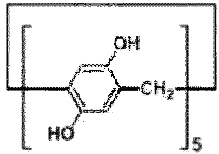 |

The polymers used in Examples and Comparative Examples are shown.

PBR: Commercially available polybutadiene having a weight average molecular weight of 5,000, cis-and trans-1,4 of 80%, and a vinyl group of 20% was used. A typical structural formula is shown below.

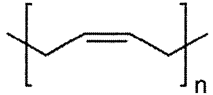

PVDF1: PVDF VP-832 manufactured by Daikin Industries, Ltd., melting point 178°C, MFR 230°C, 10 kgf: 3.15 g/10 min, molecular weight Mw 200,000 (GPC)

PVDF2: PVDF Kyner HSV900 manufactured by Arkema, melting point 162°C, MFR 230°C, 10 kgf: 0.2 g/10 min

PLA: Commercially available polylactic acid having a weight average molecular weight of 10,000 to 18,000, a melting point of 140°C, and a glass transition temperature of 51°C was used. The structural formula is shown below.

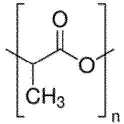

High-melting-point PLA (PLLA): A commercially available one having a ratio of an optical isomer L-form of 99% or more and a melting point of 180°C was used. The structural formula is shown below.

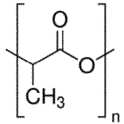

PeC: Commercially available poly-ε-caprolactone having a weight average molecular weight of 10,000 and a melting point of 60°C was used. The structural formula is shown below.

-

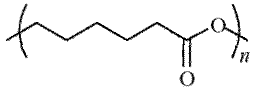

Measurement methods used in Examples are shown.

### (1) NMR

NMR is measured using an NMR measurement apparatus (JNM-ECZ500R or JEOL JNM-ECS400) manufactured by JEOL Ltd.

¹H-NMR measurement conditions: 500 MHz (tetramethylsilane = 0 ppm)

### (2) IR analysis

IR analysis is performed using a Fourier transform infrared spectrophotometer (IRPrestige-21) manufactured by SHIMADZU CORPORATION at room temperature.

### (3) Pyrolysis temperature

About 10 mg of a sample was measured using a TG/DTA analyzer (thermogravimetric differential thermal analyzer) (STA7200) manufactured by Hitachi High-Tech Corporation. in a nitrogen gas atmosphere under the measurement conditions of a nitrogen flow rate of 200 mL/min, a temperature range of 23°C to 600°C, and a temperature-increasing rate of 10°C/min. The pyrolysis temperature was defined as the temperature at the time when the mass of a measurement object was decreased by 5% as compared with the mass of the measurement object before initiation of the measurement.

### (4) DSC

Using a DSC (differential scanning calorimeter: Hitachi High-Tech Corporation., DSC7020), the temperature was increased (first run), reduced, and increased (second run) under the conditions of 10°C/min in a temperature range of 30°C to 200°C.

### (5) X-ray diffraction

X-ray diffraction was measured using an Automated Multipurpose X-ray Diffractometer (SmartLab: manufactured by Rigaku Holdings Corporation) under the following conditions.

Measurement angle: 10 to 30° (light source: Cu/Kα, wavelength: 1.5418 Å)

### (6) Rotational viscometer

Measurement was performed using, as a measurement apparatus, a Discovery HR20 rotational rheometer manufactured by TA Instruments with an environment test chamber and a LN2 low temperature fit as temperature control systems and an 8 mmφ parallel plate (manufactured by SUS Corporation.) as geometry.

The measurement conditions were set as follows.
Measurement temperature range: -120°C to 50°C
Temperature-increasing rate: 5°C/min
Frequency: 1 Hz, constant
Strain: 0.1% (the low elastic modulus region is automatically variable according to the stress)

The glass transition temperature was determined from the peak temperature of tanδ calculated from the obtained storage modulus and loss modulus.

### (7) Residual ratio

The total mass of the polymer and cyclic compound used in the production of the composite was defined as w₀. Then, the mass after the obtained composite was mixed with a good solvent of the polymer in an amount of 100 times the mass of w₀ and the solvent was removed, was defined as w₁. The residual ratio of the polymer was calculated as w₁/w₀ (mass%).

### Example 1 (Melt formation of composite of PLA and P5OH)

In a 5 mL glass tube, 0.36 g (5 mmol) of PLA was put, and the temperature thereof was then increased to 150°C to melt PLA completely. To the tube, 0.061 g (0.1 mmol) of P5OH was added as the cyclic compound, the mixture was allowed to stand still at 150°C for 15 hours, 24 hours, or 65 hours and then allowed to cool to room temperature to obtain a solid composite. The obtained composite was washed with 90 mL of chloroform serving as a good solvent of PLA, and as a result, an undissolved composite was observed. This is considered due to the change of the solubility by inclusion of P5OH in PLA. Since not-included PLA is flowed out in the washing treatment by the good solvent, only the included composite was successfully purified.

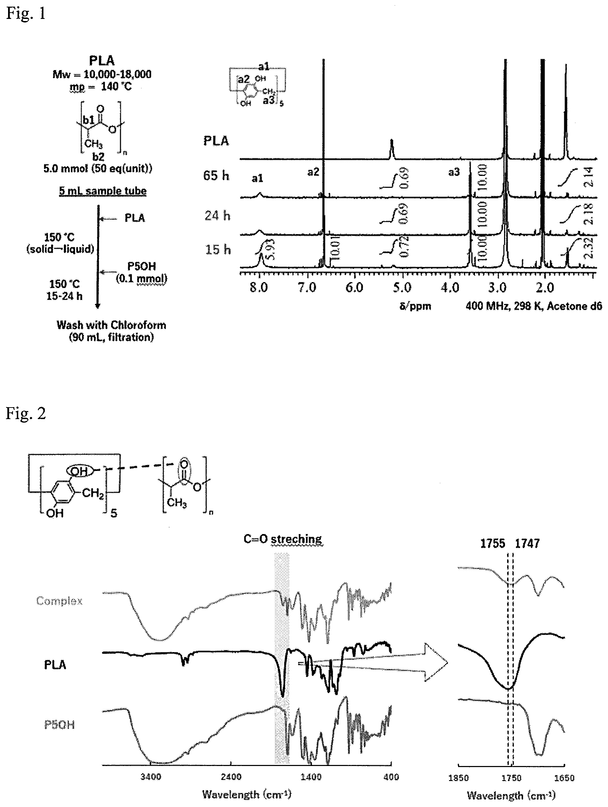

The composite after purification was dissolved in acetone d6 to measure ¹H-NMR, and as a result, peaks based on PLA and P5OH were observed in each sample. FIG. 1 shows the results. For comparison, FIG. 1 also shows the results of PLA only and the positions of the chemical shifts of the hydrogen atoms of P5OH.

The above results demonstrated that the included composite was successfully obtained in the treatment under the conditions of 150°C for at least 15 hours.

Although the amount washed with chloroform was doubled to 180 mL, a solid was obtained as above, and peaks based on PLA and P5OH were observed by NMR.

A ratio of the P5OH unit and the repeating unit of PLA was determined by the integral ratio of NMR and found to be P5OH:PLA = 1:0.7 (mole ratio). The ratio was calculated from a ratio of the integral value of the hydrogen of b1 of PLA having a chemical shift at about 5.2 ppm (corresponding to one H atom) to the integral value of the hydrogen of a3 of P5OH having a chemical shift at about 3.6 ppm (corresponding to 10 H atoms).

### Example 2 (Demonstration of interaction of PLA with P5OH)

IR of the composite obtained in Example 1 was measured. For comparison, the results of PLA only and P5OH only are also shown. In addition, an enlarged view of a carbonyl stretching vibration absorption band is also shown.

P5OH having no carbonyl group has no absorption at around 1,750 cm⁻¹. Meanwhile, PLA having carbonyl groups exhibited an absorption peak of C=O at 1,755 cm⁻¹. The peak of C=O of the composite obtained in Example 1 was found at 1,747 cm⁻¹, and the low wavenumber shift of absorption of C=O was observed. This is considered to be the results indicating the interaction by the hydrogen bond of a C=O group of PLA with an OH group of P5OH serving as the cyclic compound. It is considered that, since the polymer side has C=O serving as a proton-accepting group and the cyclic compound has an OH group serving as a proton-donating group, the included composite was bound by a hydrogen bond, the solubility changed, so that the composite was not dissolved when being washed with chloroform serving as a good solvent of the polymer only.

Since the end of the polymer is not blocked, the composite of this time has a pseudorotaxane structure, and the cyclic compound is considered to be hardly dropped out by the above interaction (hydrogen bond). After inclusion of a cyclic compound, polymer end blocking is required to modify a polymer end with a bulky compound in a subsequent reaction, so that the operation may be significantly complex. Since the polymer end blocking is unnecessary, stabilization of the structure by the interaction is industrially highly valuable.

### Example 3 (Formation of composite by mixing solution of PLA and P5OH)

10 mg (0.016 mmol) of P5OH and 23.6 mg (0.328 mmol) of PLA (P5OH:PLA = 1:20 (mole ratio)) were uniformly dissolved in 1 mL of acetone, and the mixture was dried at 40°C for 2 hours. Thereafter, the mixture was heated at 150°C for 15 hours to obtain a composite. The composite was uniform and had a Tg of 58.6°C by DSC. A composite of PSOH:PLA = 1:15 (mole ratio) was also produced, measured by DSC, and found to have a Tg of 60.0°C.

The glass transition temperature of PLA only is about 51°C, and thus, it is considered that the formation of a composite (inclusion) generated the interaction of the cyclic compound with the polymer, which increased the rigidity of the main chain of the polymer, so that the glass transition temperature was increased by about 10°C.

### Example 4 (Composite of high-melting-point PLA and P5OH)

In a 5 mL glass tube, a solution obtained by dissolving 0.36 g (5 mmol) of high-melting-point PLA (PLLA) (melting point 180°C) in 1 mL of acetone and a solution obtained by dissolving 0.061 g (0.1 mmol) of P5OH serving as the cyclic compound in 1 mL of acetone were put, acetone was then removed by drying under vacuum, the temperature of the mixture was increased to 180°C to completely melt the mixture, and the mixture was allowed to stand still at 180°C for 15 hours and then cooled to room temperature to obtain a solid composite. The obtained composite was washed with 300 mL of trichloroethylene serving as a good solvent of PLLA and purified.

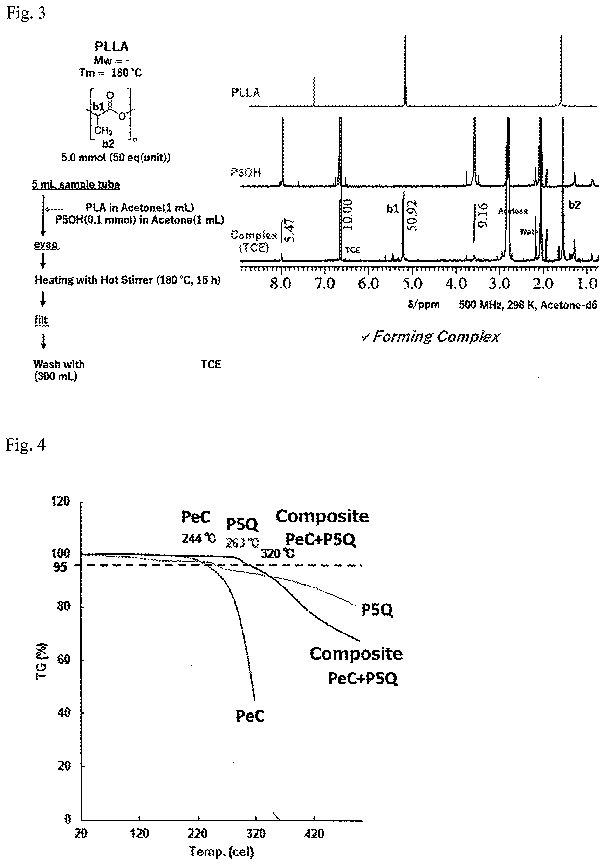

The composite after purification was dissolved in acetone d6 to measure ¹H-NMR, and as a result, peaks based on PLLA and P5OH were observed. FIG. 3 shows the results. For comparison, the results of PLA only and P5OH only are also shown.

### Example 5 (Composite of PeC and P5Q melting method)

In a 5 mL glass tube, 0.57 g (5 mmol) of PeC was put, and the temperature thereof was then increased to 70°C to melt PeC completely. Into the tube, 0.06 g (0.1 mmol) of P5Q was added as the cyclic compound, and the mixture was allowed to stand still at 70°C for 15 hours and then allowed to cool to room temperature to obtain a solid composite. The obtained composite was washed with 15 mL of acetone serving as a good solvent of PeC five times in total, and centrifugation (2,000 rpm, 10 minutes) was performed three times using acetone as a dispersion medium for purification. The composite after purification was dissolved in chloroform d to measure ¹H-NMR, and as a result, peaks based on PeC and P5Q were observed.

A ratio of the P5Q unit and the repeating unit of PeC was determined by the integral ratio of NMR and found to be P5Q:PeC = 1:2.7 (mole ratio).

### Example 6 (Resistant to pyrolysis of composite of PeC and P5Q)

The pyrolysis temperature of the composite of PeC and P5Q obtained in Example 5 was determined by TGA. For comparison, FIG. 4 also shows the results of PeC only and P5Q only. The pyrolysis temperature of PeC was 244°C, the pyrolysis temperature of P5Q was 263°C, the pyrolysis temperature of the composite was 320°C, and thus, the pyrolysis temperature of the composite was improved 50°C or more as compared with PeC only and P5Q only. Although the reason is unclear, it is considered that the heat resistance of the composite was improved by inclusion as compared with the heat resistance of PeC only and P5Q only.

### Example 7 (Composite of PeC and P5OH)

In a 5 mL glass tube, a solution obtained by dissolving 0.57 g (5 mmol) of PeC and 0.061 g (0.1 mmol) of P5OH serving as the cyclic compound in 5 mL of acetone was put, acetone was then removed by drying under vacuum, the temperature of the mixture was increased to 70°C to completely melt the mixture, and the mixture was allowed to stand still at 70°C for 15 hours and then cooled to room temperature to obtain a solid composite. The obtained composite was washed with 300 mL of chloroform serving as a good solvent of PeC, and as a result, an undissolved composite was observed. This is considered due to the change of the solubility by inclusion of P5OH in PeC. Since not-included PeC was distilled off in this treatment, the composite was successfully purified.

The composite after purification was dissolved in acetone d6 to measure ¹H-NMR, and as a result, peaks based on PeC and P5OH were observed as expected.

A ratio of the PSOH unit and the repeating unit of PeC was determined by the integral ratio of NMR and found to be PSOH:PeC = 1:6.6 (mole ratio).

### Example 8 (Composite of PBR and P5Q)

In a 5 mL glass tube, 0.27 g (5 mmol) of PBR (liquid polymer) was put, 0.06 g (0.1 mmol) of P5Q was then added as the cyclic compound at room temperature, and the mixture was allowed to stand still at room temperature for 15 hours to obtain a liquid composite. The obtained composite was washed with 30 mL of ethyl acetate serving as a good solvent of PBR 3 times, 4 times, or 8 times in total to obtain a purified product.

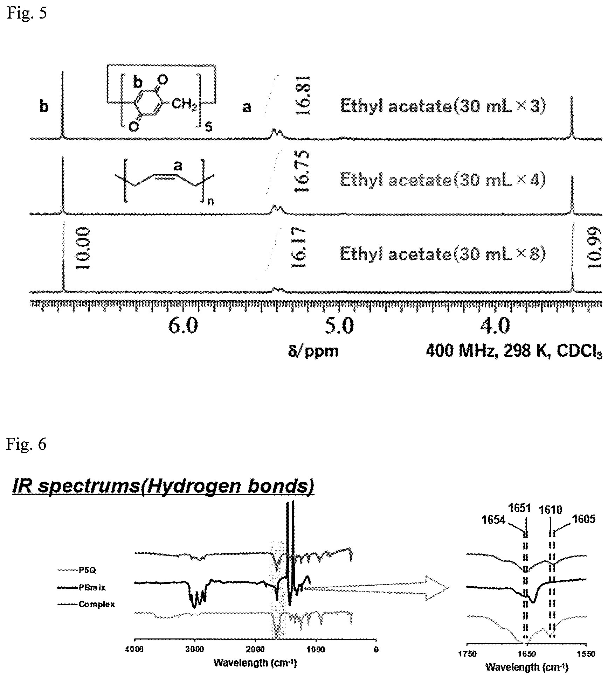

Each purified product was dissolved in chloroform d to measure ¹H-NMR, and as a result, peaks based on PBR and P5Q were observed. FIG. 5 shows the results.

Although the washing times with ethyl acetate were changed from 3 to 10 times, there was almost no difference in the chart.

A ratio of the P5Q unit and the repeating unit of PBR was determined by the integral ratio of NMR and found to be P5Q:PBR = 1:8.3. The ratio was calculated from a ratio of the integral value of the hydrogen of a of PBR at about 5.3 ppm (corresponding to two H atoms) to the integral value of the hydrogen of b of P5Q at about 6.8 ppm (corresponding to 10 H atoms).

### Example 9 (Demonstration of interaction of PBR with P5Q)

IR of the carbonyl region of the composite obtained in Example 8 was measured. For comparison, FIG. 6 also shows the results of PBR only and P5Q only.

PBR having no carbonyl group has no absorption at 1,650 cm⁻¹. Meanwhile, P5Q having carbonyl groups exhibited absorption peaks of C=O at 1,654 cm⁻¹ and 1,610 cm⁻¹. The peaks of the composite obtained in Example 9 were found at 1,651 cm⁻¹ and 1605 cm⁻¹, and the low wavenumber shift was observed. This is considered to be the results indicating the interaction by the hydrogen bond of a C=C-H group of PBR with a C=O group of P5Q serving as the cyclic compound. It is considered that, since the polymer side has C=C-H serving as a proton-donating group and the cyclic compound has a C=O group serving as a proton-accepting group, the polymer and the cyclic compound were effectively bound by a hydrogen bond, the solubility changed, so that the composite was not dissolved by washing with a good solvent of the polymer only. Since the end is not blocked, the composite of this time has a so-called pseudorotaxane structure, and the cyclic compound is considered to be hardly dropped out by the interaction. End blocking is required to modify an end with a bulky compound in a subsequent reaction, and thus, when the end blocking is unnecessary, the composite is industrially highly valuable.

### Comparative Example 1 (Composite of PBR and P5OH)

In a 5 mL glass tube, 0.27 g (5 mmol) of PBR (liquid polymer) was put, 0.061 g (0.1 mmol) of PSOH was then added as the cyclic compound at room temperature, and the mixture was allowed to stand still at room temperature for 15 hours to obtain a liquid mixture. The obtained mixture was washed with 30 mL of chloroform serving as a good solvent of PBR four times in total to obtain a purified product.

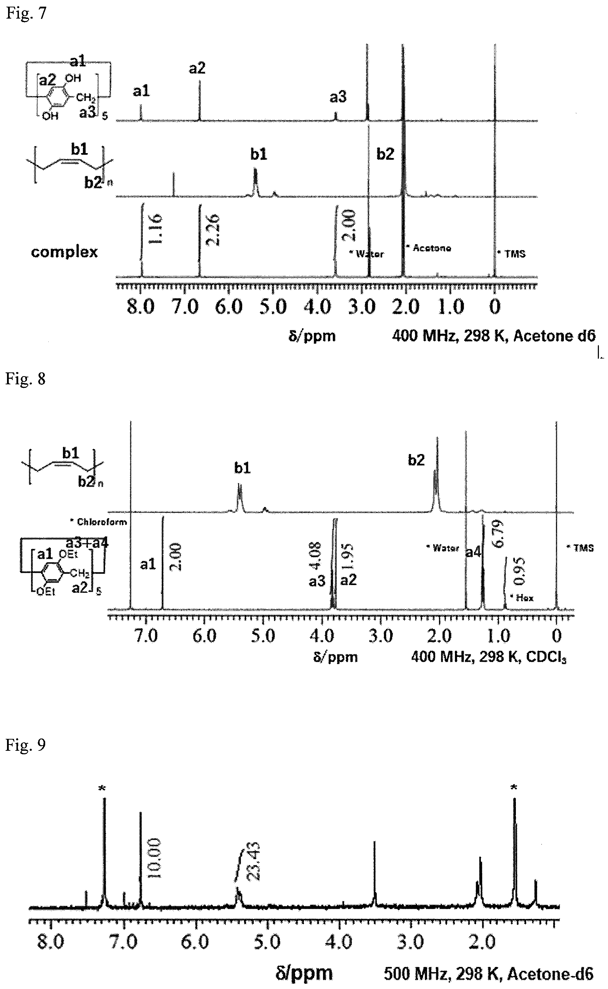

The purified product was dissolved in acetone d6 to measure ¹H-NMR, and as a result, peaks based on PBR were not observed and no composite was obtained. FIG. 7 shows the results. For comparison, the results of P5OH only and PBR only are also shown.

### Comparative Example 2 (Composite of PBR and C2P5A)

In a 5 mL glass tube, 0.27 g (5 mmol) of PBR (liquid polymer) was put, 0.089 g (0.1 mmol) of C2P5A was then added as the cyclic compound at room temperature, and the mixture was allowed to stand still at room temperature for 15 hours to obtain a liquid mixture. The obtained mixture was washed with 30 mL of hexane serving as a good solvent of PBR four times in total to obtain a purified product.

The purified product was dissolved in chloroform d to measure ¹H-NMR, and as a result, peaks based on PBR were not observed and no composite was obtained. FIG. 8 shows the results. For comparison, the results of PBR only are also shown.

### Example 10 (Composite 2 of PBR and P5Q)

In a 5 mL glass tube, 2 g (36.7 mmol) of PBR (liquid polymer) was put, 0.2 g (0.33 mmol) of P5Q serving as the cyclic compound dissolved in 30 mL of dichloromethane was then added at room temperature, and the mixture was allowed to stand still at room temperature for 15 hours to obtain a liquid composite. The obtained composite was washed with 200 mL of ethyl acetate serving as a good solvent of PBR to obtain a purified product.

The purified product was dissolved in acetone d6 to measure ¹H-NMR, and as a result, peaks based on PBR and P5Q were observed. FIG. 9 shows the results.

A ratio of the P5Q unit and the repeating unit of PBR was determined by the integral ratio of NMR and found to be P5Q:PBR = 1:12.2 (mole ratio). The obtained composite was dried under vacuum at 50°C for 12 hours. The yield was 91 mg.

As compared with PBR (2 g) and P5Q (0.2 g) before forming a composition, the obtained composite was 91 mg. When the residual ratio was calculated as w1/w0 (mass%) where the mass of the composite before mixing w0 was 2.2 g and the mass of the composite after mixing w1 was 0.091 g, the residual ratio was 4.13 mass%.

### Example 11 (Composite 3 of PBR and P5Q solution method)

In a 5 mL sample tube, 0.259 g (4.8 mmol) of PBR and 0.01 g (0.016 mmol) of P5Q were put, 2 g of dichloromethane was added as a solvent, and the mixture was uniformly dissolved using an ultrasonic cleaning machine. The mixture was concentrated using a rotary evaporator under the conditions of 40°C and then dried under vacuum at 50°C to obtain a composite.

### Example 12 (Composite 4 of PBR and P5Q solution method)

A composite was obtained in the same manner as in Example 12, except that the amount of PBR was changed to 0.518 g (9.6 mmol).

### Example 13 Comparison of pyrolysis temperature by TGA

The pyrolysis temperatures of the composites obtained in Examples 10 to 12 were determined by the TGA method. Here, the 5% weight loss temperature was defined as the pyrolysis temperature.

The results are shown in Table.

**[Table 1]**

| | Cyclic compound | Polymer | Pyrolysis temperature |
|---|---|---|---|
| | P5Q (mass%) | PBR (mass%) | °C |
| Example 10 | 48.5 | 51.5 | 344 |
| Example 11 | 3.7 | 96.3 | 417 |
| Example 12 | 1.9 | 98.1 | 425 |
| only PBR | 0 | 100 | 372 |
| only P5Q | 100 | 0 | 263 |

In the results of Examples 11 and 12, addition of a significantly small amount of P5Q largely increased the pyrolysis temperature of PBR. Although the exact reason is unclear, it is considered that the included structure and the interaction (by the hydrogen bond, already demonstrated in Example 10) improved the heat resistance. It was considered that, in Example 11 having a high weight ratio of P5Q, the pyrolysis temperature was slightly reduced due to the influence of the pyrolysis of P5Q itself.

### Example 14 Comparison of glass transition temperature and storage modulus using rotational viscoelasticity measurement apparatus

The glass transition temperatures of the composites obtained in PBR only, Example 11, and Example 12 were evaluated using a rotational viscoelasticity measurement apparatus. The glass transition temperatures were determined from the peak temperatures of tanδ. The results are shown in the following table.

**[Table 2]**

| | Cyclic compound | Polymer | Glass transition temperature |
|---|---|---|---|
| | P5Q | PBR | |
| | (mass%) | (mass%) | °C |
| Example 11 | 3.7 | 96.3 | -88.9 |
| Example 12 | 1.9 | 98.1 | -89.8 |
| only PBR | 0 | 100 | -91.1 |

It was found that as the amount included by P5Q increases, the glass transition temperature increases. This was considered due to the effect of making the main chain rigid by the inclusion and the interaction.

### Examples 15 to 17 (Formation of composite of PLA and PSOH solution method)

Composites were obtained in the same manner as in Example 12, except that PLA was used instead of PBR, P5OH was used instead of P5Q, and the amount ratio thereof was changed according to the following table.

**[Table 3]**

| | Amount mixed | | Polymer:cyclic compound | |
|---|---|---|---|---|
| | Polymer | Cyclic compound | Mole ratio | Mass ratio |
| | PLA | P5OH | | |
| Example 15 | 23.6 mg | 10 mg | 20:1 | 70:30 |
| Example 16 | 118 mg | 10 mg | 100:1 | 92:8 |
| Example 17 | 236 mg | 10 mg | 200:1 | 96:4 |

### Examples 18 to 21 (Composite of PeC and P5Q solution method)

Composites were obtained in the same manner as in Example 12, except that PeC was used instead of PBR, and the amount ratio thereof was changed according to the following table.

**[Table 4]**

| | Amount mixed | | Polymer:cyclic compound | |
|---|---|---|---|---|
| | Polymer | Cyclic compound | Mole ratio | Mass ratio |
| | PeC | P5Q | | |
| Example 18 | 19 mg | 10 mg | 10:1 | 65:35 |
| Example 19 | 95 mg | 10 mg | 50:1 | 90.5:9.5 |
| Example 20 | 190 mg | 10 mg | 100:1 | 95:5 |
| Example 21 | 380 mg | 10 mg | 200:1 | 97.5:2.5 |

### Examples 22 to 25 (Composite of PeC and P5OH solution method)

Composites were obtained in the same manner as in Example 12, except that PeC was used instead of PBR, P5OH was used instead of P5Q, and the amount ratio thereof was changed according to the following table.

**[Table 5]**

| | Amount mixed | | Polymer:cyclic compound | |
|---|---|---|---|---|
| | Polymer | Cyclic compound | Mole ratio | Mass ratio |
| | PeC | P5OH | | |
| Example 22 | 93.4 mg | 10 mg | 50:1 | 90:10 |
| Example 23 | 187 mg | 10 mg | 100:1 | 95:5 |
| Example 24 | 374 mg | 10 mg | 200:1 | 97.4:2.6 |
| Example 25 | 934 mg | 10 mg | 500:1 | 99:1 |

### Example 26 Comparison of pyrolysis temperature by TGA

The pyrolysis temperatures of the composites obtained in Examples 15 to 25 and Examples 1, 5, and 7 were determined by the TGA method. Here, the 5% weight loss temperature was defined as the pyrolysis temperature. The results are shown in Tables.

**[Table 6]**

| | Composition (mass%) | | Pyrolysis temperature |
|---|---|---|---|
| | Polymer | Cyclic compound | |
| | PLA | P5OH | °C |
| only P5OH | 0.0 | 100.0 | 119 |
| Example 1 | 7.6 | 92.4 | 176 |
| Example 15 | 70.2 | 29.8 | 271 |
| Example 16 | 92.2 | 7.8 | 293 |
| Example 17 | 95.9 | 4.1 | 284 |
| only PLA | 100.0 | 0.0 | 251 |

**[Table 7]**

| | Composition (mass%) | | Pyrolysis temperature |
|---|---|---|---|
| | Polymer | Cyclic compound | |
| | PeC | P5Q | °C |
| only P5Q | 0.0 | 100.0 | 263 |
| Example 5 | 33.9 | 66.1 | 320 |
| Example 18 | 65.5 | 34.5 | 330 |
| Example 19 | 90.5 | 9.5 | 350 |
| Example 20 | 95.0 | 5.0 | 356 |
| Example 21 | 97.4 | 2.6 | 354 |
| only PeC | 100.0 | 0.0 | 244 |

**[Table 8]**

| | Composition (mass%) | | Pyrolysis temperature |
|---|---|---|---|
| | Polymer | Cyclic compound | |
| | PeC | P5OH | °C |
| only P5OH | 0.0 | 100.0 | 119 |
| Example 7 | 55.2 | 44.8 | 333 |
| Example 22 | 90.3 | 9.7 | 346 |
| Example 23 | 94.9 | 5.1 | 345 |
| Example 24 | 97.4 | 2.6 | 344 |
| Example 25 | 98.9 | 1.1 | 340 |
| only PeC | 100.0 | 0.0 | 244 |

In each result, the initial pyrolysis temperature was significantly improved in the composite with a small amount of a cyclic compound as compared with a polymer only. Although the reason is unclear, it is considered that the effect of inclusion was exhibited.

For the above cyclic compounds and polymers, the charge density of each atom as described below was calculated from the electron density analysis (Gaussian) by the natural bond orbital (NBO) method. Upon calculation, the structural formula of the atom to be a calculation object was assumed using Gaussian 16, Revision A.03 (manufactured by Gaussian), B3LYP as a functional, and 6-31G(d) as basis function, and structure optimization calculation was performed to specify an optimum structure. Then, the electron density analysis (Gaussian) was performed by the natural bond orbital (NBO) method using the optimum structure to calculate the charge density. The calculation results are shown in Table 9.

Among the charge densities of the hydrogen atoms of -CH₂- in PeC, the charge density of the hydrogen atom contained in -CH₂- adjacent to -CO- is the maximum, and the charge density value of the hydrogen atom was described in Table 9.

**[Table 9]**

| Cyclic compound or polymer | Functional group | Atom | Charge density |
|---|---|---|---|
| P5Q | -CO- | Oxygen atom | -0.511 |
| P5OH | -OH | Hydrogen atom | 0.492 |
| C2P5A | -CH₃ | Hydrogen atom | 0.205 |
| PLA or PLLA | -CH₃ | Hydrogen atom | 0.243 |
| | -CO- | Oxygen atom | -0.594 |
| PeC | -CH₂- | Hydrogen atom | 0.270 |
| | -CO- | Oxygen atom | -0.579 |
| PBR | -CH₂- | Hydrogen atom | 0.241 |
| | =CH- | Hydrogen atom | 0.224 |

In the above Examples 1 to 4, 7, 15 to 17, and 22 to 25, P5OH is used as the cyclic compound, and P5OH comprises a hydrogen atom having a charge density of 0.492. In Examples 1 to 4 and 15 to 17, PLA or PLLA comprising an oxygen atom having a charge density of -0.594 is used as the polymer, and in Examples 7 and 22 to 25, PeC comprising an oxygen atom having a charge density of -0.579 is used. In each of these Examples, the formation of the composite was demonstrated, and the heat resistance and residual ratio of each obtained composite were demonstrated to be favorable.

In the above Examples 8 to 13, PBR is used as the polymer, and PBR comprises a hydrogen atom having a charge density of 0.224 or 0.241. In Examples 8 to 13, P5Q comprising an oxygen atom having a charge density of -0.511 is used as the cyclic compound. In each of these Examples, the formation of the composite was demonstrated, and the heat resistance and residual ratio of each obtained composite were demonstrated to be favorable.

In the above Examples 5 and 18 to 21, PeC is used as the polymer, and PeC comprises a hydrogen atom having a charge density of 0.270. In Examples 5 and 18 to 21, P5Q comprising an oxygen atom having a charge density of -0.511 is used as the cyclic compound. In each of these Examples, the formation of the composite was demonstrated, and the heat resistance and residual ratio of each obtained composite were demonstrated to be favorable.

Meanwhile, in Comparative Example 1, PSOH is used as the cyclic compound, and PBR is used as the polymer. Both the cyclic compound and the polymer used in Comparative Example 1 contain no proton acceptor, and the formation of a composite was not demonstrated.

In Comparative Example 2, P2P5A is used as the cyclic compound, and PBR is used as the polymer. Both the cyclic compound and the polymer used in Comparative Example 2 contain no proton acceptor, and the formation of a composite was not demonstrated.

### Example 27

### Results of crosslinking system of PBR using PBR/PSQ system

### (Method for producing premix product)

A solid P5Q was pulverized in a mortar in advance, and 0.8 g of P5Q was then weighed in a sample bottle with respect to 19.2 g of PBR, and mixed with a mixing rotor for 16 hours or more to obtain a premix product in a slurry form. As a sample having a different concentration, a premix product in which 3.6 g of P5Q was mixed with respect to 16.4 g of PBR was produced.

### (Method for producing kneaded sample)

Each produced premix product and PH25B (PERHEXA 25B; manufactured by NOF CORPORATION) were stirred with a spatula to obtain each kneaded sample. A kneaded sample of PBR and PH25B was also obtained.

The composition of each kneaded sample is shown in the following table.

**[Table 10]**

| Sample | PBR | PH25B | P5Q |
|---|---|---|---|
| | parts by mass | parts by mass | parts by mass |
| (1) PBR/PH25B | 100 | 1.5 | 0 |
| (2) PBR/PH25B/P5Q (4 mass%) | 96 | 1.5 | 4 |
| (3) PBR/PH25B/P5Q (18 mass%) | 82 | 1.5 | 18 |

### (Method for forming crosslinked elastomer sheet)

Each kneaded sample was flowed into a frame of 100 mm × 150 mm × 1 mm, dried under vacuum (defoamed) under the conditions of 50°C × 30 minutes, and pressed under the conditions of 170°C × 40 minutes to produce each crosslinked elastomer sheet.

### (Evaluation of pyrolysis temperature)

The 5% weight loss temperature (Td5) and 1% weight loss temperature (Td1) of each crosslinked elastomer sheet were evaluated by the TGA method. The results are shown in Table 11.

**[Table 11]**

| Sample | Td1 | Td5 |
|---|---|---|
| | °C | °C |
| (1) PB/PH25B | 204 | 352 |
| (2) PB/PH25B/P5Q (4 mass%) | 342 | |
| (3) PB/PH25B/P5Q (18 mass%) | 322 | |
| Reference: P5Q only | - | 263 |

### Example 28

Examination of PA11/P5Q
Examination of Polyamide 11 (purchased from Sigma-Ardrich as a reagent) (PA11) and P5Q

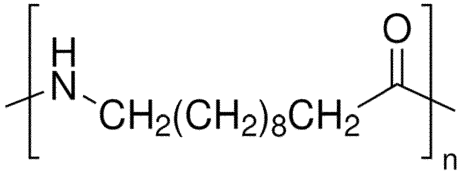

### (Examination of kneading)

Using a loop type twin-screw extruder (Xplore MC15HT: manufactured by Xplore Instruments), kneading of 10.30 g of PA11 and 0.21 g of P5Q were examined. The materials were dry blended in advance, then fed from a hopper, and kneaded under the conditions of 240°C for 3 min at 200 rpm. After kneading, the sample was collected as strands. The melting point of PA11 used was 189.7°C.

### (Evaluation of pyrolysis temperature)

The 5% weight loss temperature (Td5) of the strands was evaluated by the TGA method.

**[Table 12]**

| Sample | Td5 (°C) |
|---|---|
| PA11 only | 382 |
| PA11/P5Q | 379 |
| P5Q only | 263 |

### (FT-IR Measurement)

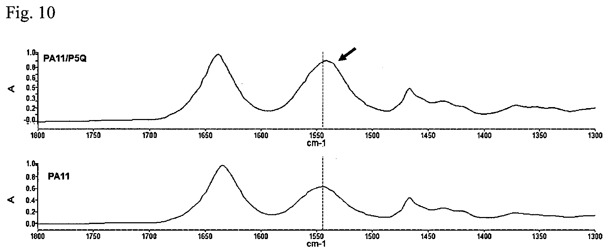

As shown in FIG. 10, in PA11/PSQ, 1540 cm⁻¹:amide C-N-H bending was shifted to the low wavenumber side as compared with that of PA11. Accordingly, the interaction of amide of PA11 with C=O of P5Q was demonstrated.

## Claims

1. A composite comprising: a polymer; and one or more cyclic compounds that comprise the polymer, wherein
the cyclic compound comprises a compound represented by the following formula (I): 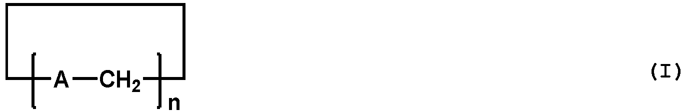 wherein
A independently represents a divalent C₄₋₅₀ organic group comprising one or more selected from -OR and -CO-,
R independently represents an organic group optionally comprising one or more fluorine atoms, or a hydrogen atom, and
n represents an integer of 4 to 20, and
wherein one of the polymer and the cyclic compound comprises one or more selected from -CO-, a nitrogen atom, and a halogen atom, and the other has a group containing a hydrogen atom capable of interacting with -CO-, the nitrogen atom, or the halogen atom.

2. The composite according to claim 1, wherein the group containing a hydrogen atom capable of interacting with -CO-, the nitrogen atom, or the halogen atom comprises one or more selected from a proton-donating group, an unsaturated group, and a group containing a hydrogen atom having a charge density of 0.25 or higher.

3. The composite according to claim 1 or 2, wherein the cyclic compound comprises a compound represented by any of the following formulae (1) to (3): 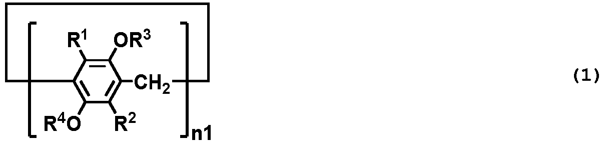 wherein
R¹ independently represents a hydrogen atom or an organic group,
R² independently represents a hydrogen atom or an organic group,
R³ independently represent a hydrogen atom or an organic group,
R⁴ independently represent a hydrogen atom or an organic group,
provided that at least one of R³ and R⁴ is a hydrogen atom, and
n1 is an integer of 4 to 20, 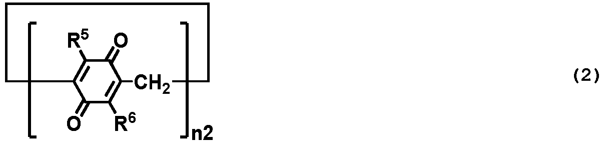 wherein
R⁵ independently represents a hydrogen atom or an organic group,
R⁶ independently represents a hydrogen atom or an organic group, and
n2 is an integer of 4 to 20, 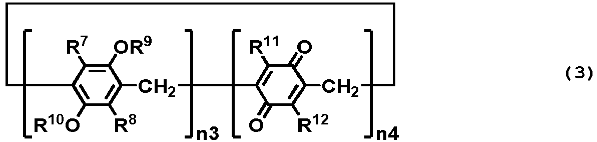 wherein
R⁷ independently represents a hydrogen atom or an organic group,
R⁸ independently represents a hydrogen atom or an organic group,
R⁹ independently represents a hydrogen atom or an organic group,
R¹⁰ independently represents a hydrogen atom or an organic group,
R¹¹ each independently represents a hydrogen atom or an organic group,
R¹² each independently represents a hydrogen atom or an organic group,
n3 is an integer of 1 to 19,
n4 is an integer of 1 to 19,
a sum of n3 and n4 is 4 to 20, and
an occurrence order of a unit enclosed in parentheses with n3 or n4 is arbitrary in the formula (3).

4. The composite according to claim 3, wherein one or more selected from R¹ to R⁴ in the formula (1) is a fluorine-containing organic group.

5. The composite according to claim 3 or 4, wherein one or more selected from R³ and R⁴ in the formula (1) is a hydrogen atom.

6. The composite according to any one of claims 1 to 5, wherein the cyclic compound is a compound represented by any of the following formulae (1-A), (2-A), and (3-A): 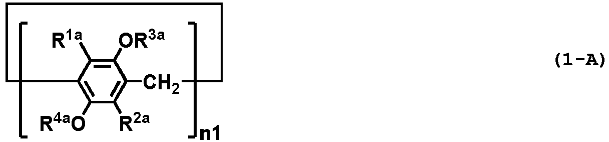 wherein
R^{1a} independently represents a C₁₋₃₀ alkyl group optionally having one or more substituents or a hydrogen atom,
R^{2a} independently represents a C₁₋₃₀ alkyl group optionally having one or more substituents or a hydrogen atom,
R^{3a} independently represents a C₁₋₃₀ alkyl group optionally having one or more substituents or a hydrogen atom,
R^{4a} each independently represents a C₁₋₃₀ alkyl group optionally having one or more substituents or a hydrogen atom,
provided that at least one of R^{3a} and R^{4a} represents a hydrogen atom, and
n1 is an integer of 4 to 20, 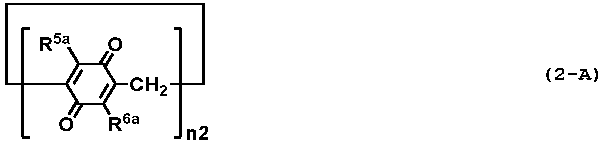 wherein
R^{5a} independently represents a C₁₋₃₀ alkyl group optionally having one or more substituents or a hydrogen atom,
R^{6a} independently represents a C₁₋₃₀ alkyl group optionally having one or more substituents or a hydrogen atom, and
n2 is an integer of 4 to 20, 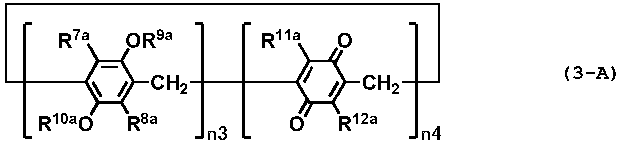 wherein
R^{7a} independently represents a C₁₋₃₀ alkyl group optionally having one or more substituents or a hydrogen atom,
R^{8a} independently represents a C₁₋₃₀ alkyl group optionally having one or more substituents or a hydrogen atom,
R^{9a} independently represents a C₁₋₃₀ alkyl group optionally having one or more substituents or a hydrogen atom,
R^{10a} independently represents a C₁₋₃₀ alkyl group optionally having one or more substituents or a hydrogen atom,
R^{11a} independently represents a C₁₋₃₀ alkyl group optionally having one or more substituents or a hydrogen atom,
R^{12a} independently represents a C₁₋₃₀ alkyl group optionally having one or more substituents or a hydrogen atom,
n3 is an integer of 1 to 19,
n4 is an integer of 1 to 19,
a sum of n3 and n4 is 4 to 20, and
an occurrence order of a unit enclosed in parentheses with n3 or n4 is arbitrary in the formula (3-A).

7. The composite according to any one of claims 2 to 6, wherein the proton-donating group comprises a hydrogen atom having a charge density of 0.22 or higher.

8. The composite according to any one of claims 2 to 7, wherein a charge density of a hydrogen atom bound to a carbon atom constituting the unsaturated group is 0.22 or higher.

9. The composite according to any one of claims 2 to 8, wherein the proton-donating group is a group containing a hydrogen atom bound to one atom selected from an oxygen atom, a nitrogen atom, and a sulfur atom.

10. The composite according to any one of claims 1 to 9, wherein the polymer is a linear polymer optionally having a substituent.

11. The composite according to any one of claims 1 to 10, wherein the polymer is a polymer comprising one or more selected from -CO-, a nitrogen atom, and a halogen atom, and the cyclic compound comprises a proton-donating group.

12. The composite according to any one of claims 1 to 11, wherein the polymer is a polymer comprising one or more selected from -CO-, a nitrogen atom, and a halogen atom, and the cyclic compound is a compound represented by any of the following formula (1-B) and the following formula (3-B): 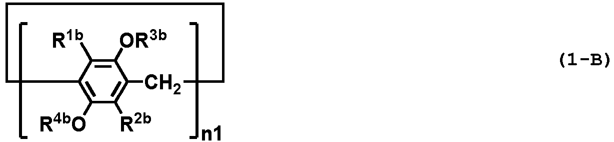 wherein
R^{1b} independently represents a C₁₋₃₀ alkyl group optionally having one or more substituents or a hydrogen atom,
R^{2b} independently represents a C₁₋₃₀ alkyl group optionally having one or more substituents or a hydrogen atom,
R^{3b} each independently represents a C₁₋₃₀ alkyl group optionally having one or more substituents or a hydrogen atom,
R^{4b} each independently represents a C₁₋₃₀ alkyl group optionally having one or more substituents or a hydrogen atom,
provided that at least one of R^{3b} and R^{4b} is a hydrogen atom, and
n1 is an integer of 4 to 20, 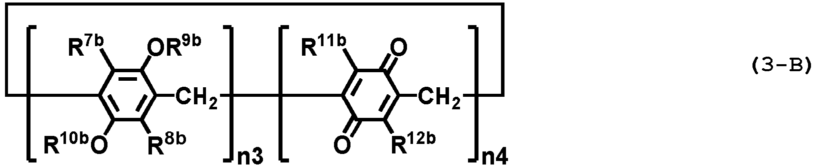 wherein
R^{7b} independently represents a hydrogen atom or an organic group,
R^{8b} independently represents a hydrogen atom or an organic group,
R^{9b} independently represents a hydrogen atom or an organic group,
R^{10b} independently represents a hydrogen atom or an organic group,
R^{11b} independently represents a hydrogen atom or an organic group,
R^{12b} independently represents a hydrogen atom or an organic group,
provided that at least one of R^{9b} and R^{10b} is a hydrogen atom,
n3 is an integer of 1 to 19,
n4 is an integer of 1 to 19,
a sum of n3 and n4 is 4 to 20, and
an occurrence order of a unit enclosed in parentheses with n3 or n4 is arbitrary in the formula (3-B).

13. The composite according to any one of claims 1 to 12, wherein the polymer comprises an ester group in a main chain backbone.

14. The composite according to any one of claims 3 to 13, wherein the polymer comprises a proton-donating group, and the cyclic compound comprises the compound represented by any of the formula (2) or (3).

15. The composite according to any one of claims 1 to 14, wherein the polymer comprises a polymer having an unsaturated bond.

16. The composite according to any one of claims 1 to 15, wherein the polymer comprises a diene-based polymer.

17. The composite according to any one of claims 1 to 16, wherein a proportion of the cyclic compound is 0.01 mass% or more and 99 mass% or less in a total of 100 parts by mass of the polymer and the cyclic compound.

18. The composite according to any one of claims 1 to 17, wherein when the composite is mixed with a good solvent of the polymer, w₁/w₀ is 4 mass% or more, where w₀ indicates a mass of the composite before mixing, and w₁ indicates a mass of the composite after mixing.

19. The composite according to any one of claims 1 to 18, wherein a pyrolysis temperature is 170°C or higher.

20. The composite according to any one of claims 1 to 19, wherein tₓ - t_{y} is 50°C or more, where tₓ indicates a pyrolysis temperature of the composite, and t_{y} indicates a lower one of a pyrolysis temperature of the polymer and a pyrolysis temperature of the cyclic compound.

21. A method for producing the composite according to any one of claims 1 to 20, the method comprising:
contacting the polymer and the cyclic compound represented by the formula (I) with each other in an absence of a solvent to obtain the composite, wherein
one of the polymer and the cyclic compound comprises one or more selected from -CO-, a nitrogen atom, and a halogen atom, and the other has a group containing a hydrogen atom capable of interacting with -CO-, the nitrogen atom, or the halogen atom.

22. The production method according to claim 21, wherein the contacting is performed at a temperature higher than at least one of a glass transition temperature and a melting point of the polymer.

23. A composition comprising the composite according to any one of claims 1 to 20.

24. The composition according to claim 23, which is in a powder form.

25. The composition according to claim 23, which is in a liquid form.
